# EUROPEAN PATENT APPLICATION

(11) **EP 4 723 686 A1**
(43) Date of publication of application: **08.04.2026**
(21) Application number: 23948136.9
(22) Date of filing: 10.08.2023
(51) Int. Cl.: H04W 4/08

(54) **AUTHENTICATION METHOD, AND DEVICE**

(71) Applicant: GUANGDONG OPPO MOBILE TELECOMMUNICATIONS CORP., LTD., Dongguan, Guangdong 523860 (CN)
(72) Inventor: XIONG, Lihui, Dongguan, Guangdong 523860 (CN); GAN, Lu, Dongguan, Guangdong 523860 (CN); LI, Meng, Dongguan, Guangdong 523860 (CN); SHI, Cong, Dongguan, Guangdong 523860 (CN)
(74) Representative: RGTH
(86) International application number: PCT/CN2023/112407
(87) International publication number: WO 2025/030566

(57) **Abstract**

The present application relates to an authentication method, and a device, a computer-readable storage medium, a computer program product and a computer program. The method comprises: a first device receiving authentication requests from a plurality of second devices; the first device sending a first group request message to an authentication function entity, wherein the first group request message carries authentication parameters related to the plurality of second devices, and the authentication parameters are obtained on the basis of the authentication requests from the plurality of second devices; and the first device receiving a first group response message from the authentication function entity, wherein the first group response message carries a first group authentication code used for authenticating the authentication function entity, and the first group authentication code is obtained by means of performing calculation on the basis of the authentication parameters.

## Description

### TECHNICAL FIELD

The present application relates to the field of communications, and in particular, to authentication methods, devices, a computer-readable storage medium, a computer program product, and a computer program.

### BACKGROUND

With the development of technology, zero-power devices also have the need to access communication systems or networks. In order to access a communication system or network, a zero-power device needs to perform an authentication interaction process with a network device in the communication system. However, a large number of zero-power devices may exist within a certain communication range. Consequently, the network device may need to perform authentication interactions with a large number of zero-power devices in a short time, which may cause increased signaling overhead for the network device in a short time, leading to network congestion and consequently reducing authentication efficiency.

### SUMMARY

Embodiments of the present application provide authentication methods, devices, a computer-readable storage medium, a computer program product, and a computer program.

The embodiments of the present application provide an authentication method performed by a first device, which includes:
receiving, by the first device, authentication requests from a plurality of second devices;
transmitting, by the first device, a first group request message to an authentication function entity; where the first group request message carries authentication parameters related to the plurality of second devices, and the authentication parameters are obtained based on the authentication requests from the plurality of second devices; and
receiving, by the first device, a first group response message from the authentication function entity; where the first group response message carries a first group authentication code used for authenticating the authentication function entity, and the first group authentication code is calculated based on the authentication parameters.

The embodiments of the present application provide an authentication method performed by an authentication function entity, which includes:
receiving, by the authentication function entity, a first group request message from a first device; where the first group request message carries authentication parameters related to a plurality of second devices; and
transmitting, by the authentication function entity, a first group response message to the first device; where the first group response message carries a first group authentication code used for authenticating the authentication function entity, and the first group authentication code is calculated based on the authentication parameters.

The embodiments of the present application provide an authentication method performed by a target second device, which includes:
transmitting, by a target second device, an authentication request to a first device; where the target second device is one of a plurality of second devices.

The embodiments of the present application provide an authentication method performed by a first device, which includes:
receiving, by the first device, authentication requests from a plurality of second devices;
transmitting, by the first device, a first group request message to an authentication function entity; where the first group request message carries authentication parameters related to the plurality of second devices, the authentication parameters are obtained based on the authentication requests from the plurality of second devices, and the authentication parameters are used, alongside a first random number, for the authentication function entity to calculate a second group authentication code; and
receiving, by the first device, a first group response message from the authentication function entity; where the first group response message carries the first random number.

The embodiments of the present application provide an authentication method performed by an authentication function entity, which includes:
receiving, by the authentication function entity, a first group request message from a first device; where the first group request message carries authentication parameters related to a plurality of second devices; and
calculating, by the authentication function entity, a second group authentication code based on the authentication parameters and a first random number; and
transmitting, by the authentication function entity, a first group response message to the first device; where the first group response message carries the first random number.

The embodiments of the present application provide a first device, which includes:
a first communication unit configured to:
receive authentication requests from a plurality of second devices;
transmit a first group request message to an authentication function entity; where the first group request message carries authentication parameters related to the plurality of second devices, and the authentication parameters are obtained based on the authentication requests from the plurality of second devices; and
receive a first group response message from the authentication function entity; where the first group response message carries a first group authentication code used for authenticating the authentication function entity, and the first group authentication code is calculated based on the authentication parameters.

The embodiments of the present application provide an authentication function entity, which includes:
a second communication unit configured to:
receive a first group request message from a first device; where the first group request message carries authentication parameters related to a plurality of second devices; and
transmit a first group response message to the first device; where the first group response message carries a first group authentication code used for authenticating the authentication function entity, and the first group authentication code is calculated based on the authentication parameters.

The embodiments of the present application provide a target second device, which includes:
a third communication unit, configured to transmit an authentication request to a first device; where the target second device is one of a plurality of second devices.

The embodiments of the present application provide a first device, which includes:
a first communication unit configured to:
receive authentication requests from a plurality of second devices;
transmit a first group request message to an authentication function entity; where the first group request message carries authentication parameters related to the plurality of second devices, the authentication parameters are obtained based on the authentication requests from the plurality of second devices, and the authentication parameters are used, alongside a first random number, for the authentication function entity to calculate a second group authentication code; and
receive a first group response message from the authentication function entity; where the first group response message carries the first random number.

The embodiments of the present application provide an authentication function entity, which includes:
a second communication unit, configured to: receive a first group request message from a first device; where the first group request message carries authentication parameters related to a plurality of second device; and transmit the first group response message to the first device, where the first group response message carries a first random number; and
a second processing unit, configured to calculate a second group authentication code based on the authentication parameters and the first random number.

The embodiments of the present application provide a first device, which includes a transceiver, a processor, and a memory. The memory is configured to store a computer program, and the processor is configured to call a computer program stored in the memory and run the computer program, to cause the first device to perform the above methods.

The embodiments of the present application provide an authentication function entity, which includes a transceiver, a processor and a memory. The memory is configured to store a computer program, and the processor is configured to call a computer program stored in the memory and run the computer program, to cause the authentication function entity to perform the above methods.

The embodiments of the present application provide a target second device, which includes a transceiver, a processor, and a memory. The memory is configured to store a computer program, and the processor is configured to call a computer program stored in the memory and run the computer program, to cause the target second device to perform the above methods.

The embodiments of the present application provide an access network device, which includes a transceiver, a processor, and a memory. The memory is configured to store a computer program, and the processor is configured to call a computer program stored in the memory and run the computer program, to cause the access network device to perform the above methods.

The embodiments of the present application provide a chip, which is configured to implement the above methods.

Specifically, the chip includes a processor, which is configured to call a computer program from a memory and run the computer program, to cause a device equipped with the chip to perform the above methods.

The embodiments of the present application provide a computer-readable storage medium configured to store a computer program which, when executed by a device, causes the device to perform the above methods.

The embodiments of the present application provide a computer program product, which includes computer program instructions that cause a computer to perform the above methods.

The embodiments of the present application provide a computer program which, when executed on a computer, causes the computer to perform the above methods.

By adopting the solution provided in the embodiments, the first device aggregates the authentication requests from the plurality of second devices into the first group request message, and then transmits the first group request message to the authentication function, to enable the authentication function entity to initiate authentication processing with the plurality of second devices. In this way, this approach may avoid the potential network congestion problem that could arise when the authentication function entity on the network side individually authenticates each second device in scenarios where a large number of second devices attempt to access the network in a short time, reduces the communication signaling overhead between the first device and the authentication function entity, and improves the efficiency of the authentication processing.

### BRIEF DESCRIPTION OF THE DRAWINGS

FIG. 1 is a schematic diagram showing an application scenario according to the embodiments of the present application.
FIG. 2 is a schematic flowchart of an authentication method according to an embodiment of the present application.
FIG. 3 is a schematic flowchart of an authentication method according to another embodiment of the present application.
FIG. 4 is a schematic flowchart of an authentication method according to still another embodiment of the present application.
FIG. 5 is a schematic flowchart of an authentication method according to still another embodiment of the present application.
FIG. 6 is a schematic flowchart of an authentication method according to still another embodiment of the present application.
FIG. 7 is a schematic diagram showing a framework of an authentication method according to an embodiment of the present application.
FIG. 8, FIG. 9a and FIG. 9b are various schematic flowcharts of an authentication method according to an embodiment of the present application.
FIG. 10 is a schematic diagram of various scenarios of a zero-power device according to an embodiment of the present application.
FIG. 11 is a schematic diagram showing a physical unclonable function (PUF) according to an embodiment of the present application.
FIG. 12 is a schematic diagram showing PUF key extraction according to an embodiment of the present application.
FIG. 13 is a schematic block diagram of a first device according to an embodiment of the present application.
FIG. 14 is a schematic block diagram of an authentication function entity according to an embodiment of the present application.
FIG. 15 is a schematic block diagram of a target second device according to an embodiment of the present application.
FIG. 16 is a schematic block diagram of a communication device according to an embodiment of the present application.
FIG. 17 is a schematic block diagram of a chip according to an embodiment of the present application.
FIG. 18 is a schematic block diagram of a communication system according to an embodiment of the present application.

### DETAILED DESCRIPTION

Technical solutions in the embodiments of the present application may be applied to various communication systems, such as long-term evolution (LTE), long-term evolution advanced (LTE-A), new radio (NR), NR evolution, wireless local area network (WLAN), wireless fidelity (WiFi), or other communication systems.

The embodiments of the present application describe various embodiments in conjunction with a network device and a terminal. The terminal may be mobile or fixed, and may also be referred to as a mobile station, a user unit, or the like. The terminal may be a station in WLAN, and may be a terminal such as a smart terminal, a wireless modem, a laptop, or a pad. In the embodiments of the present application, the terminal may be a virtual reality (VR) terminal/ augmented reality (AR) terminal, an industrial control terminal, an unmanned driving terminal, a telemedicine terminal, a smart grid terminal, a transportation safety terminal, a smart city terminal, a smart home wireless terminal, or the like. As an example but not a limitation, in the embodiments of the present application, the terminal may also be a wearable device.

In the embodiments of the present application, the network device may be a device used for communicating with the terminal. The network device may be an access point in WLAN, or may be an evolutional base station in LTE, a relay station, or an in-vehicle device, a wearable device, a network device (next generation node B, gNB) in an NR network, a network device in a future evolved PLMN network, a network device in a non-terrestrial network, or the like. As an example but not a limitation, in the embodiments of the present application, the network device may have mobile characteristics. For example, the network device may be a mobile device.

It should be understood that the terms "system" and "network" are often used interchangeably herein. The term "and/or" herein is only an association relationship to describe associated objects, indicating that there may be three kinds of relationships; for example, "A and/or B" may represent three cases where: A exists alone, both A and B exist, and B exist alone. In addition, a character "/" herein generally indicates that the associated objects before and after this character are in an "or" relationship. It should be understood that, "indicate" mentioned in the embodiments of the present application may mean a direct indication, an indirect indication, or may mean that there is an association relationship. For example, A indicating B may mean that A directly indicates B, and for example, B may be acquired by A; alternatively, A indicating B may mean that A indirectly indicates B, and for example, A indicates C, and B may be acquired by C; alternatively, A indicating B may mean that there is an association relationship between A and B. In the description in the embodiments of the present application, the term "correspond" may mean that there is a direct correspondence or an indirect correspondence between the two, or may mean that there is an association relationship between the two, or may mean a relationship of indicating and being indicated, or a relationship of configuring and being configured, or the like.

To facilitate understanding of the technical solutions of the embodiments of the present application, the relevant technologies of the embodiments of the present application are described below. The following relevant technologies, as optional solutions, may be arbitrarily combined with the technical solutions of the embodiments of the present application, and those combined solutions all belong to the protection scope of the embodiments of the present application.

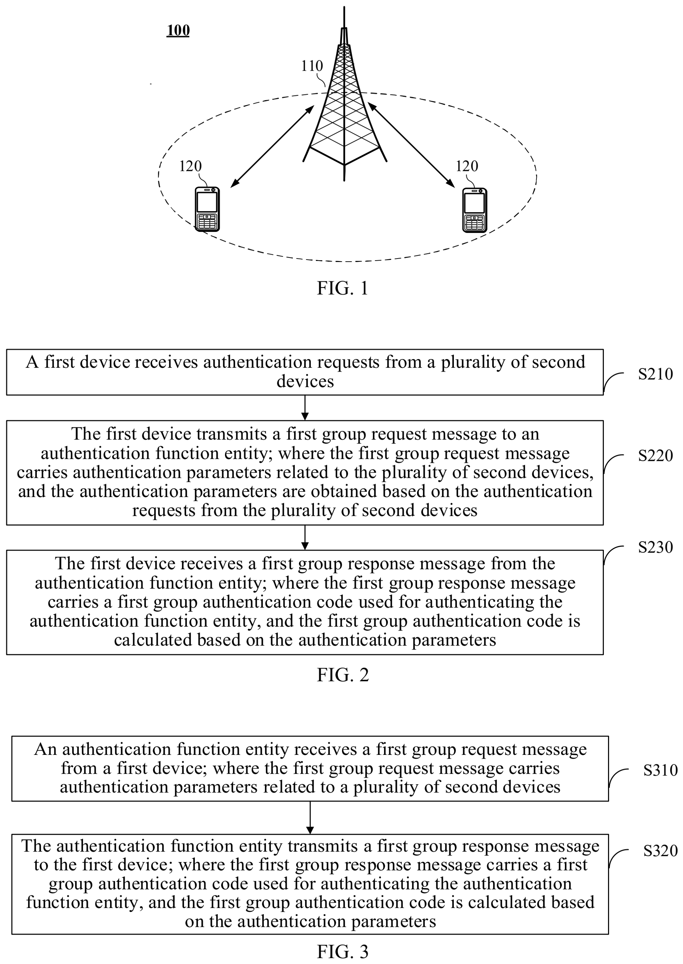

FIG. 1 exemplarily illustrates a communication system 100. The communication system includes a network device 110 and two terminals 120. In a possible implementation, the communication system 100 may include multiple network devices 110, each of which may have a coverage area in which other number of terminal devices 120 are included, which is not limited in the embodiments of the present application. In a possible implementation, the communication system 100 may further include other network entities, such as a mobility management entity, an access and mobility management function, which is not limited in the embodiments of the present application. Here, the network device may include an access network device and a core network device. That is, the communication system may further include multiple core networks used for communicating with the access network device. The access network device may be a base station in an LTE, LTE-A, or NR system. Taking the communication system illustrated in FIG. 1 as an example, the communication device may include a network device and a terminal that both with a communication function. The communication device may further include other devices in the communication system, such as a network controller, a mobility management entity, and other network entities, which is not limited in the embodiments of the present application.

FIG. 2 is a schematic flowchart of an authentication method performed by a first device according to an embodiment of the present application. The method includes at least part of the following content.

In S210, the first device receives authentication requests from a plurality of second devices.

In S220, the first device transmits a first group request message to an authentication function entity. The first group request message carries authentication parameters related to the plurality of second devices, and the authentication parameters are obtained based on the authentication requests from the plurality of second devices.

In S230, the first device receives a first group response message from the authentication function entity. The first group response message carries a first group authentication code used for authenticating the authentication function entity, and the first group authentication code is calculated based on the authentication parameters.

FIG. 3 is a schematic flowchart of an authentication method performed by an authentication function entity according to another embodiment of the present application. The method includes at least part of the following content.

In S310, the authentication function entity receives a first group request message from a first device. The first group request message carries authentication parameters related to a plurality of second devices.

In S320, the authentication function entity transmits a first group response message to the first device. The first group response message carries a first group authentication code used for authenticating the authentication function entity, and the first group authentication code is calculated based on the authentication parameters.

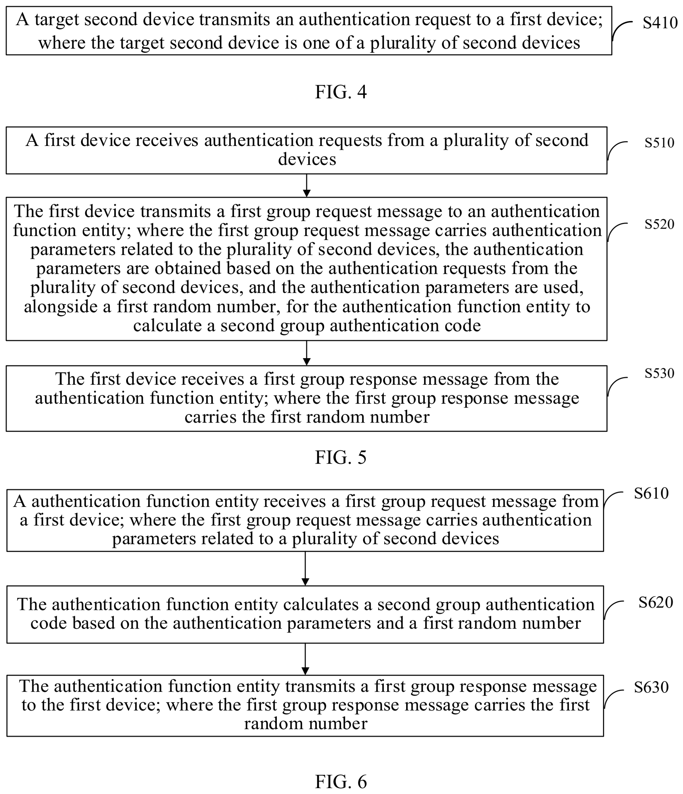

FIG. 4 is a schematic flowchart of an authentication method performed by a target second device according to another embodiment of the present application. The method includes at least part of the following content.

In S410, the target second device transmits an authentication request to a first device, where the target second de vice is one of a plurality of second devices.

The first device is a terminal or an access network device. Here, the access network device may refer to an access network device, for example, the access network device may be any one of: a base station, a gNB, an evolved node B (eNB), and an integrated access backhaul (IAB) node.

Each of the plurality of second devices may be a zero-power device. Alternatively, each of the plurality of second devices may be an Internet of Things device. The above target second device may be any one of the plurality of second devices, and the target second device may likewise be a zero-power device, or the target second device may likewise be an Internet of Things device.

In some embodiments, any second device may be any one of: an ambient power-enabled IoT (AIoT) device, an active zero-power device, a passive zero-power device, and a semi-passive zero-power device. In some embodiments, any second device may also be a terminal with lower computational capability. In some possible embodiments, any second device may be referred to as a tag. Not all possible names or device types of the second device are exhaustively listed here.

In some embodiments, the above first device is a terminal, the first device and any second device in these embodiments may communicate with each other through sidelink messages. In some embodiments, the first device may be an access network device, the first device and any second device may communicate with each other via access stratum (AS) messages.

The above authentication function entity may be deployed in at least one of: an application function (AF), an access and mobility management function (AMF), a session management function (SMF), an authentication server function (AUSF) , a unified data management function (UDM), a unified data repository (UDR), a home subscriber system (HSS), an authentication credential repository and processing function (ARPF), a bootstrapping service function (BSF), a security anchor function (SEAF), or a core network-specific network element.

The authentication function entity may refer to a network element with an authentication function. The authentication function may include at least an AIoT group authentication function and/or a group authorization function. In some possible examples, A-NF may be used to denote an AIoT group authentication function (i.e., network function, NF) and/or a group authorization function. In some other possible examples, the authentication function may further include at least one of: a zero-power group authentication function and/or group authorization function, or an Internet of Things device group authentication function and/or group authorization function.

Exemplarily, the authentication function entity may be formed by adding an authentication function on the basis of the AF of an application server.

Exemplarily, the authentication function entity may be a newly added core network-specific network element, and the core network-specific network element has or is set or configured with an authentication function. In this example, the core network-specific network element may be referred to as an AIoT authentication functional entity, a zero-power function-specific authentication functional entity, a zero-power-specific network element, a zero-power device-specific network element, or the like. That is, the core network-specific network element may refer to a network element that has at least the zero-power-related functions (e.g., AIoT authentication functions), or a core network element that is capable of at least serving AIoT (or serving a zero-power device). It should be understood that the core network-specific network element may be deployed separately, or may be an existing core network element to which zero-power authentication related functions (e.g., AIoT or Tag authentication functions) are added. Not all possible scenarios are exhaustively listed in the embodiments.

Exemplarily, the authentication function entity may be an existing core network element, and the core network element has or is augmented or configured with an authentication function. For example, a core network element may be augmented with the authentication function on the basis of the following existing or configured basis functions: the AMF, the SMF, the AUSF, the UDM, the UDR, the HSS, the ARPF, the BSF, or the SEAF.

In some possible implementations, the first device aggregates the authentication requests from the plurality of second devices and reports the first group request message to the authentication function entity, and subsequently the first device receives the first group response message carrying the first group authentication code. The first group authentication code includes a respective first authentication code of each second device, which is transmitted by the first device to the second device for the device to authenticate the authentication function entity.

An authentication request from each of the plurality of second devices further carries a respective identifier of each second device, and the authentication parameters include the respective identifier of each second device. Specifically, the authentication parameters are authentication parameters related to the plurality of second devices. Hereafter, for brevity, the authentication parameters related to the plurality of second devices will be referred to as authentication parameters without repeated explanation.

Furthermore, the authentication request from each second device carries a second random number corresponding to the respective second device, and the authentication parameters include second random numbers that each correspond to a respective second device.

In an example where any second device is referred to as the target second device, the authentication request from the target second device carries a second random number corresponding to the target second device. The second random number corresponding to the target second device may be generated or selected by the target second device. The method used by the target second device to generate or select the second random number is not limited in the embodiments. The authentication request from the target second device may further carry an identifier of the target second device.

Optionally, each device (e.g., each zero-power device) in the network or system may not be assigned to a device group, or may not be configured to belong to a device group, or may be specified to not use a group identifier of a device group for authentication processing. In this case, the authentication request from the target second device may carry the second random number corresponding to the target second device and the identifier of the target second device.

Optionally, each device (e.g., each zero-power device) in the network or system may be assigned to a device group, or configured to belong to a device group, or specified to use a group identifier of a device group for authentication processing. In this case, the authentication request from the target second device may carry the second random number corresponding to the target second device, the identifier of the target second device, and a group identifier of the device group. Here, the group identifier of the device group may be denoted as group ID (GID). The group identifier of the device group may be preconfigured in the target second device, and the configuration method is not limited in the embodiments.

It should be noted that the above embodiments only use any one of the plurality of second devices as the target second device to describe the authentication request from the target second device. The authentication request transmitted by each second device has the same content and type as the authentication request transmitted by the target second device, which will not be repeated.

In one embodiment, the authentication request from each second device does not carry a group identifier of a device group. In this embodiment, receiving, by the first device, an authentication request from each of the plurality of second devices may include: receiving, by the first device, the authentication request from each of the plurality of second devices within a first duration. That is, when the current time is the aggregation start moment, the first device may start a timer and begin to receive an authentication request transmitted by any device. When a timing duration of the timer reaches a first duration, the devices corresponding to an authentication request received within the first duration are all considered as second devices.

The aggregation start moment may be determined based on actual situations. For example, the aggregation start moment may be the time when an authentication request from any device is first received. As another example, the aggregation start moment may be indicated by the authentication function entity. Not all possibilities are exhaustively list in the embodiment. The first duration may be preconfigured. For example, the first duration may be 1 time unit, or 10 time units, or longer or shorter. The time unit may be a minute, a second, a slot, a symbol, or the like. The first duration is not limited and exhaustively listed in the embodiments.

In one embodiment, the authentication request from each second device carries a group identifier of a device group. In this embodiment, receiving, by the first device, an authentication request from each of the plurality of second devices may include: receiving, by the first device, the authentication request from each of the plurality of devices within a first duration; aggregating, by the first device, the plurality of devices based on the group identifier of the device group carried in the authentication request from each device to determine respective devices belonging to each device group among one or more device groups; determining the k-th device group in the one or more device groups as the device group to be authenticated, and determining the devices in the k-th device group as the plurality of second devices, k being a positive integer. The description of the first duration in this embodiment is the same as that in the previous embodiment, and thus will not be repeated. That is, regardless of the quantity of devices from which the first device successfully receives reported authentication requests, the first device determines multiple devices in the same device group as the plurality of second devices for the subsequent authentication processing.

The aggregating, by the first device, the plurality of devices based on the group identifier of the device group carried in the authentication request from each device, to determine respective devices belonging to each device group in one or more device groups may specifically include: extracting, by the first device, an identifier of the j-th device and a group identifier of the k-th device group from the authentication request from the j-th device; determining group information based on the group identifier of the k-th device group; determining whether the identifier of the j-th device is included in a device group list in the group information; if it is not included in the device group list in the group information, determining to exclude the j-th device from the subsequent process; if it is included in the device group list in the group information, determining that the j-th device is a device in the k-th device group. By analogy, after performing the same processing for each of the plurality of devices, respective devices belonging to each device group among one or more device groups are determined. Here, j and k are both positive integers, the j-th device is any one of the plurality of devices from which the first device receives the authentication request, and the k-th device group is any one of the one or more device groups. The group information corresponding to the k-th device group may be preset, and the group information may at least include the device group list, and the device group list may include identifiers of one or more candidate devices in the k-th device group. The setting method and generation method of the group information is not limited in the embodiments.

It should be understood that since the same processing as that for the k-th device group can be performed on each device group, the processing for all device groups will not be repeated here. It should also be noted that the following descriptions, which involves explanation using any device group as an example, do not imply that the solutions provided in the present application are only applicable to the processing for one device group, but merely for the purpose of conciseness, so as to avoid repeating the identical processing for all device groups.

In some possible embodiments, the authentication parameters include a second random number corresponding to a respective second device; and the first group authentication code includes a respective first authentication code of each second device that is used for authenticating the authentication function entity.

After the first device receives authentication requests from the plurality of second devices and before the first device transmits the first group request message to the authentication function entity, the first device may aggregate authentication parameters based on the authentication request from each of the plurality of second devices.

In an example, the authentication request from each second device may carry a respective identifier and random number of each second device. Accordingly, the authentication parameters include: the respective identifier of each second device and the second random number corresponding to a respective second device. In an example, the authentication request from each second device may carry the identifier of the second device, the random number of the second device, and a group identifier. Accordingly, the authentication parameters include: a group identifier of the same device group to which the plurality of second devices belong, the respective identifier of each second device, and a second random number corresponding to a respective second device.

In one embodiment, the authentication function entity may calculate the first group authentication code based on the authentication parameters, which specifically includes: calculating, by the authentication function entity by using a first calculation method, a respective first authentication code of each second device based on the first random number, the second random number corresponding to the second device, and a shared key of the second device, where the respective shared key of each second device is shared between the second device and the authentication function entity; and obtaining, by the authentication function entity, the first group authentication code based on the respective first authentication code of each second device.

The first random number may be determined by the authentication function entity. Optionally, the first random number may be generated by the authentication function entity by using a random number generator. The specific processing of the random number generator is not limited in the embodiments. Optionally, the first random number may be randomly selected by the authentication function entity from a plurality of optional random numbers. The method for obtaining or generating the plurality of optional random numbers is not limited in the embodiments.

The first calculation method may be preset. For example, the first calculation method may include at least one of the following: a key derivation function (KDF), a first authentication function (e.g., the f1 function defined by 3GPP), a second authentication function (e.g., the f2 function defined by 3GPP), a third key generation function (e.g., the f3 function defined by 3GPP), a fourth key generation function (e.g., the f4 function defined by 3GPP), a fifth key generation function (e.g., the f5 function defined by 3GPP), an ASCON algorithm, or a hash algorithm. The hash algorithm may include hash based message authentication code-secure hash algorithm-256 (HMAC-SHA-256) or other hash algorithms, which are not exhaustively listed in the embodiments. The ASCON algorithm may include an ASCON-authenticated encryption with associated data (AEAD) algorithm.

A shared key of any second device may be shared between the second device and the authentication function entity. For example, taking the target second device as an example, the shared key of the target second device may be any one of: a pre-shared key (PSK) of the target second device, a pre-distributed key of the target second device, a private network key of the target second device, and a root key of the target second device. In a preferred example, the shared key of the target second device may be the root key of the target second device.

The first authentication codes may be message authentication codes (MACs). Taking the target second device as an example, the authentication function entity calculates the first authentication code corresponding to the target second device by using the first calculation method based on the first random number, the second random number corresponding to the target second device, and the shared key of the target second device. Exemplarily, the calculation may be expressed as the following calculation formula: MACi=f_{Ki}(RAND, Nonce-i), where i is a positive integer, MACi is the first authentication code corresponding to the target second device, Ki is the root key of the target second device, RAND is the first random number, Nonce-i is the second random number corresponding to the target second device, and f may be any function listed above for the first calculation method, such as the f1 function, which is not limited here.

Optionally, the first authentication code may include an authentication token AUTN composed of a MAC and a first correlation value. Taking the target second device as an example, the calculation method for the MAC of the target second device is the same as that described in the foregoing embodiments, which will not be repeated here. The first correlation value of the target second device may be CONC. For example, the CONC may be obtained by an exclusive OR calculation based on an anonymous key (AK) of the target second device and a sequence number (SQN) of the target second device. Other possible calculation methods for the first correlation value are not limited in the embodiments.

The foregoing only describes the method for generating the first authentication code by taking the target second device as an example. The method for generating the respective first authentication code of each second device by the authentication function entity is the same as the method for generating the first authentication code corresponding to the target second device, and thus will not be repeated.

Obtaining, by the authentication function entity, the first group authentication code based on the respective first authentication code of each second device includes: directly adding, by the authentication function entity, the respective first authentication code of each second device into the first group authentication code. Exemplarily, the authentication function entity may arrange the respective first authentication code of each second device according to a first preset order, and add the respective first authentication code of each second device into the first group authentication code. The first preset order may be preconfigured for both the first device and the authentication function entity, so that the first device can identify the first authentication codes corresponding to second devices at different positions in the first group authentication code based on the first preset order. Exemplarily, the authentication function entity may add both the respective first authentication code of each second device and the identifier of the associated second device of the first authentication code into the first group authentication code, which enables the first device to identify the first authentication codes corresponding to different second devices according to their respective identifiers.

In one embodiment, the first group response message further carries a first random number. After the first device receives the first group response message from the authentication function entity, the following processing may be included: forwarding, by the first device, the first random number to the plurality of second devices.

After the first device receives the first group response message from the authentication function entity, the following processing may be included: forwarding, by the first device, a respective first authentication code to each second device.

Specifically, the first random number and the respective first authentication code of each second device may be carried in a respective first message transmitted for each second device by the first device. The first message may be a unicast message. Exemplarily, taking the target second device as an example, the corresponding processing performed by the first device may be that: the first device extracts the first authentication code corresponding to the target second device from the first group authentication code, and the transmits a first message to the target second device among the plurality of second devices. The first message carries the first random number and the first authentication code corresponding to the target second device.

The method used by the first device to extract the first authentication code corresponding to the target second device from the first group authentication code may be as follows: the first device determines the position of the first authentication code corresponding to the target second device in the first group authentication code according to the first preset order, and extracts it from that position. Alternatively, the first device may extract the first authentication code corresponding to the target second device that is associated with the identifier of the target second device from the first group authentication code according to that identifier. The above are merely illustrative examples. As long as the method used by the first device to extract the first authentication code corresponding to the target second device matches the method used by the authentication function entity to combine codes to form the first group authentication code, the method falls within the protection scope of the embodiments. Not all possible methods are exhaustively listed here.

Still taking the target second device as an example, after the target second device transmits the authentication request to the first device, the method further includes: receiving, by the target second device, the first random number from the first device.

Furthermore, after the target second device transmits the authentication request to the first device, the following processing may be included: receiving, by the target second device from the first device, a first authentication code used for authenticating the authentication function entity; calculating, by the target second device by using a first calculation method, a first verification code corresponding to the target second device based on the first random number, the second random number corresponding to the target second device, and a shared key of the target second device that is shared between the target second device and the authentication function entity; and authenticating, by the target second device, the authentication function entity based on the first authentication code corresponding to the target second device and the first verification code corresponding to the target second device. Here, the description of the first calculation method and the shared key of the target second device is similar to that in the foregoing embodiments and will not be repeated here.

The first verification code may be represented as Expected Message Authentication Code (XMAC), or may be represented as MAC'. The calculation of the first verification code corresponding to the target second device performed by the target second device may be expressed as the following calculation formula: XMACi=f_{Ki}(RAND, Nonce-i), where XMACi is the first verification code corresponding to the target second device, Ki is the shared key of the target second device, such as the root key, RAND is the first random number, Nonce-i is the second random number corresponding to the target second device, and f may be the f1 function and is not limited here.

The authenticating, by the target second device, the authentication function entity based on the first authentication code corresponding to the target second device and the first verification code corresponding to the target second device includes: in a case where the first authentication code corresponding to the target second device is the same as the first verification code corresponding to the target second device, determining, by the target second device, that the authentication on the authentication function entity is successful; and/or in a case where the first authentication code corresponding to the target second device is different from the first verification code corresponding to the target second device, determining, by the target second device, that the authentication on the authentication function entity is failed. Here, successful authentication on the authentication function entity may refer to the successful verification (or authentication success) of the identity and/or legitimacy of the authentication function entity (or the authentication is successful), failed authentication on the authentication function entity may refer to the unsuccessful verification (or authentication failure) of the identity and/or legitimacy of the authentication function entity.

Optionally, the first verification code may include XMAC (or MAC') and a first correlation verification value. The calculation method for the first correlation verification value is the same as that for the first correlation value in the foregoing embodiments and will not be repeated. The method used by the target second device to calculate the XMAC is also identical to that described in the foregoing embodiments and will not be repeated. The authenticating, by the target second device, the authentication function entity based on the first authentication code corresponding to the target second device and the first verification code corresponding to the target second device may include at least one of: in a case where the first authentication code corresponding to the target second device is the same as the first verification code corresponding to the target second device, and the first correlation verification value is the same as the first correlation value, the target second device successfully authenticates the authentication function entity; or in a case where the first authentication code corresponding to the target second device is different from the first verification code corresponding to the target second device, and/or the first correlation verification value is different from the first correlation value, the target second device fails to authenticate the authentication function entity.

In some embodiments, if the target second device successfully authenticates the authentication function entity, the processing of the target second device may further include: calculating, by the target second device by using a second calculation method, a second verification code corresponding to the target second device that is used for authenticating the target second device based on the first random number, the second random number corresponding to the target second device, and a shared key of the target second device; and transmitting, by the target second device, the second verification code corresponding to the target second device to the first device.

Here, the second calculation method may be preset. For example, the second calculation method may include at least one of: a KDF, a key derivation function, a first authentication function, a second authentication function, a third key generation function, a fourth key generation function, a fifth key generation function, an ASCON algorithm, or a hash algorithm. It should be noted that the second calculation method should be different from the first calculation method. For example, if the first calculation method employs the first authentication function, then the second calculation method needs to employ another algorithm or function different from the first authentication function. For example, the second calculation method may employ the KDF, the second authentication function, or the like. Any implementation utilizing a first calculation method and a second calculation method with distinct functions or algorithms falls within the protection scope of the embodiments.

The second verification code may be an authentication response. Exemplarily, the second verification code may be denoted as Response (RES). The calculation of the second verification code corresponding to the target second device performed by the target second device may be expressed as the following calculation formula: RESi=f_{Ki}(RAND, Nonce-i), where RESi is the second verification code corresponding to the target second device, and f may be any function listed above for the second calculation method, such as the f2 function, which is not limited here. Any implementation utilizing distinct functions for the calculation of RES and XMAC (or MAC') falls within the protection scope of the embodiments.

Furthermore, the processing of the target second device may further include: transmitting, by the target second device, the identifier of the target second device to the first device. Exemplarily, the second verification code corresponding to the target second device may be carried in the second message. In addition to the second verification code corresponding to the target second device, the second message may further carry the identifier of the target second device.

Since each second device performs the same processing as the target second device, so detailed descriptions will not be repeated here.

After the first device transmits the first random number and the respective first authentication code to each of the plurality of second devices, the method may further include: receiving, by the first device from each second device, a respective second verification code used for authenticating each second device.

In some embodiments, after the first device receives a respective second verification code of each second device, the processing of the first device may further include: transmitting, by the first device, a second group request message to the authentication function entity; where the second group request message carries the respective second verification code of each second device.

The processing of the authentication function entity may include: receiving, by the authentication function entity, a second group request message from the first device; where the second group request message carries the respective second verification code of each second device used for its authentication; authenticating, by the authentication function entity, the plurality of second devices based on the respective second verification code and second authentication code of each second device.

The processing of the authentication function entity generating a respective second authentication code of each second device may include: calculating, by the authentication function entity by using a second calculation method, the respective second authentication code of each second device based on the first random number, the second random number corresponding to the second device, and the shared key of the second device. The second authentication code may be an expected authentication response. For example, the second authentication code may be represented as Expected Response (XRES). Here, the descriptions of the second calculation method, the first random number, the second random number, and the shared key of each second device are the same as those in the foregoing embodiments and will not be repeated.

The timing for the authentication function entity to generate the respective second authentication code of each second device may be at any moment after the authentication function entity receives the first group request message from the first device; alternatively, it may be at any moment after the authentication function entity receives the first group request message from the first device and before the authentication function entity transmits the first group response message to the first device; alternatively, it may be before the authentication function entity authenticates the plurality of second devices. It should be understood that the above are merely illustrative examples. Not all possible timings for the authentication function entity to generate the respective second authentication code of each second device are exhaustively listed or limited in the embodiments.

Still taking the target second device as an example, the processing of the authentication function entity calculating the second authentication code corresponding to the target second device includes: calculating, by the authentication function entity by using the second calculation method, the second authentication code corresponding to the target second device based on the first random number, the second random number corresponding to the target second device, and the shared key of the target second device. Specifically, the method used for the authentication function entity to calculate the second authentication code corresponding to the target second device is identical to that used by the target second device to calculate the second verification code in the foregoing embodiments. For example, the calculation of the second authentication code corresponding to the target second device performed by the authentication function entity may be expressed as the following calculation formula: XRESi=f_{Ki}(RAND, Nonce-i), where XRESi is the second authentication code corresponding to the target second device, and f may be any function listed above for the second calculation method, such as the f2 function, which is not limited here. Any implementation that employs the same function or algorithm for both the calculation of XRES and RES and distinct functions or algorithms for the calculation of XRES and MAC shall fall within the protection scope of the embodiments. It should be understood that the method used by the authentication function entity to calculate the respective second authentication code of each of the plurality of second devices is the same as the method used by the authentication function entity to calculate the second authentication code corresponding to the target second device, and thus will not be repeated here.

The authenticating, by the authentication function entity, the plurality of second devices based on the respective second verification code and second authentication code of each second device may include at least one of: in a case where the second verification code corresponding to the target second device and the second authentication code corresponding to the target second device are the same, determining, by the authentication function entity, that the authentication on the target second device is successful; or in a case where the second verification code corresponding to the target second device and the second authentication code corresponding to the target second device are different, determining, by the authentication function entity, that the authentication on the target second device is failed. The authentication function entity authenticates each of the plurality of second devices by using the same method as described above for the target second device, and ultimately obtains the authentication result on each second device.

The processing of the authentication function entity generating a second group response message may include at least one of: if the authentication on each second device is successful, transmitting, by the authentication function entity, the second group response message to the first device, which is used to indicate successful authentication on the plurality of second devices; or if the authentication on at least one second device is failed, transmitting, by the authentication function entity, the second group response message to the first device, which is used to indicate failed authentication on the plurality of second devices.

The processing of the authentication function entity may further include: transmitting, by the authentication function entity, the second group response message to the first device which is used to indicate an authentication result on the plurality of second devices. Correspondingly, the processing of the first device may further include: receiving, by the first device, the second group response message from the authentication function entity.

In some embodiments, the first group response message further carries the respective second authentication code of each second device. The authentication function entity may transmit a first group response message to the first device, which carries the respective second authentication code of each second device, enabling the first device to authenticate the plurality of second devices. The method used by the authentication function entity to generate the respective second authentication code of each second device is the same as that described in the foregoing embodiments and will not be repeated here.

Exemplarily, the respective second authentication code of each second device included in the first group response message may be arranged in a second preset order, and the second preset order may be used for determining the respective position of the second authentication code of each second device. The second preset order may be preconfigured for both the authentication function entity and the first device, so that the first device can identify the respective first authentication codes of different second devices based on the preset order. Exemplarily, the first group response message may include both the respective second authentication code of each second device and the identifier of the associated second device, which enables the first device to identify the second authentication codes corresponding to different second devices according to their respective identifiers.

After the first device receives the respective second verification code of each second device, the processing of the first device may further include: authenticating, by the first device, the plurality of second devices based on the respective second verification code and second authentication code of each second device; and transmitting, by the first device, a second group request message to the authentication function entity. The second group request message is used to indicate an authentication result on the plurality of second devices.

Taking the target second device as an example, the authenticating, by the first device, the plurality of second devices based on the respective second verification code and second authentication code of each second device may include at least one of: in a case where the second verification code corresponding to the target second device is the same as the second authentication code corresponding to the target second device, determining, by the first device, that the authentication on the target second device is successful; or in a case where the second verification code corresponding to the target second device is different from the second authentication code corresponding to the target second device, determining, by the first device, that the authentication on the target second device is failed.

The transmitting, by the first device, the second group request message to the authentication function entity may include at least one of: if the authentication on the plurality of second devices is successful, transmitting, by the first device, the second group request message to the authentication function entity, which is used to indicate successful authentication on the plurality of second devices; or if the authentication on at least one second device is failed, transmitting, by the first device, the second group request message to the authentication function entity, which is used to indicate failed authentication on the plurality of second devices. Accordingly, the processing of the authentication function entity may include: receiving, by the authentication function entity, the second group request message from the first device, which is used to indicate an authentication result on the plurality of second devices.

In some embodiments, after the target second device successfully authenticates the authentication function entity, the method may further include: calculating, by the target second device, a third key based on the identifier of the target second device, an identifier of the authentication function entity, an identifier of the first device, the first random number, and the shared key of the target second device.

The identifier of the first device may be an identity (ID) of the first device. The ID may include, but is not limited to, at least one of: a number, a serial number, a name, a subscription permanent identifier (SUPI), a subscription concealed identifier (SUCI), a permanent equipment identifier (PEI), a 5G globally unique temporary identifier (5G-GUTI), an internal-group identifier (IGI), or a generic public subscription identifier (GPSI). The identifier of the target second device is similar to the identifier of the first device and will not be repeated here.

The identifier of the authentication function entity may be an ID of the authentication function entity. The ID of the authentication function entity may include at least one of: a number of the authentication function entity, a network address (or a network identifier) of the authentication function entity, a serial number of the authentication function entity, or a name of the authentication function entity. The network address of the authentication function entity may include at least one of: an internet protocol (IP) address of the authentication function entity, a media access control (MAC) address of the authentication function entity, or the like.

The shared key of the target second device is the same as that described in the foregoing embodiments and will not be repeated here.

The target second device may calculate the third key by using a seventh calculation method, and the seventh calculation method may include at least one of: a KDF, a third key generation function, a fourth key generation function, a fifth key generation function, an advanced encryption standard (AES), or SNOW third generation mobile communication (SNOW 3G), ZUChongzhi (ZUC). Possible algorithms or functions of the seventh calculation method will not be exhaustively listed here.

Exemplarily, in an example where a terminal is taken as the first device, the calculation of the third key performed by the target second device may be expressed as the following formula: Ks-i=f_{Ki}(Tag ID-i, A-NF ID, UE ID, RAND), where Ks-i is the third key of the target second device, f_{Ki} is the shared key of the target second device (e.g., it may be the root key of the target second device), Tag ID-i is the identifier of the target second device, A-NF ID is the identifier of the authentication function entity, UE ID is the identifier of the terminal, RAND is the first random number, and f may be any one of the seventh calculation methods listed above, such as the KDF. Exemplarily, in an example where the access network device gNB is taken as the first device, the calculation of the third key performed by the target second device may be expressed as the following formula: Ks-i=f_{Ki}(Tag ID-i, A-NF ID, gNB ID, RAND), where gNB ID is the identifier of the gNB. The meanings of other symbols in the formula are the same as those in the preceding example and will not be repeated here.

The third key is used for communication between the target second device and the authentication function entity. For example, the third key is used by the target second device to decrypt encrypted data transmitted by the authentication function entity; the third key is used by the target second device to encrypt business data to be transmitted to the authentication function entity; the third key is used by the target second device to perform integrity verification on the data transmitted by the authentication function entity; and the third key is used by the target second device to perform integrity protection on the business data to be transmitted to the authentication function entity. In some examples, the third key may also be referred to as a first shared key between the authentication function entity and the target second device, or a service shared key between the authentication function entity and the target second device, or a communication key between the authentication function entity and the target second device, or the like. Not all possible names of the third key are exhaustively listed here.

After the target second device calculates the third key, the following processing may be included: encrypting, by the target second device, plaintext information by using the third key, to obtain encrypted information. The third key is used for communication between the target second device and the authentication function entity. The plaintext information may include service data to be reported by the target second device.

The confidentiality algorithm used by the target second device to encrypt the plaintext data may be determined by the target second device based on its own security capability. The security capabilities of the target second device may include at least one of: a type of the target second device, a model of the target second device, a highest computational capability supported by the target second device, one or more security algorithms supported by the target second device, or the security algorithm used by the target second device. Here, the security algorithm includes an integrity protection algorithm and/or a confidentiality algorithm. The specific method used by the target second device to determine the confidentiality algorithm based on the security capability is not limited in this embodiment.

In a preferred example, the security capability of the target second device can also be carried in the authentication request transmitted from the target second device to the first device. Since all the second devices perform a processing identical to that of the target second device, on the first device side, the first device can obtain the security capability of each second device. The first device can also carry the security capability of each second device in the first group request message to transmit it to the authentication function entity, so that the authentication function entity can also obtain the security capability of each second device, and then determines the confidentiality algorithm corresponding to each second device.

In some embodiments, only the authentication processing on the authentication function entity by each second device is executed, while the authentication processing on each second device by the authentication function entity is skipped. After successfully authenticating the authentication function entity, the second device reports the encrypted information.

Taking the target second device among the plurality of second devices as an example, the method further includes: encrypting, by the target second device, plaintext information by using the third key, to obtain encrypted information; where the third key is used for communication between the target second device and the authentication function entity; and transmitting, by the target second device, the encrypted information to the first device. That is, after the target second device successfully authenticates the authentication function entity and obtains the encrypted information by encrypting the service data (i.e., the plaintext information), the target second device transmits the encrypted information to the first device. This is because the target second device generates and reports its encrypted information only after successfully authenticating the authentication function entity.

Exemplarily, the encrypted information may be carried in the aforementioned second message, and the above second message, which carries the encrypted information of the target second device, may further implicitly indicate that the authentication on the authentication function entity performed by the target second device is passed (or that the authentication on the authentication function entity performed by the target second device is successful).

Optionally, the target second device may simultaneously transmit the encrypted information and identifier of the target second device to the first device. That is, the second message from the target second device may further carry the identifier of the target second device, enabling the first device to distinguish the encrypted information of different second devices based on their respective identifiers. Optionally, the way for the target second device to transmit the encrypted information may be carrying the encrypted information of the target second device in an encryption container (enc_container) of the second message. Since each second device perform the same processing as the target second device, the second message from each second device carries its own encrypted information, which will not be repeated here.

Accordingly, the processing of the first device may further include: receiving, by the first device, the encrypted information from each second device. That is, the first device may receive the second message from the second device.

Furthermore, after the first device receives the encrypted information from the second device, the processing of the first device may further include: transmitting, by the first device, the second group request message to the authentication function entity. The second group request message carries the encrypted information of each second device. Optionally, the second group request message may carry the encrypted information and identifier of each second device.

After the authentication function entity transmits the first group response message to the first device, the following processing may be included: receiving, by the authentication function entity, the second group request message from the first device. Taking the processing on the target second device performed by the authentication function entity as an example, after the authentication function entity receives the second group request message from the first device, following processing may be included: decrypting, by the authentication function entity, the encrypted information of the target second device based on the third key of the target second device, to obtain plaintext information of the target second device. The third key of the target second device is used for communication between the target second device and the authentication function entity, and the target second device is one of the plurality of second devices.

The decrypting, by the authentication function entity, the encrypted information of the target second device based on the third key of the target second device, to obtain the plaintext information of the target second device may include: in a case where the encrypted information of the target second device is carried in the second group request message, determining, by the authentication function entity, that authentication on the authentication function entity performed by the target second device is successful; and decrypting, by the authentication function entity by using the confidentiality algorithm corresponding to the target second device, the encrypted information of the target second device based on the third key of the target second device, to obtain the plaintext information of the target second device. The confidentiality algorithm corresponding to the target second device is determined based on the security capability of the target second device. The method for reporting the security capability of the target second device is described in the foregoing embodiments. The method for determining the corresponding confidentiality algorithm based on the security capability of the target second device is not limited in this embodiment.

The processing of the authentication function entity calculating the third key of the target second device may include: calculating, by the authentication function entity, the third key of the target second device based on the identifier of the target second device, the identifier of the authentication function entity, the identifier of the first device, the first random number, and the shared key of the target second device. The specific processing of the authentication function entity calculating the third key of the target second device should be the same as the specific processing of the target second device calculating the third key described in the foregoing, which will not be repeated here. The authentication function entity performs the same processing for each second device as for the target second device, which will not be repeated here.

In some embodiments, each second device may transmit the encrypted information and corresponding second verification code of the device to the first device. The aforementioned second group request message may carry the respective second verification code of each second device and encrypted information of each second device.

Optionally, after the authentication function entity receives the second group request message from the first device, the processing of the authentication function entity may include: authenticating, by the authentication function entity, the plurality of second devices based on the respective second verification code and second authentication code of each second device; in a case where the authentication on each of the plurality of second devices is successful, decrypting, by the authentication function entity, the encrypted information of each second device based on the respective third key of each second device, to obtain the plaintext information of each second device. In addition, the processing of the authentication function entity may further include: in a case where the authentication on at least one second device is failed, skipping processing, by the authentication function entity, the encrypted information of each second device. Here, the processing of the authentication function entity authenticating the plurality of second devices based on the respective second verification code and second authentication code of each second device is the same as that described in the foregoing embodiments, which will not be repeated here.

Taking the target second device as an example, the decrypting, by the authentication function entity, the encrypted information of each second device based on the third key of each second device, to obtain the plaintext information of each second device may include: decrypting, by the authentication function entity, encrypted information of a target second device based on a third key of the target second device, to obtain plaintext information of the target second device. The authentication function entity obtains the plaintext information of the target second device through a decryption process identical to that described in the foregoing embodiments and will not be repeated here.

The processing of the authentication function entity may further include: transmitting, by the authentication function entity, a second group response message to the first device, where the second group response message is used to indicate an authentication result on the plurality of second devices. Specifically, the processing of the authentication function entity generating the second group response message may include at least one of: in a case where the authentication on each of the plurality of second devices is successful, transmitting a second group response message to the first device, which is used to indicate that the authentication on the plurality of second devices is successful; or in a case where the authentication on at least one second device is failed, transmitting, by the authentication function entity, a second group response message to the first device, which is used to indicate that the authentication on the plurality of second devices is failed. Correspondingly, the processing of the first device may further include: receiving, by the first device, the second group response message from the authentication function entity.

Optionally, after the authentication function entity receives the second group request message from the first device, the processing of the authentication function entity may include: authenticating, by the authentication function entity, the target second device based on the second verification code corresponding to the target second device and the second authentication code corresponding to the target second device; in a case where the authentication on the target second device is successful, decrypting, by the authentication function entity, the encrypted information of the target second device based on the third key of the target second device, to obtain the plaintext information of the target second device. In addition, the processing of the authentication function entity may further include: in a case where the authentication on the target second device is failed, skipping processing, by the authentication function entity, the encrypted information of the target second device.

The calculation of the second authentication code corresponding to the target second device, the calculation of the third key of the target second device, and the obtaining of the plaintext information of the target second device through a decryption process are consistent with the descriptions in the foregoing embodiments, which will not be repeated here. The only difference between this embodiment and the foregoing embodiment lies in the processing flow: in this embodiment, in a case where the authentication on the target second device is successful, the plaintext information is directly obtained through decryption. The authentication function entity performs the same process for each of the plurality of second devices as for the target second device described above, thereby obtaining the plaintext information of each successfully authenticated second device.

The processing of the authentication function entity may further include: transmitting, by the authentication function entity, the second group response message to the first device, where the second group response message is used to indicate the authentication result on the plurality of second devices. Correspondingly, the processing of the first device may further include: receiving, by the first device, the second group response message from the authentication function entity.

Specifically, the processing of the authentication function entity generating the second group response message may include at least one of: in a case where the authentication on each second device is successful, transmitting, by the authentication function entity, a second group response message to the first device, which is used to indicate that the authentication on the plurality of second devices is successful; otherwise, transmitting, by the authentication function entity, a second group response message to the first device, which is used to indicate that the authentication on the plurality of second devices is failed.

In some embodiments, each second device transmits its encrypted information and corresponding second verification code to the first device. The authentication function entity may transmit a first group response message to the first device, which carries a respective second authentication code of each second device, enabling the first device to authenticate the plurality of second devices. The aforementioned second group request message may carry the encrypted information of each second device.

The method used by the authentication function entity to generate the respective second authentication code of each second device is the same as that described in the foregoing embodiments and will not be repeated here. If the first device successfully authenticates each second device, the first device transmits the second group request message to the authentication function entity. The processing of the first device authenticating each second device is the same as described in the foregoing embodiments and will not be repeated here.

After the authentication function entity receives the second group request message from the first device, the processing of the authentication function entity may include: decrypting, by the authentication function entity, the encrypted information of each second device based on the respective third key of each second device, to obtain the plaintext information of each second device. The authentication function entity obtains the plaintext information of a second device through a decryption process identical to that described in the foregoing embodiments and will not be repeated here.

The processing of the authentication function entity may further include: transmitting, by the authentication function entity, a second group response message to the first device, where the second group response message is used to indicate that the authentication on the plurality of second devices is successful. Optionally, the second group response message may also be used to indicate that the encrypted information of each second device is successfully decrypted. Correspondingly, the processing of the first device may further include: receiving, by the first device, the second group response message from the authentication function entity.

In some embodiments, only the authentication processing on the authentication function entity by each second device is performed, while the authentication processing on each second device by the authentication function entity is not performed.

In an example where any one of the plurality of second devices is referred to as the target second device, after the target second device authenticates the authentication function entity based on the first authentication code corresponding to the target second device and the first verification code corresponding to the target second device, the method may further include: transmitting, by the target second device to the first device, a message used to indicate the authentication result on the authentication function entity. The authentication result may include: the authentication is successful, or the authentication is failed.

After the first device transmits the first random number and the respective first authentication code of each second device, the following processing may be included: receiving, by the first device from each second device, a message used to indicate the authentication result on the authentication function entity. Exemplarily, the message used to indicate the authentication result on the authentication function entity may be a second message.

After the first device receives the message used to indicate the authentication result on the authentication function entity from each second device, the method further include: transmitting, by the first device, the second group request message to the authentication function entity. The second group request message is used to indicate the authentication result on the authentication function entity by the plurality of second devices.

The processing of the first device generating the second group request message may include: in a case where successful authentication on the authentication function entity is indicated by the respective message from each second device that is used to indicate the authentication result on the authentication function entity, generating, by the first device, a second group request message used to indicate that the authentication result on the authentication function entity by the plurality of second devices is successful authentication; and/or in a case where failed authentication on the authentication function entity is indicated by a message from at least one second device that is used to indicate the authentication result on the authentication function entity, generating, by the first device, a second group request message used to indicate that the authentication result on the authentication function entity by the plurality of second devices is failed authentication.

Correspondingly, after the authentication function entity transmits the first group response message to the first device, the following processing may be included: receiving, by the authentication function entity, the second group request message from the first device. Furthermore, if the second group request message is used to indicate successful authentication result on the authentication function entity by the plurality of second devices, the authentication function entity may proceed with subsequent service data interaction processing, which is not limited here. If the second group request message is used to indicate failed authentication result on the authentication function entity by the plurality of second devices, the authentication function entity may initiate authentication again or terminate the process, which is not limited here.

In some possible implementations, the first device aggregates the authentication requests from the plurality of second devices and reports the first group request message to the authentication function entity. Subsequently, the first device receives the first group response message that carries the first group authentication code, and act as a proxy to authenticate the authentication function entity.

In this implementation, each second device is preconfigured with input challenge information and output response information corresponding to the input challenge information. Similarly, the authentication function entity also pre-stores the input challenge information and output response information of each second device, and pre-associates the input challenge information with the output response information for each second device. Furthermore, the input challenge information, output response information and identifier of each second device are associated and stored in the authentication function entity.

In some possible embodiments, on the first device side, the input challenge information of each second device is preconfigured, and for each second device, its input challenge information corresponds to its identifier. The output response information of each second device is preconfigured, and for each second device, its output response information corresponds to its input challenge information. That is, the input challenge information, output response information, and identifier of each second device are pre-associated and stored in the first device

The authentication request from each second device carries a respective identifier of each second device, and the authentication parameters include the identifiers of the plurality of second devices.

In an embodiment, each device (e.g., each zero-power device) in the network or system may not be assigned to a device group, or may not be configured to belong to a device group, or may be specified to not use a group identifier of a device group for authentication processing. In an example where any second device is referred to as the target second device, the authentication request from the target second device may carry the identifier of the target second device. Alternatively, in addition to the identifier of the target second device, the authentication request from the target second device may further carry input challenge information of the target second device.

In one embodiment, each device (e.g., each zero-power device) in the network or system may be assigned to a device group, configured to belong to a device group, or specified to use a group identifier of a device group for authentication processing. In an example where any second device is the target second device, the authentication request from the target second device may carry the identifier of the target second device and the group identifier of the device group, or the authentication request from the target second device may carry the identifier of the target second device, the input challenge information of the target second device, and the group identifier of the device group.

The foregoing embodiments only use the authentication request from the target second device as an example for description. The authentication request transmitted by each second device is identical in content and type to that of the target second device and will not be repeated here.

The processing of the first device receiving the authentication request from each of the plurality of second devices is similar to that described in the foregoing embodiment. The only difference from the foregoing embodiments lies in the possible content carried in the authentication request from each second device, which will not be repeated here.

In some embodiments, the authentication parameters include group input challenge information, and the method further includes: calculating, by the first device, the group input challenge information based on the input challenge information of each second device.

Optionally, in a case where the authentication request from each second device does not carry its input challenge information, the method used by the first device to obtain the input challenge information of each second device may be that: the first device obtains the respective identifier of each second device from the authentication request from each second device, and obtains locally stored input challenge information of each second device that is associated with the respective identifier of each second device. Optionally, in a case where the authentication request from each second device carries its input challenge information, the first device may obtain the input challenge information of each second device by extracting the input challenge information of each second device from the authentication request from each second device.

The calculating, by the first device, the group input challenge information based on the input challenge information of each of the plurality of second devices may include: calculating, by the first device by using an eighth calculation method, the group input challenge information based on the input challenge information of each of the plurality of second devices. The eighth calculation method may include at least one of: an XOR calculation, or a direct calculation. Taking the XOR calculation as an example, the calculating, by the first device, the group input challenge information based on the input challenge information of each of the plurality of second devices, may be: performing, by the first device, the XOR calculation on the input challenge information of each of the plurality of second devices, to obtain the group input challenge information.

Optionally, the authentication parameters may include the group input challenge information and the respective identifier of each second device. Optionally, the authentication parameters may include the group input challenge information, the respective identifier of each second device, and a group identifier.

In some embodiments, the calculating, by the authentication function entity, the first group authentication code based on the authentication parameters includes: calculating, by the authentication function entity by using a third calculation method, the first group authentication code based on the first random number, the group input challenge information, and a first parameter. The first parameter includes at least one of: group output response information, or a shared key of the first device, and the shared key of the first device is a shared key between the first device and the authentication function entity.

The third calculation method may be preset. For example, the third calculation method may include at least one of: a KDF, a first authentication function, a second authentication function, a third key generation function, a fourth key generation function, a fifth key generation function, an ASCON algorithm, an ASCON-AEAD algorithm, or a hash algorithm. The third calculation method may be the same as or different from the aforementioned first calculation method in the foregoing embodiments, which is not limited in the embodiments.

The description of the first random number is the same as that in the foregoing embodiments, which will not be repeated here.

The group input challenge information is carried in the first group request message. Alternatively, the group input challenge information may be calculated by the authentication function entity. The specific processing performed by the authentication function entity to calculate the group input challenge information is similar to the processing performed by the first device to calculate the group input challenge information, and thus will not be repeated here.

The authentication parameters include the respective identifier of each second device. Accordingly, the method used by the authentication function entity to calculate the group output response information includes: determining, by the authentication function entity, output response information of each second device based on the respective identifier of each second device; and calculating, by the authentication function entity, the group output response information based on the output response information of each second device. Here, the authentication function entity may use the aforementioned eighth calculation method to calculate, the group output response information based on the output response information of each second device. For example, the authentication function entity may perform the XOR calculation on the output response information of each second device to obtain the group output response information.

The shared key of the first device may be shared between the first device and the authentication function entity. For example, the shared key of the first device may be any one of: a PSK of the first device, a pre-distributed key of the first device, a private network key of the first device, a root key of the first device, and a service key of the first device. In an example, the shared key of the first device may be the root key of the first device. In another example, the shared key of the first device may be a service key between the first device and the authentication function entity. For example, if the authentication function entity is the AF in an application server, the service key of the first device may be denoted as K_{AF}. For example, if the authentication function entity is a core network element configured with an AIoT authentication function (i.e., AIoT NF), the service key of the first device may be denoted as K_{A-NF}.

In an example, the calculating, by the authentication function entity by using the third calculation method, the first group authentication code based on the first random number, the group input challenge information, and the first parameter may include: calculating, by the authentication function entity, the first group authentication code by employing the third calculation method and by using the shared key of the first device as a calculation key, and the first random number, the group input challenge information and the group output response information as input parameters. In an example where the service key K_{AF} of the first device is taken as the shared key of the first device, the calculation of the first group authentication code may be expressed as: Group MAC=f_{KAF} (RAND, R, C), where Group MAC denotes the first group authentication code, RAND denotes the first random number, R denotes the group input challenge information, and C denotes the group output response information. In an example where the shared key of the first device is the root key K of the first device, the calculation of the first group authentication code may be expressed as: Group MAC=f_{K} (RAND, R, C), where the meaning of each symbol will not be repeated here. In the above examples, f may be any algorithm or function in the aforementioned third calculation method, for example, it may be any one of functions f1 to f5, which is not limited here.

In an example, the calculating, by the authentication function entity by using the third calculation method, the first group authentication code based on the first random number, the group input challenge information, and the first parameter may include: calculating, by the authentication function entity, the first group authentication code by employing the third calculation method and by using the group output response information as a calculation key, and the first random number and the group input challenge information as input parameters. The calculation of the first group authentication code may be expressed as: Group MAC=f_{C} (RAND, R), where the meaning of each symbol will not be repeated here. In an example where the shared key of the first device is taken as the calculation key, the calculation of the first group authentication code may be expressed as: Group MAC=f_{K} (RAND, R, C), where the meaning of each content will not be repeated here.

The above descriptions are merely illustrative examples. In practice, the first group authentication code may be calculated in other ways.

In some possible examples, the first parameter may further include at least one of input challenge information of a specified second device, or output response information of a specified second device. In such examples, the calculation of the first group authentication code may be: calculating, by the authentication function entity, the first group authentication code by employing the third calculation method and by using the output response information of the specified second device as a calculation key, and the first random number, the group input challenge information and the group output response information as input parameters. The description does not exhaustively list all possible contents of the first parameter or their. Any implementation utilizing the first random number, the group input challenge information, and at least one first parameter for the calculation of the first group authentication code falls within the protection scope of the embodiments.

In some possible examples, the calculating, by the authentication function entity, the first group authentication code based on the authentication parameters includes: determining, by the authentication function entity, the input challenge information and output response information of each second device based on a respective identifier of each second device; calculating, by the authentication function entity by using a fifth calculation method, a respective first authentication code of each second device based on the first random number, the input challenge information of the second device, and the output response information of the second device; and calculating, by the authentication function entity, the first group authentication code based on the respective first authentication code of each second device. The fifth calculation method may be preset. For example, the fifth calculation method may include at least one of: a KDF, a first authentication function, a second authentication function, a third key generation function, a fourth key generation function, a fifth key generation function, an ASCON algorithm, or a hash algorithm. It should be understood that the above descriptions are merely illustrative examples, and not all possible method for the authentication function entity to calculate the first group authentication code are exhaustively listed here.

In one embodiment, the first group response message further carries the first random number. That is, the first group response message carries the first random number and the first group authentication code.

After the first device receives the first group response message from the authentication function entity, the following processing may be included: calculating, by the first device by using a third calculation method, a first group verification code based on the first random number, the group input challenge information, and a first parameter; where the first parameter includes at least one of: group output response information, or a shared key of the first device; and the shared key of the first device is a shared key between the first device and the authentication function entity; and authenticating, by the first device, the authentication function entity based on the first group authentication code and the first group verification code. The descriptions about the third calculation method and the shared key of the first device are consistent with the descriptions in the foregoing embodiments, which will not be repeated here.

The method used by the first device to calculate the group output response information includes: calculating, by the first device, the group output response information based on output response information of each second device. The output response information of each second device is preconfigured, and for each second device, its output response information corresponds to its input challenge information.

The calculating, by the first device, the group output response information based on output response information of each second device may include: determining, by the first device according to the respective identifier of each second device, output response information of each second device which is associated with the respective identifier of each second device; and calculating, by the first device by using an eighth calculation method, the group output response information based on the output response information of each second device. The timing for the first device to calculate the group output response information may be at any moment before the calculation of the first group verification code, which is not limited in this embodiment.

In an example where the root key K of the first device is taken as the shared key of the first device, the calculation of the first group authentication code performed by the authentication function entity may be expressed as: MAC=f_{K}(RAND, R, C). Accordingly, the calculation of the first group verification code performed by the first device may be expressed as: Group MAC=f_{K}(RAND, R, C), where Group XMAC is the first group verification code. The meanings of the remaining symbols in the formula are the same as those in the foregoing embodiments, which will not be repeated here.

In another example, the authentication function entity determines the input challenge information and output response information of each second device based on the respective identifier of each second device, the authentication function entity calculates the respective first authentication code of each second device by using a fifth calculation method based on the first random number, the input challenge information of each second device, and the output response information of each second device; and the authentication function entity calculates the first group authentication code based on the respective first authentication code of each second device. Correspondingly, the first device calculates the respective first verification code of each second device based on the first random number, the input challenge information of each second device, and the output response information of each second device by using the fifth calculation method, and then the first device calculates the first group verification code based on the respective first verification code of each second device.

The above descriptions are merely illustrative examples. In practice, as long as the first device and the authentication function utilize the same parameters and algorithm (or function) for the calculation of the first group verification code, such an implementation shall fall within the protection scope of the embodiments, which will not be repeated here.

The authenticating, by the first device, the authentication function entity based on the first group authentication code and the first group verification code may include: in a case where the first group authentication code is the same as the first group verification code, determining, by the first device, that the authentication on the authentication function entity is successful; and/or in a case where the first group authentication code is different from the first group verification code, determining, by the first device, that the authentication on the authentication function entity is failed.

In some embodiments, the authentication may be performed solely based on the first group authentication code, but the process does not include processing involving a second group verification code (or a second group authentication code).

In this embodiment, after the first device authenticates the authentication function entity based on the first group authentication code and the first group verification code, the following processing may be included: transmitting, by the first device, a second group request message to the authentication function entity, where the second group request message is used to indicate an authentication result on the authentication function entity. The authentication result on the authentication function entity may include successful authentication on the authentication function entity or failed authentication on the authentication function entity.

In an example, in a case where the authentication function entity successfully receives a second group request message, and the second group request message indicates that the authentication on the authentication function entity is successful, the processing of the authentication function entity may include: calculating, by the authentication function entity, a first key based on the first random number, an identifier of the first device, an identifier of the authentication function entity, and a third parameter; where the first key is used for communication between the first device and the authentication function entity, and the third parameter includes at least one of: the group input challenge information, or group output response information.

Here, the descriptions related to the identifier of the first device and the identifier of the authentication function entity are the same as those in the foregoing embodiments, which will not be repeated here.

The calculating, by the authentication function entity, the first key based on the first random number, the identifier of the first device, the identifier of the authentication function entity, and the third parameter may be: calculating, by the authentication function entity by using a ninth calculation method, the first key based on the first random number, the identifier of the first device, the identifier of the authentication function entity and the third parameter. The ninth calculation method may include at least one of: a KDF, a third key generation function, a fourth key generation function, a fifth key generation function, AES, SNOW 3G, or ZUC. Not all possible algorithms or functions for the ninth calculation method are exhaustively listed here.

Optionally, the third parameter may include the group input challenge information and the group output response information. Furthermore, the third parameter may further include the shared key of the first device. Correspondingly, the calculation method of the first key may be expressed as: Ku=f_{K}(UE ID/IAB node ID, NF ID, C, R, RAND), where Ku is the first key, K is the shared key of the first device (e.g., it may be the root key), UE ID/IAB node ID denotes that the identifier of the first device is the UE ID in a case where the first device is a terminal, and that the identifier of the first device is IAB node ID in a case where the first device is an IAB node, NF ID is the identifier of the authentication function entity, C is the group output response information, R is the group input challenge information, and RAND is the first random number.

Optionally, the third parameter may include the group output response information or the group input challenge information. Furthermore, the third parameter may further include the shared key of the first device. For example, the calculation method of the first key may be expressed as: Ku=f_{K}(UE ID/IAB node ID, NF ID, R, RAND), where the meaning of each symbol in the formula is the same as those in the preceding example, which will not be repeated here. "R" in the above formula may also be replaced by "C". For example, the calculation method of the first key may be expressed as: Ku=f_{K}(UE ID/IAB node ID, NF ID, C, RAND).

In an example, in a case where the authentication function entity successfully receives a second group request message, and the second group request message indicates that the authentication on the authentication function entity is successful, the processing of the authentication function entity may further include: transmitting, by the authentication function entity, a second group response message to the first device. The second group response message carries a respective second key of each second device, which is used for communication between the second device and the authentication function entity. Correspondingly, after the first device transmits the second group request message, the processing of the first device may further include: receiving, by the first device, the second group response message from the authentication function entity. The second group response message carries the respective second key of each second device, and the second key of each second device is used for communication between the second device and the authentication function entity.

Taking the target second device as an example, the method used by the authentication function entity to calculate the second key of the target second device may include: calculating, by the authentication function entity, the second key of the target second device based on the identifier of the target second device, the identifier of the authentication function entity, the identifier of the first device, the first random number, and a sixth parameter of the target second device. The sixth parameter of the target second device includes at least one of: input challenge information of the target second device, or output response information of the target second device. The target second device is one of the plurality of second devices.

Specifically, the authentication function entity calculates the second key of the target second device by using a tenth calculation method based on the identifier of the target second device, the identifier of the authentication function entity, the identifier of the first device, the first random number, and a sixth parameter of the target second device. The tenth calculation method may include at least one of: a KDF, a third key generation function, a fourth key generation function, a fifth key generation function, AES, SNOW 3G, or ZUC. Possible algorithms or functions for the tenth calculation method will not be exhaustively listed here. The algorithms or functions for the tenth calculation method may be the same as or different from those for the ninth calculation method, which is not limited in this embodiment.

Optionally, the sixth parameter of the target second device may include the input challenge information of the target second device and the output response information of the target second device. In this example, the method for calculating the second key of the target second device may include: Ktagᵢ =f_{ci/ri}(Tag ID-i, NF ID,UE ID, RAND, ci, ri), where Ktagᵢ is the second key of the target second device, ci is the input challenge information of the target second device, ri is the output response information of the target second device, Tag ID-i is the identifier of the target second device, f_{ci/ri} denotes that ci or ri may be used as the calculation key for calculating the second key of the target second device, f may be any algorithm or function listed above for the tenth calculation method, such as the f2 function, and the meanings of the remaining symbols in the formula are the same as those in the above embodiments, which will not be repeated here. Since the method for generating the second key of each second device is the same as that for generating the second key of the target second device, no further explanation will be provided.

After the first device receives the second group response message from the authentication function entity, the processing of the first device may further include: forwarding, by the first device, the first random number to the plurality of second devices. The first random number may be carried in a first message, and the first message may be a broadcast message, that is, the first device may broadcast the first random number to the plurality of second devices. Exemplarily, taking the target second device as an example, after the target second device transmits an authentication request to the first device, the method further includes: receiving, by the target second device, a first message from the first device, where the first message carries the first random number.

After the target second device receives the first random number from the first device, the processing of the target second device may include: calculating, by the target second device, a second key of the target second device based on the identifier of the target second device, the identifier of the authentication function entity, the identifier of the first device, the first random number, and a sixth parameter of the target second device. The sixth parameter of the target second device includes at least one of: the input challenge information of the target second device, or output response information of the target second device. The output response information of the target second device is in a correspondence with the input challenge information. The processing of the target second device calculating the second key should be the same as the processing of the authentication function entity calculating the second key of the target second device, and thus will not be repeated here.

In some embodiments, in a case where the first device successfully authenticates the authentication function entity based on the first group authentication code and the first group verification code, the method may further include: calculating, by the first device by using a fourth calculation method, a second group verification code based on the first random number, the group input challenge information, and a second parameter that includes at least one of the group output response information or the shared key of the first device; and transmitting, by the first device, a second group request message to the authentication function entity which carries the second group verification code used for authenticating the plurality of second devices.

The fourth calculation method may be preset. For example, the fourth calculation method may include at least one of: a KDF, a first authentication function, a second authentication function, a third key generation function, a fourth key generation function, a fifth key generation function, an ASCON algorithm, or a hash algorithm.

It should be noted that the algorithm (or function) used to calculate the second group verification code differs from that used to calculate the first group verification code (or the first group authentication code), and the parameters employed are also different. That is, the fourth calculation method differs from the aforementioned third calculation method, and/or the second parameter differs from the first parameter.

In an example, the calculating, by the first device by using the fourth calculation method, the second group verification code based on the first random number, the group input challenge information, and the second parameter may include: calculating, by the first device, the second group verification code by employing the fourth calculation method and by using the shared key of the first device as a calculation key, and the first random number, the group input challenge information and the group output response information as input parameters. The fourth calculation method is different from the third calculation method, and the second parameter is the same as the first parameter. For example, the calculation of the first group verification code performed by the first device may be expressed as: Group XMAC=f1_{K} (RAND, R, C), where f1 denotes the f1 function of the third calculation method. The calculation of the second group verification code performed by the first device may be expressed as: Group RES=f2_{K}(RAND, R, C), where Group RES is the second group verification code, and f2 denotes the f2 function of the fourth calculation method.

In an example, the calculating, by the first device by using the fourth calculation method, the second group verification code based on the first random number, the group input challenge information, and the second parameter may include: calculating, by the first device, the second group verification code by employing the fourth calculation method and by using the shared key of the first device as a calculation key, and the first random number and the group input challenge information as input parameters. The fourth calculation method is the same as the third calculation method, and the first parameter is different from the second parameter. For example, the calculation of the first group verification code performed by the first device may be expressed as: Group XMAC= f1_{K}(RAND, R, C), and the calculation of the second group verification code performed by the first device may be expressed as: Group RES=f1_{K}(RAND, C).

In another example, the fourth calculation method differs from the third calculation method, and the first parameter differs from the second parameter. For example, the calculation of the first group verification code performed by the first device may be expressed as: Group XMAC=f1_{K}(RAND, R, C), and the calculation of the second group verification code performed by the first device may be expressed as: Group RES=f2_{K}(RAND, C).

The above descriptions are merely illustrative examples for calculating the second group verification code. In practice, other methods may be used to calculate the second group verification code. For example, the first device may employ a sixth calculation method to calculate the respective second verification code of each second device based on the first random number, the input challenge information of each second device, and the output response information of each second device. Then, the first device calculates the second group verification code based on the respective second verification code of each second device. In an example where any second device is referred to as the target second device, the calculation of the respective second verification code of each second device performed by the first device by using the sixth calculation method based on the first random number, the input challenge information of each second device, and the output response information of each second device may include: calculating, by the first device by using the sixth calculation method, the second verification code corresponding to the target second device based on the first random number, the input challenge information of the target second device, and the output response information of the target second device. The sixth calculation method is different from the fifth calculation method. For example, the aforementioned fifth calculation method is the f1 function, and the sixth calculation method may be KDF, f2 function, or f3 function, etc., which will not be exhaustively listed here. The calculation of the second group authentication code performed by the first device based on the respective second verification code of each second device may be: performing, by the first device, an XOR calculation on the respective second verification code of each second device, to obtain the second group authentication code.

After the authentication function entity transmits the first group response message, the following processing may be included: receiving, by the authentication function entity, the second group request message from the first device; where the second group request message carries the second group verification code used for authenticating the plurality of second devices; and authenticating, by the authentication function entity, the plurality of second devices based on the second group verification code and a second group authentication code.

The processing of the authentication function entity calculating the second group authentication code may include: calculating, by the authentication function entity by using a fourth calculation method, the second group authentication code based on the first random number, the group input challenge information, and a second parameter. The second parameter includes at least one of: group output response information, or a shared key of the first device. In the embodiments, the second group authentication code is denoted as Group XRES.

In another possible example, the processing of the authentication function entity calculating the second group authentication code may include: calculating, by the authentication function entity by using a sixth calculation method, a respective second authentication code of each second device based on the first random number, the input challenge information of the second device, and the output response information of the second device; and calculating, by the authentication function entity, a second group authentication code based on the respective second authentication code of each second device.

It should be noted that the processing of the authentication function entity calculating the second group authentication code should adopt the same specific processing method, function (or algorithm), and parameter content as used by the first device for calculating the second group verification code, and thus will not be repeated here.

The authenticating, by the authentication function entity, the plurality of second devices based on the second group verification code and the second group authentication code may include: in a case where the second group verification code and the second group authentication code are the same, determining, by the authentication function entity, that the authentication on the plurality of second devices is successful; and/or in a case where the second group verification code and the second group authentication code are different, determining, by the authentication function entity, that the authentication on the plurality of second devices is failed.

In a case where the authentication function entity determines that the authentication on the plurality of second devices is successful, the authentication function entity may calculate the first key. The specific calculation method of the first key is the same as that described in the foregoing embodiments and will not be repeated here. The timing for calculating the first key is also consistent with the foregoing embodiments and will not be repeated here.

In a case where the authentication function entity determines that the authentication on the plurality of second devices is successful, the authentication function entity may further calculate the respective second key of each second device. The calculation method of the respective second key of each second device is the same as that described in the foregoing embodiments and will not be repeated here. Furthermore, in a case where the authentication function entity determines that the authentication on the plurality of second devices is successful, the authentication function entity may further transmit a second group response message to the first device. The second group response message may further carry the respective second key of each second device. In a case where the second group response message carries the respective second key of each second device, the first device can determine that the authentication function entity successfully authenticates the plurality of second devices. Alternatively, the second group response message may further carry information indicating successful authentication on the plurality of second devices.

After the first device receives the second group response message from the authentication function entity, the following processing may be included: forwarding, by the first device, the first random number to the plurality of second devices. The first random number may be carried in a first message, and the first message may be a broadcast message, that is, the first random number may be broadcast. In addition, the processing of the first device may further include: extracting, by the first device, the respective second key of each second device from the second group response message; and for each second device, storing its second key in association with its identifier.

The target second device is taken as an example, after the target second device receives the first random number from the first device, the target second device may generate the second key of the target second device. The method used by the target second device to calculate the second key is the same as that described in the above embodiments, and will not be repeated here.

It should be noted that the processing of the first device may further include: calculating, by the first device, a first key based on the first random number, an identifier of the first device, an identifier of the authentication function entity, and the group input challenge information. The first key is used for communication between the first device and the authentication function entity. The processing of calculating the first key performed by the first device is the same as the processing of calculating the first key performed by the authentication function entity, and thus will not be repeated here. The timing for the first device to calculate the first key may be after the first device receives the authentication requests from the plurality of second devices, or after the authentication on the authentication function entity is successful, or after the first device receives the second group response message from the authentication function entity, which is not limited in this embodiment.

In some possible embodiments, the first device does not pre-store the input challenge information or output response information of each second device. The authentication function entity pre-stores and maintains the association between the input challenge information, the output response information, and the identifier of each second device. Each second device pre-stores its own input challenge information and output response information.

The authentication request from each second device carries a respective identifier of each second device, and the authentication parameters include the respective identifier of each second device. The authentication request from each second device carries its own input challenge information.

In one embodiment, each device (e.g., each zero-power device) in the network or system may not be assigned to a device group, or may not be configured to belong to a device group, or may be specified to not use a group identifier of a device group for authentication processing. In an example where any second device is referred to as the target second device, the authentication request from the target second device may carry the identifier of the target second device, and may further carry input challenge information of the target second device. In one embodiment, each device (e.g., each zero-power device) in the network or system may be assigned to a device group, configured to belong to a device group, or specified to use a group identifier of a device group for authentication processing. In an example where any second device is referred to as the target second device, the authentication request from the target second device may carry its identifier, input challenge information, and group identifier.

The foregoing descriptions only use the authentication request from the target second device as an example. The authentication request transmitted by each second device is identical in content and type to that of the target second device, and will not be repeated here.

The processing of the first device receiving the authentication request from each of the plurality of second devices is similar to that described in the foregoing embodiments. The only difference from the foregoing embodiments lies in the possible content carried in the authentication request from each second device, which will not be repeated here.

In some embodiments, the authentication parameters include group input challenge information, and the method further includes: calculating, by the first device, the group input challenge information based on input challenge information of each of the plurality of second devices. In this embodiment, the method used by the first device to obtain the input challenge information of each second device may be that the first device extracts the input challenge information of each second device from the authentication request from each second device. The processing method used for calculating the group input challenge information is the same as that described in the above embodiments, and thus will not be repeated here.

In some embodiments, the authentication parameters include the identifier of each second device. The calculating, by the authentication function entity, the first group authentication code based on the authentication parameters includes: determining, by the authentication function entity, input challenge information and output response information of each second device based on a respective identifier of each second device; calculating, by the authentication function entity by using a fifth calculation method, a respective first authentication code of each second device based on the first random number, the input challenge information of the second device, and the output response information of the second device; and calculating, by the authentication function entity, the first group authentication code based on the respective first authentication code of each second device.

In an example, if the target second device is taken as an example, the calculating, by the authentication function entity by using the fifth calculation method, the respective first authentication code of each second device based on the first random number, the input challenge information of the second device, and the output response information of the second device may include: calculating, by the authentication function entity, the first authentication code corresponding to the target second device by employing the fifth calculation method and by using the input challenge information of the target second device as a calculation key, and the first random number, the input challenge information of the target second device, and the output response information of the target second device as input parameters. For example, the calculation of the first authentication code corresponding to the target second device may be expressed as the following formula: MACi=fci(RAND, ci, ri), where MACi denotes the first authentication code corresponding to the target second device, ci denotes the input challenge information of the target second device, ri denotes the output response information of the target second device, and f may be any one of functions f1 to f5. The target second device is any one of the plurality of second devices. Since the method for calculating the first respective authentication code of each second device by the authentication function entity is identical to that for calculating the first authentication code corresponding to the target second device, no further explanation will be provided.

The calculating, by the authentication function entity, the first group authentication code based on the respective first authentication code of each second device may include: performing, by the authentication function entity, an XOR calculation on the respective first authentication code of each second device, to obtain the first group authentication code. For example, the processing of calculating the first group authentication code may be expressed as: Group MAC=MAC1 ⊕ MAC2 ⊕ ...=fc1(RAND,c1,r1) ⊕ fc2(RAND,c2,r2) ⊕ ..., where the symbol " ⊕ " denotes the XOR calculation, Group MAC denotes the first group authentication code, MAC1 denotes the first authentication code corresponding to the 1-st second device, MAC2 denotes the first authentication code corresponding to the 2-nd second device, c1 denotes input challenge information of the 1-st second device, and c2 denotes input challenge information of the 2-nd second device. The meaning of other symbols in the formula will not be repeated here.

In an example, if the target second device is taken as an example, the calculating, by the authentication function entity by using the fifth calculation method, the respective first authentication code of each second device based on the first random number, the input challenge information of the second device, and the output response information of the second device may include: calculating, by the authentication function entity, the first authentication code corresponding to the target second device by employing the fifth calculation method and by using output response information of the target second device as a calculation key, and the first random number, the input challenge information of the target second device, and the output response information of the target second device as input parameters. For example, the calculation of the first authentication code corresponding to the target second device may be expressed as the following formula: MACi=fri(RAND,ci,ri), where the meaning of each symbol in the formula is the same as that in the above example, which will not be repeated here. The target second device is any one of the plurality of second devices. Since the method for calculating the first respective authentication code of each second device by the authentication function entity is identical to that for calculating the first authentication code corresponding to the target second device, no further explanation will be provided.

The calculating, by the authentication function entity, the first group authentication code based on the respective first authentication code of each second device may include: performing, by the authentication function entity, an XOR calculation on the respective first authentication code of each second device, to obtain the first group authentication code. For example, the calculation of the first group authentication code may be expressed as: Group MAC=MAC1 ⊕ MAC2 ⊕ ...=frl(RAND,cl,rl) ⊕ fr2(RAND,c2,r2) ⊕ ..., where the meaning of the symbols in the formula will not be repeated here.

In one embodiment, the first group response message further carries the first random number. That is, the first group response message carries the first random number and the first group authentication code.

After the first device receives the first group response message from the authentication function entity, the following processing may be included: forwarding, by the first device, the first random number to the plurality of second devices. In this embodiment, the first random number may be carried in a first message, and the first message may be a broadcast message. In addition, the first message may further carry a group identifier, that is, the group identifier of the device group to which the plurality of second devices belong.

Taking the target second device among the plurality of second devices as an example, the processing of the target second device may include: receiving, by the target second device, the first random number from the first device.

After the target second device receives the first random number from the first device, the following processing may be included: calculating, by the target second device by using a fifth calculation method, a first verification code corresponding to the target second device based on the first random number, the input challenge information of the target second device, and output response information of the target second device; and transmitting, by the target second device, the first verification code corresponding to the target second device to the first device. The first verification code corresponding to the target second device is used by the first device to calculate the first group verification code, and the first group verification code is used by the first device to authenticate the authentication function entity. Exemplarily, the first verification code corresponding to the target second device may be carried in the second message.

The specific processing of the target second device calculating the first verification code corresponding to the target second device should be the same as the specific processing of the authentication function entity calculating the first authentication code corresponding to the target second device described in the foregoing embodiments, and thus will not be repeated here. The difference lies in that, in this embodiment, the first verification code corresponding to the target second device is expressed as XMACi or MACi'. Each second device performs the same processing as the target second device, and thus will not be repeated here.

The processing of the first device may further include: receiving, by the first device from each second device, a respective first verification code; calculating, by the first device, a first group verification code based on the respective first verification code of each second device; and authenticating, by the first device, the authentication function entity based on the first group authentication code and the first group verification code.

The calculating, by the first device, the first group verification code based on the respective first verification code of each second device may include: performing, by the first device, an XOR calculation on the respective first verification code of each second device, to obtain the first group verification code. The processing method used by the first device to calculate the first group verification code is the same as that used by the authentication function entity to calculate the first group authentication code. For example, the calculation of the first group verification code performed by the first device may be expressed as: Group XMAC=XMAC1 ⊕ XMAC2 ⊕ ..., where Group XMAC denotes the first group verification code, XMAC1 denotes the first verification code corresponding to the 1-st second device, and XMAC2 denotes the first verification code corresponding to the 2-nd second device.

The authenticating, by the first device, the authentication function entity based on the first group authentication code and the first group verification code may include: in a case where the first group authentication code and the first group verification code are the same, determining, by the first device, that the authentication on the authentication function entity is successful; and/or in a case where the first group authentication code and the first group verification code are different, determining, by the first device, that the authentication on the authentication function entity is failed.

In some embodiments, the authentication may be performed solely based on the first group authentication code, but the process does not include processing involving a second group verification code (or a second group authentication code). In the embodiments, after the first device authenticates the authentication function entity based on the first group authentication code and the first group verification code, the following processing may be included: transmitting, by the first device, a second group request message to the authentication function entity, where the second group request message is used to indicate an authentication result on the authentication function entity. The authentication result on the authentication function entity may include successful authentication on the authentication function entity or failed authentication on the authentication function entity.

In some embodiments, in a case where the authentication function entity successfully receives a second group request message, and the second group request message indicates that the authentication on the authentication function entity is successful, the processing of the authentication function entity may include: calculating, by the first network device, a first key based on the first random number, the identifier of the first device, the identifier of the authentication function entity and the group input challenge information, where the first key is used for communication between the first device and the authentication function entity.

Here, the descriptions related to the identifier of the first device and the identifier of the authentication function entity are the same as those in the foregoing embodiments, which will not be repeated here.

The calculating, by the first network device, the first key based on the first random number, the identifier of the first device, the identifier of the authentication function entity and the group input challenge information may be: calculating, by the authentication function entity by using a ninth calculation method, the first key based on the first random number, the identifier of the first device, the identifier of the authentication function entity and the group input challenge information. The ninth calculation method is the same as that described in the foregoing embodiments and will not be repeated here. Exemplarily, the calculation of the first key may be expressed as: Ku=f_{K}(UE ID/IAB node ID, NF ID, C, RAND), where Ku is the first key, K is the shared key of the first device (e.g., it may be the root key), UE ID/IAB node ID denotes that the identifier of the first device is the UE ID in a case where the first device is a terminal, and that the identifier of the first device is IAB node ID in a case where the first device is an IAB node, NF ID is the identifier of the authentication function entity, C is the group output response information, and RAND is the first random number.

The processing of the first device may further include: calculating, by the first device, the first key based on the first random number, the identifier of the first device, the identifier of the authentication function entity, and the group input challenge information. The first key is used for communication between the first device and the authentication function entity. The processing of calculating the first key performed by the first device is the same as the processing of calculating the first key performed by the authentication function entity, and thus will not be repeated here. The timing for the first device to calculate the first key may be after the first device receives the authentication requests from the plurality of second devices, or after the authentication on the authentication function entity is successful, which is not limited in this embodiment.

In some embodiments, in a case where the authentication function entity successfully receives a second group request message, and the second group request message indicates that the authentication on the authentication function entity is successful, the processing of the authentication function entity may further include: transmitting, by the authentication function entity, a second group response message to the first device. The second group response message carries a respective second key of each second device used for its communication with the authentication function entity. The method for generating the second key of each second device is the same as that described in the foregoing embodiments, and will not be repeated here.

After the first device transmits the second group request message, the processing of the first device may further include: receiving, by the first device, the second group response message from the authentication function entity. The second group response message carries the respective second key of each second device.

The processing performed by the first device after receiving the second group response message from the authentication function entity, as well as the processing performed by each second device, are the same as the descriptions provided in the foregoing embodiments regarding the processing related to the second key of each second device, and thus will not be repeated here.

In some embodiments, the authentication may be performed based on the first group authentication code, and the process also includes the processing involving the second group verification code (or the second group authentication code).

In this embodiment, taking the target second device as an example, the processing of the target second device may further include: calculating, by the target second device by using a sixth calculation method, a second verification code corresponding to the target second device that is used for authenticating the target second device based on the first random number, the input challenge information of the target second device, and the output response information of the target second device; and transmitting, by the target second device, the second verification code corresponding to the target second device to the first device.

Here, the sixth calculation method may be preset, for example, the sixth calculation method may include at least one of: a KDF, a first authentication function, a second authentication function, a third key generation function, a fourth key generation function, a fifth key generation function, an ASCON algorithm, or a hash algorithm.

Optionally, the sixth calculation method is different from the foregoing fifth calculation method. For example, if the target second device uses the f1 function to calculate the first verification code: XMACi=f1ri(RAND,ci,ri), then the target second device uses the KDF to calculate the second verification code: RESi=KDFri(RAND,ci,ri). The description here is for illustrative purposes only. In practice, any implementation utilizing a sixth calculation method and a fifth calculation method with distinct functions or algorithms falls within the protection scope of the embodiments.

Optionally, the sixth calculation method is the same as the foregoing fifth calculation method. However, the processing of calculating the second verification code differs from that of calculating the first verification code in the functions of the first random number, the input challenge information of the target second device, and the output response information of the target second device. For example, in the process of calculating the first verification code, the output response information of the target second device may be used as the calculation key, e.g., XMACi=f1ri(RAND, ci, ri); in the process of calculating the second verification code, the input challenge information of the target second device may be used as the calculation key, e.g., RESi=f1ci(RAND, ci, ri). Not all possible cases are exhaustively listed here.

Optionally, the sixth calculation method is different from the foregoing fifth calculation method, and the processing of calculating the second verification code differs from that of calculating the first verification code in the functions of the first random number, the input challenge information of the target second device, and the output response information of the target second device.

It should be noted that, regarding the timing for the target second device to calculate the second verification code corresponding to the target second device, the target second device may first complete the calculation and transmission of the first verification code, and then proceed to calculate and transmit the second verification code. Alternatively, the timing for the target second device to calculate the second verification code corresponding to the target second device may be after the target second device completes the calculation of the first verification code and before it transmits the first verification code. In this case, the first verification code corresponding to the target second device and the second verification code corresponding to the target second device may be transmitted to the first device simultaneously.

The processing of the first device may further include: receiving, by the first device from each second device, a respective second verification code of each second device; and calculating, by the first device, a second group verification code used for authenticating the plurality of second devices based on the respective second verification code of each second device.

The calculating, by the first device, the second group verification code based on the respective second verification code of each second device may include: performing, by the first device, an XOR calculation on the respective second verification code of each second device, to obtain the second group verification code.

In one scenario, in the case where the first device first receives the first verification codes corresponding to the plurality of second devices and successfully authenticates the authentication function entity based on the first group authentication code and the first group verification code, the first device transmits a message to the plurality of second devices, which is used to trigger each second device to report a second verification code. The first device then performs the aforementioned processing of receiving the respective second verification code of each second device and calculating the second group verification code, which will not be repeated here. In another scenario, in the case where the first device simultaneously receives the first verification codes and the second verification codes corresponding to the plurality of second devices and successfully authenticates the authentication function entity based on the first group authentication code and the first group verification code, the first device directly proceeds to calculate the second group verification code based on the respective second verification code of each second device.

In one embodiment, after the first device calculates the second group verification code, the following processing may be included: transmitting, by the first device, a second group request message to the authentication function entity. The second group request message carries the second group verification code used for authenticating the plurality of second devices.

After the authentication function entity transmits the first group response message to the first device, the processing of the authentication function entity may include: receiving, by the authentication function entity, the second group request message from the first device, where the second group request message carries the second group verification code used for authenticating the plurality of second devices; and authenticating, by the authentication function entity, the plurality of second devices based on the second group verification code and the second group authentication code.

The processing of the authentication function entity calculating the second group authentication code may include: calculating, by the authentication function entity by using a sixth calculation method, a respective second authentication code of each second device based on the first random number, the input challenge information of the second device, and the output response information of the second device; and calculating, by the authentication function entity, the second group authentication code based on the respective second authentication code of each second device. Here, the processing of calculating each second authentication code performed by the authentication function entity should be the same as the specific processing for each second device to calculate a second authentication code, and the processing of calculating the second group authentication code performed by the authentication function entity should be the same as the processing of calculating the second group verification code performed by the first device, and thus will not be repeated here.

The specific processing for the authentication function entity to authenticate the plurality of second devices based on the second group verification code and the second group authentication code is the same as that described in the foregoing embodiments, and will not be repeated here.

Optionally, in a case where the authentication function entity determines that the authentication on the plurality of second devices is successful, the authentication function entity may further calculate the respective second key of each second device. The calculation method of the respective second key of each second device is the same as that described in the foregoing embodiments and will not be repeated here. Furthermore, in a case where the authentication function entity determines that the authentication on the plurality of second devices is successful, the authentication function entity may further transmit a second group response message to the first device. The second group response message may further carry the respective second key of each second device. In a case where the second group response message carries the respective second key of each second device, the first device can determine that the authentication function entity successfully authenticates the plurality of second devices. Alternatively, the second group response message may further carry information indicating successful authentication on the plurality of second devices. It should be noted that in this embodiment, each second device should also calculate its own second key, and each second device may calculate the second key at any moment after receiving the first random number from the first device, which will not limited in this embodiment. In addition, the specific method for each second device to calculate the second key is the same as that described in the foregoing embodiments, which will not be repeated here.

Optionally, in a case where the authentication function entity determines that the authentication on the plurality of second devices is successful, the authentication function entity may calculate a first key. The specific calculation method of the first key is the same as that described in the foregoing embodiments and will not be repeated here. The timing for calculating the first key is also consistent with the foregoing embodiments and will not be repeated here. It should be noted that the first device also needs to calculate the first key. The processing of calculating the first key performed by the first device is the same as that described in the foregoing embodiments, and will not be repeated here. The timing for the first device to calculate the first key may be after the first device receives authentication requests from the plurality of second devices, or after the authentication on the authentication function entity is successful, or after the first device receives the second group response message from the authentication function entity, which is not limited in this embodiment.

In one embodiment, the first group response message further carries the second group authentication code. The authentication function entity may transmit the first group response message to the first device, which carries the second group authentication code, enabling the first device to authenticate the plurality of second devices. The method used by the authentication function entity to generate the respective second authentication code of each second device is the same as that described in the foregoing embodiments and will not be repeated here.

After the first device calculates the second group verification code, the following processing may be included: authenticating, by the first device, the plurality of second devices based on the second group authentication code and the second group verification code; and transmitting, by the first device, a second group request message to the authentication function entity. The second group request message is used to indicate an authentication result on the plurality of second devices.

The authenticating, by the first device, the plurality of second devices based on the second group authentication code and the second group verification code may include: in a case where the second group authentication code and the second group verification code are the same, determining, by the first device, that the authentication on the plurality of second devices is successful; and in a case where the second group authentication code and the second group verification code are different, determining, by the first device, that the authentication on the plurality of second devices is failed.

Correspondingly, the processing of the authentication function entity may include: receiving, by the authentication function entity, a second group request message from the first device, where the second group request message is used to indicate an authentication result on the plurality of second device.

Optionally, in a case where the authentication function entity receives the second group request message, the authentication function entity may calculate a first key. The specific calculation method of the first key is the same as that described in the foregoing embodiments and will not be repeated here. The timing for calculating the first key is the same as that described in the foregoing embodiments and will not be repeated here.

Optionally, in a case where the authentication function entity receives the second group request message, the authentication function may further calculate a respective second key of each second device. The calculation method of the respective second key of each second device is the same as that described in the foregoing embodiments and will not be repeated here. Furthermore, the authentication function entity may transmit a second group response message to the first device, and the second group response message may carry the respective second key of each second device. After receiving the second group response message from the authentication function entity, the first device may further extract the respective second key of each second device from the second group response message, and store their second keys in association with their respective identifiers. It should be noted that, in this embodiment, each second device also needs to calculate its own second key. Each second device may calculate its second key at any moment after receiving the first random number from the first device, which is not limited in this embodiment. In addition, the specific method for each second device to calculate the second key is the same as that described in the foregoing embodiments, which will not be repeated here.

Regarding the first group authentication code and the first group verification code, as well as the second group authentication code and the second group verification code, it should also be noted that the first group authentication code and the first group verification code may be calculated without using the output response information, or the second group authentication code and the second group verification code may be calculated without using the output response information. For example, when the authentication function entity uses the fifth calculation method to calculate the first authentication code corresponding to the target second device, the input challenge information of the target second device is used as the calculation key, and the first random number and the input challenge information of the target second device are used as input parameters. For example, the calculation of the first authentication code corresponding to the target second device may be expressed as the following formula: MACi=fci(RAND, ci). In this case, since the first device can also obtain the input challenge information of each second device, the first device may complete the calculation of the first respective verification code of each second device. The calculation method is the same as that of the first authentication code described above and will not be repeated here. Subsequently, the first device can perform an XOR calculation based on the respective first verification code of each second device, to obtain the first group verification code. The subsequent authentication processing is the same as that in the foregoing embodiments and will not be repeated here. Under this scenario, the relevant processing for the second group authentication code and the second group verification code is the same as that described in the foregoing embodiments. Other possible processing methods are not exhaustively listed in this embodiment.

In some possible implementations, the reporting of authentication requests by the plurality of second devices may be triggered by the first device.

The method further includes: transmitting, by the first device, a trigger message to the plurality of second devices, where the trigger message is used to trigger each of the plurality of second devices to transmit an authentication request. Correspondingly, taking the target second device as an example, the method further includes: receiving, by the target second device, the trigger message from the first device. The trigger message is used to trigger the target second device to transmit the authentication request.

The trigger message may carry a group identifier of the device group.

Optionally, the aforementioned trigger message may be a power supply signal or a power supply message, which is used to provide ambient power to each of the plurality of second devices. Optionally, the aforementioned trigger message may be a paging message, which may be used for paging the plurality of second devices. In this case, the authentication request transmitted by each of the plurality of second devices may specifically be a paging response. Optionally, the aforementioned trigger message may be a discovery message, which is used for discovering the plurality of second devices. In this case, the authentication request transmitted by each of the plurality of second devices may be a discovery response. Optionally, the aforementioned trigger message may be a group authentication trigger message, which is used for triggering the group to perform authentication. In this case, the authentication request transmitted by each of the second devices may be an authentication response.

FIG. 5 is a schematic flowchart of an authentication method performed by a first device according to an embodiment of the present application. The method includes at least part of the following:
S510, receiving, by the first device, authentication requests from a plurality of second devices;
S520, transmitting, by the first device, a first group request message to an authentication function entity; where the first group request message carries authentication parameters related to the plurality of second devices, the authentication parameters are obtained based on the authentication requests from the plurality of second devices, and the authentication parameters are used, alongside a first random number, for the authentication function entity to calculate a second group authentication code; and
S530, receiving, by the first device, a first group response message from the authentication function entity; where the first group response message carries the first random number.

FIG. 6 is a schematic flowchart of an authentication method performed by an authentication function entity according to an embodiment of the present application. The method includes at least part of the following:
S610, receiving, by the authentication function entity, a first group request message from a first device; where the first group request message carries authentication parameters related to a plurality of second devices;
S620, calculating, by the authentication function entity, a second group authentication code based on the authentication parameters and a first random number; and
S630, transmitting, by the authentication function entity, a first group response message to the first device; where the first group response message carries the first random number.

The aforementioned first device, second device, and authentication function entity are the same as those in the previous embodiments, which will not be repeated here.

In this embodiment, the relevant processing of each second device is the same as the related processing involving the second verification code described in the foregoing embodiments, and thus will not be repeated here.

In a possible implementation, the first device aggregates the authentication requests from the plurality of second devices and reports the first group request message to the authentication function entity. Subsequently, the first device receives the first group response message carrying the first random number, and transmits the first random number to each second device, to enable the second device to calculate a second verification code. The first device or the authentication function entity authenticates the plurality of second devices.

The method further includes: forwarding, by the first device, the first random number to the plurality of second devices.

The authentication request from each of the plurality of second devices carries a second random number corresponding to a respective second device, and the authentication parameters include the second random number corresponding to a respective second device. The method further includes: receiving, by the first device from each second device, a respective second verification code used for authenticating each second device. The respective second verification code of each second device is calculated based on the first random number and the second random number corresponding to the second device.

Optionally, the method further includes: transmitting, by the first device, a second group request message to the authentication function entity, where the second group request message carries the respective second verification code of each second device. Correspondingly, in the processing performed by the authentication function entity, the calculating, by the authentication function entity, the second group authentication code based on the authentication parameters and the first random number includes: calculating, by the authentication function entity by using a second calculation method, a respective second authentication code of each second device based on the first random number, the second random number corresponding to the second device, and a shared key of the second device; where the respective shared key of each second device is shared between the second device and the authentication function entity; and determining, by the authentication function entity, the second authentication codes of the plurality of second devices as the second group authentication code.

Furthermore, the authentication function entity receives a second group request message from the first device. The second group request message carries a respective second verification code of each second device used for authenticating the second device. The authentication function entity authenticates the plurality of second devices based on the respective second verification code and second authentication code of each second device.

This embodiment differs from the foregoing embodiments in that, the authentication function entity uses the second authentication codes corresponding to the plurality of second devices as the second group authentication code. The specific processing may be as follows: the authentication function entity directly assembles the second authentication code corresponding to each second device into the second group authentication code. That is, the second group authentication code can be understood as a collection of all second authentication codes of all second devices, without further performing on the individual second authentication code.

The descriptions related to the calculation of the second verification code performed by each second device, the calculation of the second authentication code performed by the authentication function entity, and the authentication on the plurality of second devices performed by the authentication function entity in this embodiment are identical to the relevant descriptions in the foregoing embodiment in which the authentication function entity performs authentication based on the respective second verification code of each second device, which will not be repeated here.

Optionally, the first group response message further carries the second group authentication code, and the second group authentication code includes the respective second authentication code of each second device. The method further includes: authenticating, by the first device, the plurality of second devices based on the respective second verification code and second authentication code of each second device; and transmitting, by the first device, a second group request message to the authentication function entity. The second group request message is used to indicate an authentication result on the plurality of second devices. In this case, the authentication function entity directly transmits the second group authentication code, composed of the respective second authentication code of each second device, to the first device. The first device then processes the second authentication code of each second device included in the second group authentication code and the second verification code of each second device, to obtain the authentication result on the plurality of second devices.

Correspondingly, the method further includes: receiving, by the authentication function entity, a second group request message from the first device, where the second group request message is used to indicate the authentication result on the plurality of second devices. The specific descriptions of the authentication performed by the first device are the same as those in the above embodiments and will not be repeated here.

In some possible implementations, the calculating, by the authentication function entity, the second group authentication code based on the authentication parameters and the first random number includes: calculating, by the authentication function entity by using a second calculation method, the second group authentication code based on the first random number, the group input challenge information, and a second parameter; where the second parameter includes at least one of: group output response information, or a shared key of the first device; and the shared key of the first device is a shared key between the first device and the authentication function entity.

The authentication parameters further include group input challenge information, and the processing of the first device further includes: calculating, by the first device, the group input challenge information based on input challenge information of each of the plurality of second devices. The method for calculating the group input challenge information is the same as that described in the foregoing embodiments, which will not be repeated here.

The method further includes: calculating, by the first device by using a fourth calculation method, a second group verification code based on the first random number, the group input challenge information, and a second parameter; where the second parameter includes at least one of: group output response information, or a shared key of the first device; and transmitting, by the first device, a second group request message to the authentication function entity; where the second group request message carries the second group verification code used for authenticating the plurality of second devices.

The method further includes: receiving, by the authentication function entity, a second group request message from the first device; where the second group request message carries a second group verification code used for authenticating the plurality of second devices; and authenticating, by the authentication function entity, the plurality of second devices based on the second group verification code and the second group authentication code.

In the above implementations, the processing related to the calculation of the second group verification code by the first device, the calculation of the second group authentication code by the authentication function entity, and the authentication on the plurality of second devices by the authentication function entity is consistent with the foregoing embodiments, and therefore will not be repeated here.

In some possible embodiments, the authentication parameters include a respective identifier of each second device, and the calculating, by the authentication function entity, the second group authentication code based on the authentication parameters and the first random number includes: determining, by the authentication function entity, input challenge information and output response information of each second device based on the respective identifier of each second device; calculating, by the authentication function entity by using a second calculation method, a respective second authentication code of each second device based on the first random number, the input challenge information of the second device, and the output response information of the second device; and calculating, by the authentication function entity, the second group authentication code based on the respective second authentication code of each second device.

The processing of the first device further includes: receiving, by the first device from each second device, a respective second verification code of each second device; and calculating, by the first device, a second group verification code used for authenticating the plurality of second devices based on the respective second verification code of each second device.

Optionally, the first group response message further carries a second group authentication code. Regarding the processing of the first device, the method further includes: authenticating, by the first device, the plurality of second devices based on the second group authentication code and the second group verification code; transmitting, by the first device, a second group request message to the authentication function entity; where the second group request message is used to indicate an authentication result on the plurality of second devices. Correspondingly, the method further includes: receiving, by the authentication function entity, the second group request message from the first device; where the second group request message is used to indicate the authentication result on the plurality of second devices.

Optionally, transmitting, by the first device, a second group request message to the authentication function entity; where the second group request message carries the second group verification code used for authenticating the plurality of second devices. Regarding the processing of the authentication function entity, the method further includes: receiving, by the authentication function entity, the second group request message from the first device; where the second group request message carries the second group verification code used for authenticating the plurality of second devices; and authenticating, by the authentication function entity, the plurality of second devices based on the second group verification code and the second group authentication code.

The relevant processing of the aforementioned first device, authentication function entity, and each second device are the same as the related processing involving the second group authentication code and the second group verification code described in the foregoing embodiments, and thus will not be repeated here.

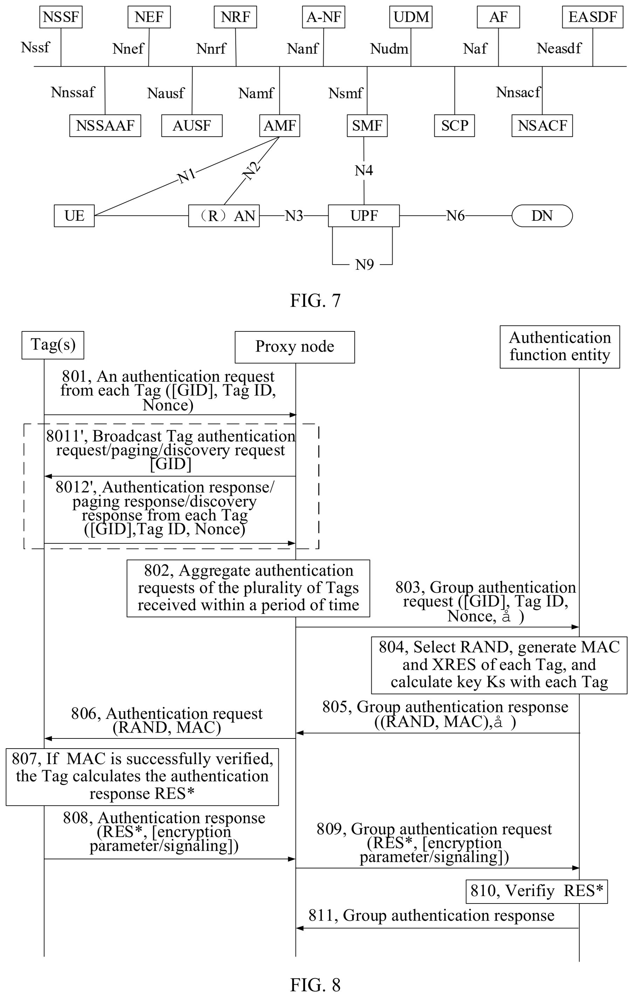

The applicable architecture of the authentication methods provided in the foregoing various embodiments will be described with reference to FIG. 7. FIG. 7 illustrates the network elements that may be included in the system, such as a UE, a radio access network (RAN), an access network (AN), a user plane function (UPF), a data network (DN), a network slice specific authentication and authorization function (NSSAAF), a network slice selection assistance function (NSSAF), a service communication proxy (SCP), an edge application server discovery function (EASDF), a network slice admission control function (NSACF) and other network elements. The 3GPP system needs to support a new function, that is, an AIoT group authentication function (A-NF). The AIoT group authentication function may be set or configured in a new core network-specific network element, or the AIoT group authentication function may be set or configured in a core network element that includes at least one of AMF, SMF, AUSF, UDM, HSS, ARPF, BSF, SEAF, etc., or the AIoT group authentication function may be completed collaboratively by AUSF and UDM. It should be understood that FIG. 7 also schematically illustrates the service-based interfaces provided by each network element to other network elements. For example, a service-based interface provided by the AMF to the other network elements may be Namf, a service-based interface provided by the SMF to the other network elements may be Nsmf, a service-based interface provided by the newly added network element A-NF to the other network elements may be Nanf, which are only illustrative examples. The service-based interfaces provided by other network elements to the others are clearly illustrated in FIG. 7, which will not be repeated here.

With reference to FIG. 8, an exemplary description of the aforementioned authentication method is provided, with an example where Tags are taken as the plurality of second devices and a proxy node is taken as the first device.

In step 801, the Tag(s) store their own identifier Tag ID (which may be a 3GPP internal identifier, a 3GPP external identifier, or a communication link identifier), and may also store a group identifier (GID). Within a certain communication range, the plurality of Tags is powered by the environment energy, and each triggered Tags broadcasts initial information or its authentication request (Tag_Auth_Req), which includes the Tag ID, a second random number Nonce selected by the Tag, and may also include the GID. In addition, the authentication request from each Tag may also include the security capability of the Tag.

In step 802, the proxy node aggregates the authentication requests received from the plurality of Tags within a period of time (e.g., based on a timer in the UE). In an example where a UE is taken as the proxy node, the UE may be configured with group information by the 5G core network (5GC) or a third-party application AF. If the UE receives an authentication request including the GID, the UE will retrieve the Tag group list included in the group information based on the received GID and tag ID to determine whether to act as a relay to assist group authentication process of this Tag. If the determination is affirmative, the UE aggregates the AIoT device identifiers Tag IDs belonging to the same GID.

In step 803, the proxy node transmits the aggregated group authentication request to the authentication function entity. The request may be transmitted securely by using the 5GC security context of the proxy node. The group authentication request is the first group request message mentioned in the above embodiments. The group authentication request includes the tag ID and Nonce of each Tag, and may further include the group identifier GID.

In step 804, the authentication function entity selects a RAND (i.e., the first random number in the foregoing embodiments), generates a MAC (i.e., the first authentication code) and an XRES (i.e., the second authentication code) of each Tag, and calculates a key Ks (i.e., the third key of each second device in the foregoing embodiments) between itself and each Tag.

Specifically, the authentication function entity performs the following processing: after receiving the group authentication request from a proxy AIoT device, calculating an authentication vector for each Tag, where the calculation method is: (1) selecting the random number RAND, and calculating MAC/XRES=f_{K}(RAND, Nonce); (2) using an existing 5G-AKA method to calculate the authentication vector.

Here, in calculation method (1), the function f may be any one of the functions f1 to f5 defined by 3GPP, KDF (HMAC-SHA256), or other lightweight functions such as ASCON. Using different calculation functions results in different MAC and XRES values; K is the root key of each tag; MAC may be expressed as an authentication token AUTN; The key Ks shared with each Tag is calculated as Ks=f_{K}(Tag ID, A-NF ID, UE ID, RAND).

In step 805, the authentication function entity returns a group authentication response to the proxy node. The group authentication response includes a series of authentication parameters used for calculation performed by each Tag. Specifically, the group authentication response includes corresponding authentication parameters of each Tag device. The authentication parameters of each Tag include RAND and MAC, and may also include an expected authentication response XRES. The group authentication response in this step corresponds to the first group response message in the foregoing embodiments.

In step 806, the proxy node returns an authentication request to each Tag, which includes RAND and MAC. In this step, the authentication request transmitted by the proxy node to each Tag corresponds to the first message in the foregoing embodiments.

In step 807, each Tag first verifies the network side: calculating MAC' (i.e., the first verification code in the foregoing embodiments) based on RAND and the root key of the Tag, and comparing MAC' with the received MAC. If MAC is successfully verified, the Tag calculates the authentication response RES*= f_{K}(RAND, Nonce), where RES* denotes the second verification code in the foregoing embodiments. Furthermore, each Tag calculates the shared key Ks=f_{K}(Tag ID, A-NF ID, UE ID, RAND), encrypts and integrity-protects the information that needs to be reported (i.e., the plaintext information of the foregoing embodiments) based on its own security capability, and generates an encryption parameter/signaling (enc_container), i.e., the encrypted information in the foregoing embodiments.

In step 808, Tag(s) returns an authentication response to the proxy node, which includes RES* and the encryption parameter/signaling enc_container (optional). The authentication response corresponds to the second message in the foregoing embodiments.

In step 809, the proxy node returns the group authentication request to the authentication function entity. The group authentication request includes RES* and encryption parameters/signaling enc_container (optionally) of each Tag. The group authentication request corresponds to the second group request message in the foregoing embodiments. Alternatively, if XRES is transmitted to the authentication function entity by the proxy node in step 805, the proxy node can verify Tag(s) by comparing RES* with XRES; if the authentication performed by the proxy node succeeds, the proxy node transmits the encryption parameter/signaling to the authentication function entity through the group authentication request.

In step 810, the authentication function entity verifies Tag(s) by comparing RES* with XRES; upon successful verification, the authentication function entity decrypts each Tag's enc_container.

In step 811, after successful verification, the authentication function entity returns a group authentication response to the proxy node. The group authentication response in this step may correspond to the second group response message in the foregoing embodiments. The group authentication response may be used to indicate successful authentication on the plurality of Tags.

Regarding the example shown in FIG. 8, it should be noted that brackets [ ] in FIG. 8 are used to indicate optional parameters, and dashed lines are used to indicate potentially existing devices or messages.

In the example shown in FIG. 8, the proxy node may be an access network device, such as at least one of a base station, a gNB, an eNB, or an (R)AN node. In an example where a base station is taken as the access network device, in the scenario where the Tag is directly connected to the base station, the base station aggregates the authentication requests from the Tags, and 5GC and AF can configure group information of Tags for the base station.

In the example shown in FIG. 8, the proxy node may be a terminal, such as a UE, and the UE may be connected to the network side through its corresponding access network device (such as at least one of a base station, a gNB, an eNB, or an (R)AN node). That is, in this case, the UE needs to communicate with the authentication function entity through its corresponding access network device.

The relevant description about the authentication function entity illustrated in FIG. 8 is the same as that in the foregoing embodiments, which will not be repeated here.

In another possible example, step 801 in FIG. 8 may also be replaced by steps 8011' and 8012' in FIG. 8. In step 8011', the proxy node triggers group authentication on Tag(s) by broadcasting at least one of ambient power supply, paging, a discovery request, or an authentication request to Tag(s). In step 8011', the at least one of the paging, the discovery request, or the authentication request broadcast by the proxy node corresponds to the trigger message in the foregoing embodiments, and at least one of the paging, the discovery request, or the authentication request may carry GID. In step 8012', each Tag may transmit, based on the triggering method, one of the authentication response, paging response, and discovery response. Any one of the authentication response, paging response, and discovery response corresponds to the authentication request in the foregoing embodiments, and carries each Tag's Tag ID and Nonce, and may also carry GID.

In step 808 of FIG. 8, the authentication response from Tag(s) may not include the parameter/signaling required for encryption, but only include RES*.

Due to the characteristics of AIoT devices, the devices will report collected sensor information after receiving ambient power supply, which allows the 5GC or AF to obtain the sensor information. Therefore, considering the limited power of the AIoT devices, the authentication method illustrated in FIG. 8 may minimize the signaling overhead before the AIoT devices report messages, thereby providing benefits in terms of energy and computing.

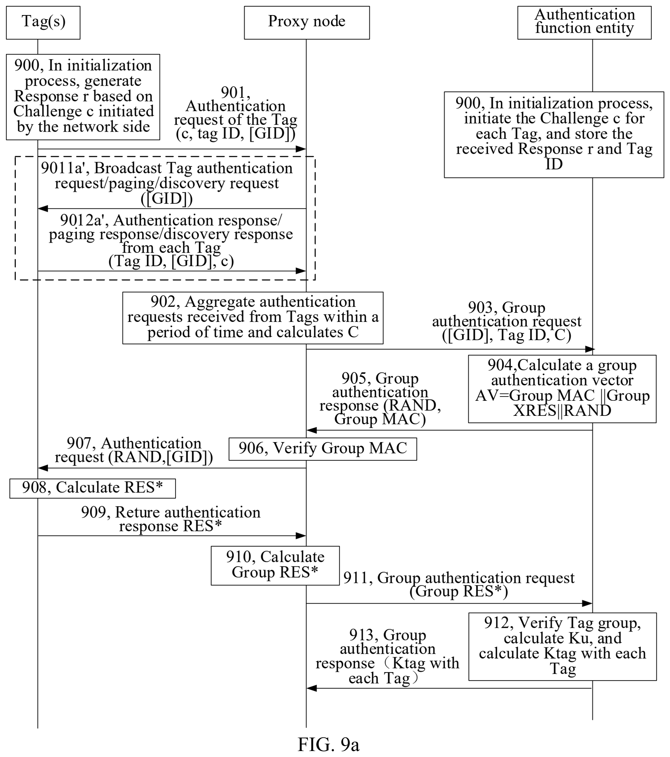

With reference to FIG. 9a, another exemplary description of the aforementioned authentication method is provided, with an example where Tags are taken as the plurality of second devices and a proxy node is taken as the first device.

In step 900, during an initialization process between the Tag device and the network side, based on PUF security technology, each Tag receives a random Challenge c transmitted by the network side and generates a Response r. Each Tag returns r to the network side, and the network side stores each Tag's Tag ID and the corresponding challenge-response pair c||r.

In step 901, Tag(s) transmits Tag authentication request Tag_Auth_Req to the proxy node. Taking Tag_a as an example, the authentication request includes its Tag ID, security capability, and Challenge c_a, and may also include the group identifier GID.

In step 902, the proxy node aggregates authentication requests received from Tag(s) within a period of time, and calculates the group challenge information C=c1 ⊕ c2 ⊕ ... The group challenge information corresponds to the group input challenge information in the foregoing embodiments. If the requests received by the proxy includes GID, the proxy node determines whether to serve as a proxy for the group authentication on the Tag(s) based on the group information provided by 5GC and AF.

In step 903, the proxy node transmits a group authentication request to the authentication function entity, which includes all Tag IDs, C, and may also include GID. The group authentication request corresponds to the first group request message in the foregoing embodiments.

In step 904, the authentication function entity retrieves the corresponding challenge-response pair c∥r according to each Tag ID, selects a random number RAND, and calculates a group authentication vector AV=Group MAC∥Group XRES∥RAND; where RAND corresponds to the first random number in the foregoing embodiments.

There are multiple possible calculation methods for Group MAC (i.e., the first group authentication code in the foregoing embodiments). The calculation function f is not limited and may be any one of the functions f1 to f5.

In an example where UE is taken as the proxy node, the input key K for Group MAC may be: the root key of the UE, the service key KAF between the UE and the AIoT network element, the Group Challenge C, each Tag's Challenge c, or each Tag's Response r. The input parameters for Group MAC may include RAND, Group Challenge C, each Tag's Challenge c, and each Tag's Response r. For example, Group MAC=fc1(RAND,c1,r1) ⊕ fc2(RAND,c2,r2) ⊕ ... For example, Group MAC=fr1(RAND, c1, r1) ⊕ fr2(RAND, c2, r2) ⊕ ...

There are many possible calculation methods for Group XRES (i.e., the second group authentication code in the above embodiments). The calculation function f is not limited and may be any function among f1 to f5. The input key K for Group XRES may be: each Tag's Challenge c, or each Tag's Response r. The input parameters may include: RAND, Group Challenge C, each Tag's Challenge c, and each Tag's Response r. For example, Group XRES=fc1(RAND,c1,r1) ⊕ fc2(RAND,c2,r2) ⊕ ... In another example, the Group XRES=fr1(RAND,c1,r1) ⊕ fr2(RAND,c2,r2) ⊕ ...

In step 905, the authentication function entity returns a group authentication response to the proxy node, which carries RAND and Group MAC, and may also include Group XRES. The group authentication response corresponds to the first group response message in the foregoing embodiments.

In step 906, the proxy node calculates Group MAC' and compares it with Group MAC received from the authentication function entity to verify Group MAC.

Optionally, depending on the different calculation methods of Group MAC, the proxy node may return RAND and [GID] to each Tag. After each Tag individually calculates its MAC, the proxy node then perform aggregation to obtain Group MAC' and verifies Group MAC.

In step 907, if Group MAC is successfully verified, the proxy node broadcasts an authentication request including RAND and [GID]. The authentication request in this step may correspond to the first message in the foregoing embodiments.

If RAND is broadcast to each Tag by the proxy node in step 906, the authentication request in step 907 may not carry any content and serve only to trigger each Tag to calculate an authentication response RES*.

In step 908, each Tag calculates the authentication response RES*, which corresponds to the second verification code in the foregoing embodiments.

In step 909, each Tag returns the authentication response RES* to the proxy node. Each Tag's RES* in this step may be carried in the second message.

In step 910, the proxy node calculates Group RES*.

In step 911, the proxy node transmits a group authentication request to the authentication function entity, which carries Group RES*; the group authentication request is the second group request message in the above embodiments.

In step 912, the authentication function entity verifies the Tag group by comparing Group RES* with Group XRES. After successful verification, the authentication function entity generates the key between the proxy node and each Tag: Ku=fK(UE ID / IAB node ID, NF ID, C, RAND), and generates the key Ktag between itself and each Tag. Taking Tag1 as an example, Ktag1=fc1/r1(Tag ID, NF ID, UE ID, RAND, c1, r1).

In step 913, the authentication function entity returns a group authentication response to the proxy, which may include each Tag's Ktag. The group authentication response may corresponds to the second group response message in the foregoing embodiments.

Optionally, if Group XRES is returned to the proxy node by the authentication function returning in step 905, then after the proxy node calculates Group RES* in step 910, the proxy node can verify Group XRES. If the verification is successful, the proxy node transmits a group authentication request to the authentication function entity to indicate that the verification on the Tag group is successful. The authentication function entity generates the key Ku=fK(UE ID/IAB node ID, NF ID, C, RAND) between itself and the proxy node, and generates the key Ktag between itself and each Tag. Taking Tag1 as an example, Ktag1=fc1/r1(Tag ID, NF ID, UE ID, RAND, c1, r1). Subsequently, the authentication function entity executes step 913.

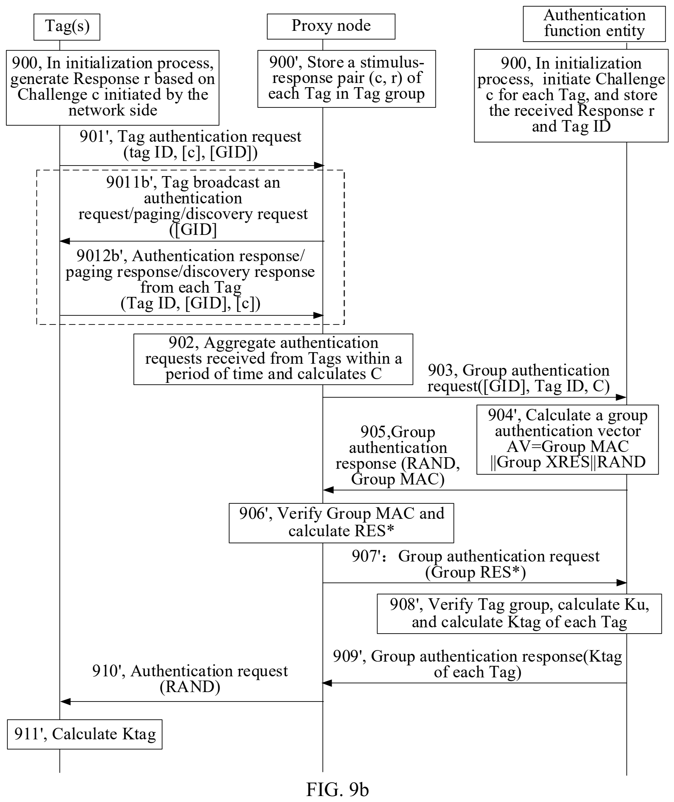

In another possible example, step 901 in FIG. 9a may also be replaced by steps 9011a' and 9012a' in FIG. 9. In step 9011a', the proxy node triggers group authentication on Tag(s) by broadcasting at least one of ambient power supply, paging, a discovery request, or an authentication request to Tag(s). The at least one of the paging, the discovery request, or the authentication request broadcast by the proxy node in step 9011a' corresponds to the trigger message in the foregoing embodiments, and at least one of the paging, the discovery request, or the authentication request may further carry GID. In step 9012a', each Tag may transmit, based on the triggering method, one of the authentication response, the paging response, and the discovery response. Any one of the authentication response, the paging response, and the discovery response corresponds to the authentication request in the foregoing embodiments, and carries each Tag's Tag ID and c, and may also carry GID.

With reference to FIG. 9b, another exemplary description of the aforementioned authentication method is provided, with an example where Tags are taken as the plurality of second devices and a proxy node is taken as the first device.

Step 900 in FIG. 9b is the same as that in the foregoing descriptions of FIG. 9a, except that the proxy node in FIG. 9b may perform step 900', and the proxy node stores a stimulus-response pair (c, r) of each Tag in the Tag group. In addition, the proxy node may also store GID and the identifier of each Tag in the group.

In step 901', Tag(s) transmits Tag authentication request Tag_Auth_Req to the proxy node. Taking Tag_a as an example, the authentication request includes its Tag ID, security capability, Challenge c, and may also include GID. In step 901' of this example, the Tag may or may not transmit the Challenge c to the proxy node.

Step 902 and step 903 are the same as those in the previous example, which will not be repeated here.

In the processing in step 904', the authentication function entity calculates the group authentication vector AV=Group MAC∥Group XRES||RAND. The calculation methods of Group MAC and Group XRES in this example are different from that in step 904 of FIG. 9a. In this example, Group MAC and Group XRES are calculated through: Group MAC=f_{K}(RAND, R, C) and Group XRES=f_{K}(RAND, R, C). The function f used for Group MAC and that for Group XRES may be different. For example, Group MAC is calculated by using the function f1, and Group XRES is calculated by using the function f2, or the like. Still taking UE as the proxy node, the input key K (or the calculation key) used for calculating Group MAC and Group XRES may be one of: the root key of the UE, a service key K_{AK} between the UE and the A-NF, a Group Challenge C, and a Group Response R.

The processing in step 905 is the same as the processing in step 905 illustrated in FIG. 9a, and will not be repeated here.

In step 906', the proxy node calculates Group MAC' and verifies Group MAC with Group MAC'. Upon successful verification, the proxy node calculates Group RES*. In step 906', the method for the proxy node to calculate Group MAC' is the same as that for the authentication function entity to calculate Group MAC, and the method for the proxy node to calculate Group RES* is the same as that for the authentication function entity to calculate Group XRES, which will not be repeated here.

Step 907' is the same as step 911 in the previous embodiment, which will not be repeated here.

In step 908', the authentication function entity uses Group XRES to verify Group RES*. After successfully verifying the Tag group, the authentication function entity calculates Ku, and also calculates Ktag of each Tag. In this step, the parameters used for calculating Ku may include R (i.e., Tag Group R).

Step 909' is the same as step 913 in the foregoing example illustrated in FIG. 9a, which will not be repeated here.

In step 910', after receiving the group authentication response, the proxy node stores the Ktag with each Tag, and then transmits an authentication request to each Tag, to carry RAND in the authentication request. The authentication request in this step corresponds to the first message in the foregoing embodiments.

In step 911', each Tag calculates its own Ktag based on the received RAND. The method used by each Tag to calculate its own Ktag is the same as the method used by the A-NF to calculate Ktag, which will not be repeated here.

In another possible example, step 901 in FIG. 9b may also be replaced by steps 9011b' to 9012b' in FIG. 9b. Step 9011b' is the same as step 9011a' in FIG. 9a and will not be repeated here. In step 9012b' in FIG. 9b, each Tag transmits any one of the authentication response, the paging response, and the discovery response, which carries each Tag's Tag ID and may also carry GID (optional), and may or may not carry c.

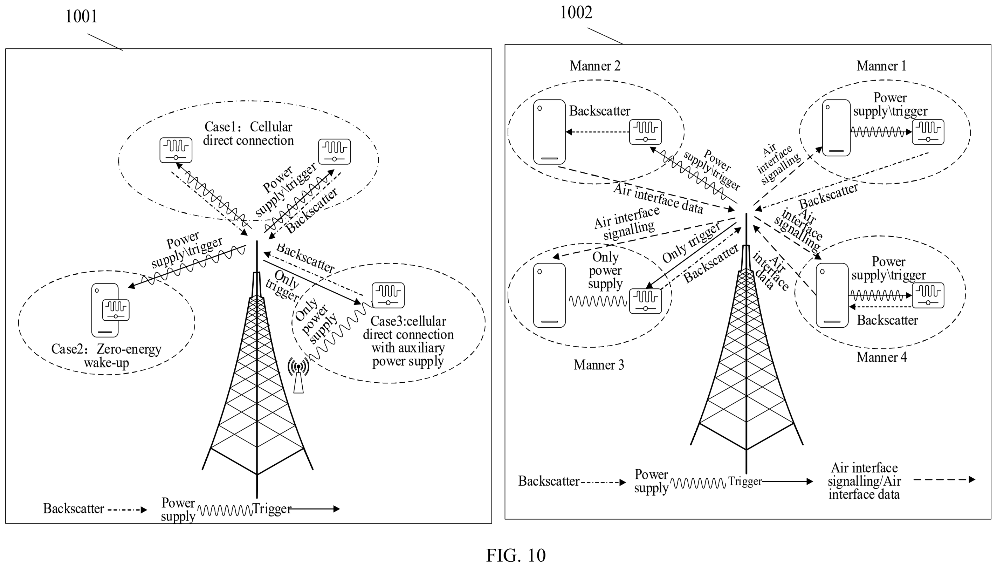

With reference to FIG. 10, the following provides an exemplary description of a possible architecture for the second device to access the cellular system, through an example where any second device is a zero-power device. In part 1001 of FIG. 10, for a cellular-based zero-power communication system, the base station provides a wireless power supply signal and a trigger signal to the zero-power device. The wireless power supply signal is used for supply power to the zero-power device. The trigger signal may carry control information to-be-transmitted to the zero-power device. The zero-power device transmits information to the base station through backscatter. Case 1 represents a cellular direct connection, where the base station and the zero-power device communicate directly. The base station provides the wireless power supply signal and the trigger signal to the zero-power device. Case 2 represents zero-power wake-up, and under this case, the zero-power device may collaborate with a conventional terminal to undertake and complete some low power consumption operations, to assist in power saving of the conventional terminal. Here, when the base station needs to communicate with the conventional terminal, the base station first transmits a wake-up signal, and the zero-power device will wake up when detecting the wake-up signal. Case 3 represents a cellular direct connection with auxiliary power supply. Under this case, the zero-power device can obtain wireless energy not only from the base station it communicates with, but also from a third-party device. In part 1002 of FIG. 10, for the zero-power communication system based on cellular and sidelink communication, Manner 1 represents zero-power communication triggered by smart terminal-assisted power supply, Manner 2 represents zero-power sidelink communication powered/triggered by the network, Manner 3 represents zero-power communication with smart terminal-assisted power supply, and Manner 4 represents network-controlled zero-power sidelink communication.

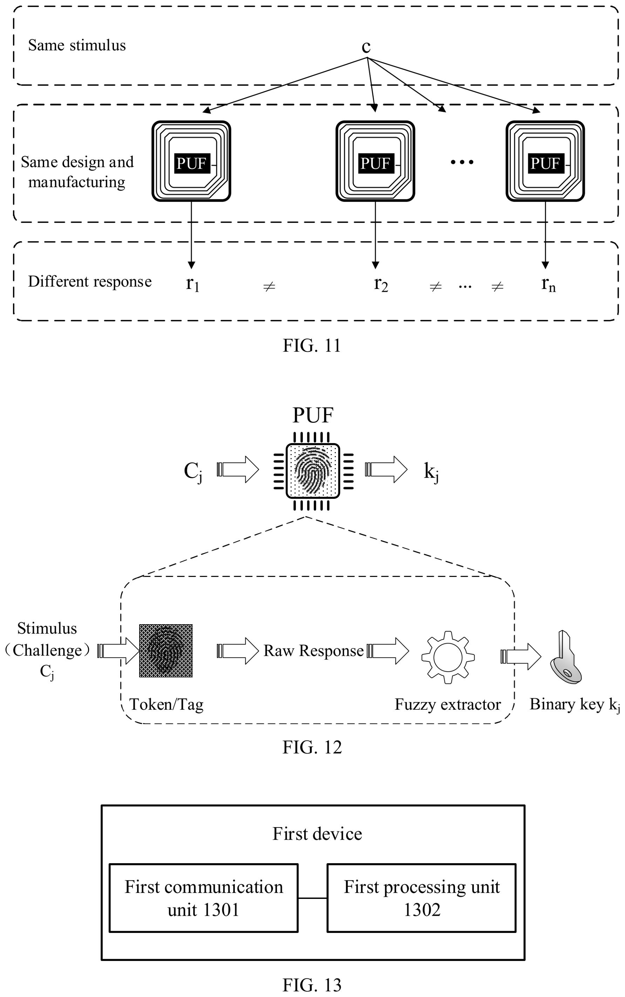

The input challenge information (i.e., c of each second device) and the output response information (i.e., r of each second device) in the foregoing embodiments are described as follows: c and r of each second device form a challenge-response pair, which is implemented based on physically unclonable functions. Regarding PUF, PUF is a hardware security technology that uses inherent device variations to generate a unique and unclonable device response to a given input. As illustrated in FIG. 11, when the same stimulus (i.e., the challenge c) is applied to different PUFs with the same design and manufacturing processes, the resulting responses (i.e., Response r) differ. For example, in FIG. 11, response information r1 obtained based on a first PUF, response information r2 obtained based on a second PUF, and response information rn obtained based on the n-th PUF are all different. The key extraction processing of the PUF may be illustrated in FIG. 12. Any challenge information cj is input into the PUF, to obtain response information kj. Within the PUF, cj is first input into the PUF to extract a token, yielding a raw response. The raw response is then input into a fuzzy extractor to finally generate a binary key Kj, which serves as Response c. PUFs exhibit the following security characteristics: the endogenous characteristics of a PUF are difficult to predict and control; the PUF can resist physical attacks including reverse engineering, and is difficult to clone; the PUF-based key storage and security authentication mechanism eliminate the key "burn-in" processes in the supply chain, as the key is extracted from variations inherent in integrated circuit manufacturing, ensuring supply chain security; the PUFs may be implemented using general-purpose digital circuits, resulting in lower costs; and keys derived from PUFs are only generated when needed, minimizing the security exposure window. Ideally, the PUFs possess characteristics such as ease of computation, reproducibility, unclonability, unpredictability, and unidirectional functionality.

By adopting the solutions provided in the embodiments, the first device aggregates the authentication requests from the plurality of second devices into a first group request message, and then transmits the first group request message to the authentication function, to enable the authentication function entity to initiate the authentication process. In this way, this approach may avoid the potential network congestion problem that could arise when the authentication function entity on the network side individually authenticates each second device in scenarios where a large number of second devices attempt to access the network in a short time, reduces the communication signaling overhead between the first device and the authentication function entity, and improves the efficiency of the authentication processing.

FIG. 13 is a schematic diagram showing components of a first device according to an embodiment of the present application, which includes:
a first communication unit 1301 configured to: receive authentication requests from a plurality of second devices; transmit a first group request message to an authentication function entity, where the first group request message carries authentication parameters related to the plurality of second devices, and the authentication parameters are obtained based on the authentication requests from the plurality of second devices; and receive a first group response message from the authentication function entity, where the first group response message carries a first group authentication code used for authenticating the authentication function entity, and the first group authentication code is calculated based on the authentication parameters.

The first group response message further carries a first random number, and the first communication unit is configured to forward the first random number to the plurality of second devices.

The authentication requests from the plurality of second devices each carry a second random number corresponding to a respective second device; and the authentication parameters include the second random number corresponding to the respective second device.

The first group authentication code includes a respective first authentication code of each second device that is used for authenticating the authentication function entity.

The first communication unit is configured to forward a respective first authentication code to each second device.

The first communication unit is configured to receive, from each second device, a respective second verification code used for authenticating each second device.

The first communication unit is configured to transmit a second group request message to the authentication function entity, and the second group request message carries a respective second verification code of each second device.

As illustrated in FIG. 13, the first device further includes a first processing unit 1302.

The first group response message further carries a respective second authentication code of each second device. The first processing unit is configured to authenticate the plurality of second devices based on the respective second verification code and second authentication code of each second device, and
the first communication unit is configured to transmit a second group request message to the authentication function entity, where the second group request message is used to indicate an authentication result on the plurality of second devices.

The second group request message further carries encrypted information of each second device, and the first communication unit is configured to receive the encrypted information from each second device.

The authentication parameters include group input challenge information, and the first processing unit is configured to calculate the group input challenge information based on input challenge information of each second device.

The first processing unit is configured to: calculate, by using a third calculation method, a first group verification code based on the first random number, the group input challenge information, and a first parameter; where the first parameter includes at least one of: group output response information, or a shared key of the first device, and the shared key of the first device is a shared key between the first device and the authentication function entity; and authenticate the authentication function entity based on the first group authentication code and the first group verification code.

The first processing unit is configured to calculate, by using a fourth calculation method, a second group verification code based on the first random number, the group input challenge information, and a second parameter; where the second parameter includes at least one of: the group output response information, or the shared key of the first device; and
the first communication unit is configured to transmit a second group request message to the authentication function entity, where the second group request message carries the second group verification code used for authenticating the plurality of second devices.

The first processing unit is configured to calculate a first key based on the first random number, an identifier of the first device, an identifier of the authentication function entity, and a third parameter. The first key is used for communication between the first device and the authentication function entity, and the third parameter includes at least one of: the group input challenge information, or group output response information.

The first processing unit is configured to calculate the group output response information based on output response information of each second device. The output response information of each second device is preconfigured, and for each second device, its output response information corresponds to its input challenge information.

The input challenge information of each second device is preconfigured, and for each second device, its input challenge information corresponds to its identifier.

The first communication unit is configured to: receive a respective first verification code from each second device. The first processing unit is configured to: calculate a first group verification code based on the respective first verification code of each second device; and authenticate the authentication function entity based on the first group authentication code and the first group verification code.

The first communication unit is configured to receive a respective second verification code of each second device, and the first processing unit is configured to calculate a second group verification code used for authenticating the plurality of second devices based on the respective second verification code of each second device.

The first group response message further carries a second group authentication code, and the first processing unit is configured to authenticate the plurality of second devices based on the second group authentication code and the second group verification code. The first communication unit is configured to transmit a second group request message to the authentication function entity, and the second group request message is used to indicate an authentication result on the plurality of second devices.

The first communication unit is configured to transmit a second group request message to the authentication function entity. The second group request message carries the second group verification code used for authenticating the plurality of second devices.

The first processing unit is configured to calculate a first key based on the first random number, an identifier of the first device, an identifier of the authentication function entity, and the group input challenge information. The first key is used for communication between the first device and the authentication function entity.

The authentication request from each second device carries its own input challenge information.

The first communication unit is configured to receive a second group response message from the authentication function entity. The second group response message carries a respective second key of each second device used for its communication with the authentication function entity.

The authentication requests from the plurality of second devices further carry a respective identifier of each second device, and the authentication parameters include the identifiers of the plurality of second devices.

The first communication unit is configured to transmit a trigger message to the plurality of second devices, where the trigger message is used for triggering each second device to transmit an authentication request.

The first device includes a terminal or an access network device; each of the plurality of second devices is a zero-power device; the authentication function entity is deployed in at least one of: an application function (AF), an access and mobility management function (AMF), a session management function (SMF), an authentication service function (AUSF), a unified data management function (UDM), a unified data storage (UDR), a home subscription system (HSS), an authentication credential repository and processing function (ARPF), a bootstrapping service function (BSF), a security anchor function (SEAF), or a core network-specific network element.

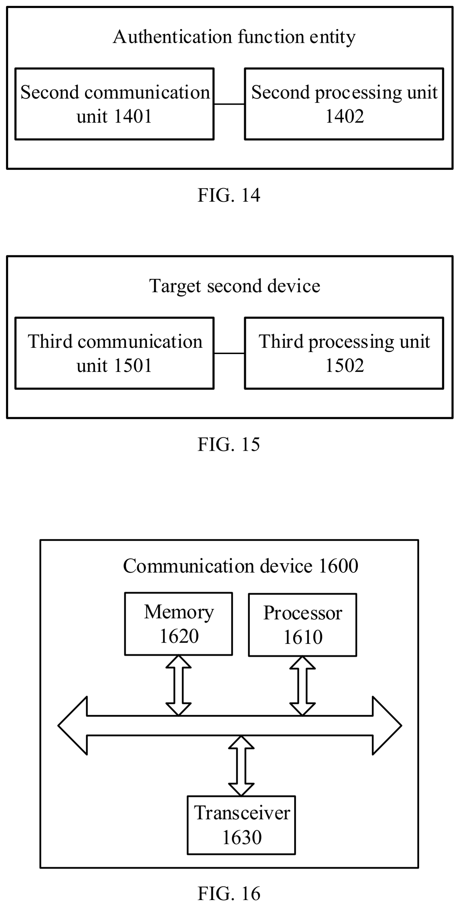

FIG. 14 is a schematic diagram showing components of an authentication function entity according to an embodiment of the present application, which includes:
a second communication unit 1401 configured to: receive a first group request message from a first device, where the first group request message carries authentication parameters related to a plurality of second devices; and transmit a first group response message to the first device, where the first group response message carries a first group authentication code used for authenticating the authentication function entity, and the first group authentication code is calculated based on the authentication parameters.

The first group response message further carries a first random number.

The authentication parameters include a second random number corresponding to a respective second device. The first group authentication code includes a respective first authentication code of each second device that is used for authenticating the authentication function entity.

The authentication function entity further includes a second processing unit 1402, which configured to: calculate, by using a first calculation method, a respective first authentication code of each second device based on the first random number, the second random number corresponding to the second device, and a shared key of the second device, where the shared key of each second device is shared between the second device and the authentication function entity; and obtain the first group authentication code based on the respective first authentication code of each second device.

The second processing unit is configured to calculate, by using a second calculation method, a respective second authentication code of each second device based on the first random number, the second random number corresponding to the second device, and the shared key of the second device.

The first group response message further carries a respective second authentication code of each second device. The second communication unit is configured to receive a second group request message from the first device, where the second group request message is used to indicate an authentication result on the plurality of second devices.

The second communication unit is configured to receive a second group request message from the first device, and the second group request message carries a respective second verification code of each second device used for authenticating the second device; and
the second processing unit is configured to authenticate the plurality of second devices based on the respective second verification code and second authentication code of each second device.

The second group request message further carries encrypted information of each second device, and the second processing unit is configured to decrypt encrypted information of a target second device based on a third key of the target second device, to obtain plaintext information of the target second device. The third key of the target second device is used for communication between the target second device and the authentication functional entity, and the target second device is one of the plurality of second devices.

The second processing unit is configured to calculate the third key of the target second device based on an identifier of the target second device, an identifier of the authentication functional entity, an identifier of the first device, the first random number, and a shared key of the target second device.

The authentication parameters include group input challenge information.

The second processing unit is configured to calculate, by using a third calculation method, the first group authentication code based on the first random number, the group input challenge information, and a first parameter. The first parameter includes at least one of: group output response information, or a shared key of the first device, and the shared key of the first device is a shared key between the first device and the authentication functional entity.

The second processing unit is configured to calculate, by using a fourth calculation method, a second group authentication code based on the first random number, the group input challenge information, and a second parameter. The second parameter includes at least one of: group output response information, or a shared key of the first device.

The authentication parameters include a respective identifier of each second device. The second processing unit is configured to: determine output response information of each second device based on the respective identifier of each second device; and calculate the group output response information based on the output response information of each second device.

The second processing unit is configured to calculate a first key based on the first random number, an identifier of the first device, an identifier of the authentication functional entity and a third parameter. The first key is used for communication between the first device and the authentication functional entity, and the third parameter includes at least one of: the group input challenge information, or group output response information.

The authentication parameters include a respective identifier of each second device. The second processing unit is configured to: determine input challenge information and output response information of each second device based on the respective identifier of each second device; calculate, by using a fifth calculation method, a respective first authentication code of each second device based on the first random number, the input challenge information of the second device, and the output response information of the second device; and calculate the first group authentication code based on the respective first authentication code of each second device.

The second processing unit is configured to: calculate, by using a sixth calculation method, a respective second authentication code of each second device based on the first random number, the input challenge information of the second device, and the output response information of the second device; and calculate a second group authentication code based on the respective second authentication code of each second device.

The second processing unit is configured to calculate a first key based on the first random number, an identifier of the first device, an identifier of the authentication functional entity, and the group input challenge information, where the first key is used for communication between the first device and the authentication functional entity.

The first group response message further carries the second group authentication code. The second communication unit is configured to receive a second group request message from the first device, where the second group request message is used to indicate an authentication result on the plurality of second devices.

The second communication unit is configured to receive a second group request message from the first device, where the second group request message carries a second group verification code used for authenticating the plurality of second devices; and
the second processing unit is configured to authenticate the plurality of second devices based on the second group verification code and the second group authentication code.

The second communication unit is configured to transmit a second group response message to the first device, where the second group response message carries a respective second key of each second device used for its communication with the authentication functional entity.

The second processing unit is configured to calculate a second key of a target second device based on an identifier of the target second device, an identifier of the authentication functional entity, an identifier of the first device, the first random number, and a sixth parameter of the target second device. The sixth parameter of the target second device includes at least one of: input challenge information of the target second device, or output response information of the target second device; and the target second device is one of the plurality of second devices.

The first device includes a terminal or an access network device; each of the plurality of second devices is a zero-power device; the authentication function entity includes at least one of: an application function (AF), an access and mobility management function (AMF), a session management function (SMF), an authentication service function (AUSF), a unified data management function (UDM), a unified data repository (UDR), a home subscription system (HSS), an authentication credential repository and processing function (ARPF), a bootstrapping service function (BSF), a security anchor function (SEAF), or a core network-specific network element.

FIG. 15 is a schematic diagram of a composition structure of a target second device according to an embodiment of the present application, which includes:
a third communication unit 1501, configured to transmit an authentication request to a first device; where the target second device is one of a plurality of second devices.

The third communication unit is configured to receive a first random number from the first device.

The authentication request from the target second device further carries a second random number corresponding to the target second device.

As illustrated in FIG. 15, the target second device further includes a third processing unit 1502, which is configured to calculate, by using a first calculation method, a first verification code corresponding to the target second device based on the first random number, the second random number corresponding to the target second device, and a shared key of the target second device; where the shared key of the target second device is shared between the target second device and an authentication function entity; and authenticate the authentication function entity based on a first authentication code corresponding to the target second device and the first verification code corresponding to the target second device; and
the third communication unit is configured to receive the first authentication code used for authenticating the authentication function entity from the first device.

The third processing unit is configured to calculate, by using a second calculation method, a second verification code corresponding to the target second device that is used for authenticating the target second device based on the first random number, the second random number corresponding to the target second device, and a shared key of the target second device; and
the third communication unit is configured to transmit the second verification code corresponding to the target second device to the first device, and the second verification code corresponding to the target second device is used to authenticate the target second device.

The third processing unit is configured to encrypt plaintext information by using a third key to obtain encrypted information. The third key is used for communication between the target second device and the authentication function entity. The third communication unit is configured to transmit the encrypted information to the first device.

The third processing unit is configured to calculate the third key based on an identifier of the target second device, an identifier of the authentication function entity, an identifier of the first device, the first random number, and the shared key of the target second device.

The authentication request from the target second device further carries input challenge information of the target second device.

The third processing unit is configured to calculate a second key of the target second device based on an identifier of the target second device, an identifier of the authentication function entity, an identifier of the first device, the first random number, and a sixth parameter of the target second device. The sixth parameter of the target second device includes at least one of: the input challenge information of the target second device, or output response information of the target second device. The output response information of the target second device has a corresponding relationship with the input challenge information.

The third processing unit is configured to calculate, by using a fifth calculation method, a first verification code corresponding to the target second device based on the first random number, the input challenge information of the target second device, and output response information of the target second device.

The third communication unit is configured to transmit the first verification code corresponding to the target second device to the first device.

The third processing unit is configured to calculate, by using a sixth calculation method, a second verification code corresponding to the target second device that is used for authenticating the target second device based on the first random number, the input challenge information of the target second device, and output response information of the target second device; and
the third communication unit is configured to transmit the second verification code corresponding to the target second device to the first device.

The authentication request from the target second device carries an identifier of the target second device.

The third communication unit is configured to receive a trigger message from the first device, where the trigger message is used for triggering the target second device to transmit the authentication request.

The first device includes a terminal or an access network device, and the target second device is a zero-power device.

An embodiment of the present application further provides a first device, and the first device includes:
a first communication unit configured to: receive authentication requests from a plurality of second devices; transmit a first group request message to an authentication function entity; where the first group request message carries authentication parameters related to the plurality of second devices, the authentication parameters are obtained based on the authentication requests from the plurality of second devices, and the authentication parameters are used, alongside a first random number, for the authentication function entity to calculate a second group authentication code; and receive a first group response message from the authentication function entity, where the first group response message carries the first random number.

The first communication unit is configured to forward the first random number to the plurality of second devices.

The authentication requests from the plurality of second devices carry a second random number corresponding to a respective second device, and the authentication parameters include the second random number corresponding to the respective second device. The first communication unit is configured to receive, from each second device, a respective second verification code of each second device. The respective second verification code of each second device is calculated based on the first random number and the second random number corresponding to the second device.

The first communication unit is configured to transmit a second group request message to the authentication function entity, where the second group request message carries a respective second verification code of each second device.

The first group response message further carries the second group authentication code, and the second group authentication code includes a respective second authentication code of each second device. The first device further includes a first processing unit;
where the first processing unit is configured to authenticate the plurality of second devices based on the respective second verification code and second authentication code of each second device; and
the first communication unit is configured to transmit a second group request message to the authentication function entity; where the second group request message is used to indicate an authentication result on the plurality of second devices.

The authentication parameters further include group input challenge information, and the first processing unit is configured to calculate the group input challenge information based on the input challenge information of each second device.

The first processing unit is configured to calculate, by using a fourth calculation method, a second group verification code based on the first random number, the group input challenge information, and a second parameter; where the second parameter includes at least one of: group output response information, or a shared key of the first device; and
the first communication unit is configured to transmit a second group request message to the authentication function entity; where the second group request message carries a second group verification code used for authenticating the plurality of second devices.

The first communication unit is configured to receive a respective second verification code of each second device, and the first processing unit is configured to calculate a second group verification code used for authenticating the plurality of second devices based on the respective second verification code of each second device.

The first group response message further carries a second group authentication code, and the first processing unit is configured to authenticate the plurality of second devices based on the second group authentication code and the second group verification code; and
the first communication unit is configured to transmit a second group request message to the authentication function entity; where the second group request message is used to indicate an authentication result on the plurality of second devices.

The first communication unit is configured to transmit a second group request message to the authentication function entity; where the second group request message carries the second group verification code used for authenticating the plurality of second devices.

An embodiment of the present application further provides an authentication function entity, and the authentication function entity includes:
a second communication unit, configured to: receive a first group request message from a first device, where the first group request message carries authentication parameters related to a plurality of second device; and transmit a first group response message to the first device, where the first group response message carries a first random number; and
the second processing unit, configured to calculate a second group authentication code based on the authentication parameters and the first random number.

The authentication parameters include a second random number corresponding to a respective one of the plurality of second devices. The second processing unit is configured to: calculate, by using a second calculation method, a respective second authentication code of each second device based on the first random number, the second random number corresponding to the second device, and a shared key of the second device, where the respective shared key of each second device is shared between the second device and the authentication functional entity; and determine the second authentication codes of the plurality of second devices as the second group authentication code.

The second communication unit is configured to receive a second group request message from the first device, where the second group request message carries a respective second verification code of each second device; and
the second processing unit is configured to authenticate the plurality of second devices based on the respective second verification code and second authentication code of each second device.

The authentication parameters include group input challenge information.

The second processing unit is configured to calculate, by using a second calculation method, the second group authentication code based on the first random number, the group input challenge information, and a second parameter; where the second parameter includes at least one of: group output response information, or a shared key of the first device, and the shared key of the first device is a shared key between the first device and the authentication functional entity.

The authentication parameters include a respective identifier of each second device, and the second processing unit is configured to: determine output response information of each second device based on the respective identifier of each second device; and calculate the group output response information based on the output response information of each second device.

The authentication parameters include a respective identifier of each second device, and the second processing unit is configured to: determine input challenge information and output response information of each second device based on the identifier of the second device; calculate, by using a second calculation method, a respective second authentication code of each second device based on the first random number, the input challenge information of the second device, and the output response information of the second device; and calculate the second group authentication code based on the respective second authentication code of each second device.

The first group response message further carries the second group authentication code, and the second communication unit is configured to receive a second group request message from the first device, where the second group request message is used to indicate an authentication result on the plurality of second devices.

The second communication unit is configured to receive a second group request message from the first device, where the second group request message carries a second group verification code used for authenticating the plurality of second devices; and the second processing unit is configured to authenticate the plurality of second devices based on the second group verification code and the second group authentication code.

The device in the embodiments of the present application may implement the corresponding functions of each device in the above authentication method embodiments. The processes, functions, implementation methods and beneficial effects that correspond to each module (sub-module, unit, component, or the like) in the terminal device may be found in the corresponding description in the above method embodiments, which will not be repeated here. It should be noted that the functions described in each module (sub-module, unit, component, or the like) in the device in the embodiments of the present application may be implemented by different modules (sub-modules, units, components, or the like) or by the same module (sub-module, unit, component, or the like).

FIG. 16 is a schematic block diagram of a communication device 1600 according to an embodiment of the present application. The communication device 1600 includes a processor 1610. The processor 1610 may call a computer program from a memory and run the computer program, to cause the communication device 1600 to implement the methods in the embodiments of the present application.

In a possible implementation, the communication device 1600 may further include a memory 1620. The processor 1610 may call a computer program from the memory 1620 and run the computer program, to cause the communication device 1600 to implement the methods in the embodiments of the present application. Here, the memory 1620 may be a separate device independent of the processor 1610, or may be integrated into the processor 1610. In a possible implementation, the communication device 1600 may further include a transceiver 1630, and the processor 1610 may control the transceiver 1630 to communicate with other devices. Specifically, the transceiver 1630 may transmit information or data to other devices, or receive information or data transmitted by other devices. Here, the transceiver 1630 may include a transmitter and a receiver. The transceiver 1630 may further include an antenna(s), and the number of antenna(s) may be one or more.

The embodiments of the present application provide a first device, which includes: a processor, and a memory that communicates with the processor. The memory is configured to store instructions which, when executed by the processor, cause the first device to perform: receiving authentication requests from a plurality of second devices; transmit a first group request message to an authentication function entity; where the first group request message carries authentication parameters related to the plurality of second devices, and the authentication parameters are obtained based on the authentication requests from the plurality of second devices; and receiving a first group response message from the authentication function entity; where the first group response message carries a first group authentication code used for authenticating the authentication function entity, and the first group authentication code is calculated based on the authentication parameters.

The first group response message further carries a first random number, and the instructions further cause the first device to perform: forwarding the first random number to the plurality of second devices.

The authentication request from each second device carries a second random number corresponding to each second device; and the authentication parameters include the second random number corresponding to each second device.

The first group authentication code includes a respective first authentication code of each second device that is used for authenticating the authentication function entity.

The instructions further cause the first device to perform: forwarding a respective first authentication code to each second device.

The instructions further cause the first device to perform: receiving a respective second verification code used for authenticating each second device from each second device.

The instructions further cause the first device to perform: transmitting a second group request message to the authentication function entity; where the second group request message carries a respective second verification code of each second device.

The first group response message further carries a respective second authentication code of each second device, and the instructions further cause the first device to perform: authenticating the plurality of second devices based on the respective second verification code and second authentication code of each second device; transmitting a second group request message to the authentication function entity; where the second group request message is used to indicate an authentication result on the plurality of second devices.

The second group request message further carries encrypted information of each second device, and the instructions further cause the first device to perform: receiving the encrypted information from each second device.

The authentication parameters include group input challenge information, and the instructions further cause the first device to perform: calculating the group input challenge information based on input challenge information of each second device.

The instructions further cause the first device to perform: calculating, by using a third calculation method, a first group verification code based on the first random number, the group input challenge information, and a first parameter; where the first parameter includes at least one of: group output response information, or a shared key of the first device; and the shared key of the first device is a shared key between the first device and the authentication function entity; and authenticating the authentication function entity based on the first group authentication code and the first group verification code.

The instructions further cause the first device to perform: calculating, by using a fourth calculation method, a second group verification code based on the first random number, the group input challenge information, and a second parameter; where the second parameter includes at least one of: the group output response information, or the shared key of the first device; and transmitting a second group request message to the authentication function entity; where the second group request message carries the second group verification code used for authenticating the plurality of second devices.

The instructions further cause the first device to perform: calculating a first key based on the first random number, an identifier of the first device, an identifier of the authentication function entity, and a third parameter; where the first key is used for communication between the first device and the authentication function entity, and the third parameter includes at least one of: the group input challenge information, or group output response information.

The instructions further cause the first device to perform: calculating the group output response information based on output response information of each second device; where the output response information of each second device is preconfigured, and for each second device, its output response information corresponds to its input challenge information.

The input challenge information of each second device is preconfigured, and for each second device, its input challenge information corresponds to its identifier.

The instructions further cause the first device to perform: receiving a respective first verification code from each second device; calculating a first group verification code based on the respective first verification code of each second device; and authenticating the authentication function entity based on the first group authentication code and the first group verification code.

The instructions further cause the first device to perform: receiving, from each second device, a respective second verification code of each second device; and calculating a second group verification code used for authenticating the plurality of second devices based on the respective second verification code of each second device.

The first group response message further carries a second group authentication code. The instructions further cause the first device to perform: authenticating the plurality of second devices based on the second group authentication code and the second group verification code; and transmitting a second group request message to the authentication function entity; where the second group request message is used to indicate an authentication result on the plurality of second devices.

The instructions further cause the first device to perform: transmitting a second group request message to the authentication function entity; where the second group request message carries the second group verification code used for authenticating the plurality of second devices.

The instructions further cause the first device to perform: calculating a first key based on the first random number, an identifier of the first device, an identifier of the authentication function entity, and the group input challenge information; where the first key is used for communication between the first device and the authentication function entity.

The authentication request from each second device carries its own input challenge information.

The instructions further cause the first device to perform: receiving a second group response message from the authentication function entity; where the second group response message carries a respective second key of each second device used for its communication with the authentication function entity.

The authentication requests from the plurality of second devices further carry a respective identifier of each second device, and the authentication parameters include the respective identifier of each second device.

The instructions further cause the first device to perform: transmitting a trigger message to the plurality of second devices; where the trigger message is used for triggering the second device to transmit an authentication request.

The first device includes a terminal or an access network device; each of the plurality of second devices is a zero-power device; the authentication function entity includes at least one of: an application function (AF), an access and mobility management function (AMF), a session management function (SMF), an authentication service function (AUSF), a unified data management function (UDM), a unified data repository (UDR), a home subscription system (HSS), an authentication credential repository and processing function (ARPF), a bootstrapping service function (BSF), a security anchor function (SEAF), or a core network-specific network element.

The embodiments of the present application provide a first device, which includes: a processor, and a memory that communicates with the processor. The memory is configured to store instructions which, when executed by the processor, cause the first device to perform: receiving authentication requests from a plurality of second devices; transmitting a first group request message to an authentication function entity; where the first group request message carries authentication parameters related to the plurality of second devices, and the authentication parameters are obtained based on the authentication requests from the plurality of second devices; and receiving a first group response message from the authentication function entity; where the first group response message carries a first group authentication code used for authenticating the authentication function entity, and the first group authentication code is calculated based on the authentication parameters.

The first group response message further carries a first random number, and the instructions further cause the first device to perform: forwarding the first random number to the plurality of second devices.

The authentication requests from the plurality of second devices each carry a second random number corresponding to a respective one of the plurality of second devices; and the authentication parameters include second random numbers that each correspond to a respective one of the plurality of second devices.

The first group authentication code includes a respective first authentication code of each second device that is used for authenticating the authentication function entity.

The instructions further cause the first device to perform: forwarding a respective first authentication code to each second device.

The instructions further cause the first device to perform: receiving a respective second verification code used for authenticating each second device from each second device.

The instructions further cause the first device to perform: transmitting a second group request message to the authentication function entity; where the second group request message carries a respective second verification code of each second device.

The first group response message further carries a respective second authentication code of each second device. The first device further includes an instruction that causes the first device to perform: authenticating the plurality of second devices based on the respective second verification code and second authentication code of each second device; and
the instructions further cause the first device to perform: transmitting a second group request message to the authentication function entity; where the second group request message is used to indicate an authentication result on the plurality of second devices.

The second group request message further carries encrypted information of each second device, and the instructions further cause the first device to perform: receiving the encrypted information from each second device.

The authentication parameters include group input challenge information, and the instructions further cause the first device to perform: calculating the group input challenge information based on input challenge information of each second device.

The instructions further cause the first device to perform: calculating, by using a third calculation method, a first group verification code based on the first random number, the group input challenge information, and a first parameter; where the first parameter includes at least one of: group output response information, or a shared key of the first device; and the shared key of the first device is a shared key between the first device and the authentication function entity; and authenticating the authentication function entity based on the first group authentication code and the first group verification code.

The instructions further cause the first device to perform: calculating, by using a fourth calculation method, a second group verification code based on the first random number, the group input challenge information, and a second parameter; where the second parameter includes at least one of: the group output response information, or the shared key of the first device; and transmitting a second group request message to the authentication function entity; where the second group request message carries the second group verification code used for authenticating the plurality of second devices.

The instructions further cause the first device to perform: calculating a first key based on the first random number, an identifier of the first device, an identifier of the authentication function entity, and a third parameter; where the first key is used for communication between the first device and the authentication function entity, and the third parameter includes at least one of: the group input challenge information, or group output response information.

The instructions further cause the first device to perform: calculating the group output response information based on output response information of each second device; where the output response information of each second device is preconfigured, and for each second device, the output response information corresponds to its input challenge information.

The input challenge information of each second device is preconfigured, and for each second device, its input challenge information corresponds to its identifier.

The instructions further cause the first device to perform: receiving a respective first verification code from each second device; and
the instructions further cause the first device to perform: calculating a first group verification code based on the respective first verification code of each second device; and authenticating the authentication function entity based on the first group authentication code and the first group verification code.

The instructions further cause the first device to perform: receiving, from each second device, a respective second verification code of each second device; and
the instructions further cause the first device to perform: calculating a second group verification code used for authenticating the plurality of second devices based on the respective second verification code of each second device.

The first group response message further carries a second group authentication code. The instructions further cause the first device to perform: authenticating the plurality of second devices based on the second group authentication code and the second group verification code; and transmitting a second group request message to the authentication function entity; where the second group request message is used to indicate an authentication result on the plurality of second devices.

The instructions further cause the first device to perform: transmitting a second group request message to the authentication function entity; where the second group request message carries the second group verification code used for authenticating the plurality of second devices.

The instructions further cause the first device to perform: calculating a first key based on the first random number, an identifier of the first device, an identifier of the authentication function entity, and the group input challenge information; where the first key is used for communication between the first device and the authentication function entity.

The authentication request from each second device carries its own input challenge information.

The instructions further cause the first device to perform: receiving a second group response message from the authentication function entity; where the second group response message carries a respective second key of each second device used for its communication with the authentication function entity.

The authentication requests from the plurality of second devices further carry a respective identifier of each second device, and the authentication parameters include the respective identifier of each second device.

The instructions further cause the first device to perform: transmitting a trigger message to the plurality of second devices; where the trigger message is used for triggering the second device to transmit an authentication request.

The first device includes a terminal or an access network device; each of the plurality of second devices is a zero-power device; the authentication function entity is deployed in at least one of: an application function (AF), an access and mobility management function (AMF), a session management function (SMF), an authentication service function (AUSF), a unified data management function (UDM), a unified data storage (UDR), a home subscription system (HSS), an authentication credential repository and processing function (ARPF), a bootstrapping service function (BSF), a security anchor function (SEAF), or a core network-specific network element.

The embodiments of the present application provide an authentication function entity, which includes: a processor, and a memory that communicates with the processor, where the memory is configured to store instructions which, when executed by the processor, cause the first device to perform: receiving a first group request message from a first device; where the first group request message carries authentication parameters related to a plurality of second devices; and transmitting a first group response message to the first device; where the first group response message carries a first group authentication code used for authenticating the authentication function entity, and the first group authentication code is calculated based on the authentication parameters.

The first group response message further carries a first random number.

The authentication parameter includes a second random number corresponding to a respective second device, and the first group authentication code includes a respective first authentication code of each second device used for authenticating the authentication function entity.

The instructions further cause the authentication function entity to perform: calculating, by using a first calculation method, a respective first authentication code of each second device based on the first random number, the second random number corresponding to the second device, and a shared key of the second device; where the respective shared key of each second device is shared between the second device and the authentication function entity; and obtaining the first group authentication code based on the respective first authentication code of each second device.

The instructions further cause the authentication function entity to perform: calculating, by using a second calculation method, a respective second authentication code of each second device based on the first random number, the second random number corresponding to the second device, and the shared key of the second device.

The first group response message further carries a respective second authentication code of each second device, and the instructions further cause the authentication function entity to perform: receiving a second group request message from the first device; where the second group request message is used to indicate an authentication result on the plurality of second devices.

The instructions further cause the authentication function entity to perform: receiving a second group request message from the first device, where the second group request message carries a respective second verification code of each second device used for authenticating the second device; and authenticating the plurality of second devices based on the respective second verification code and second authentication code of each second device.

The second group request message further carries encrypted information of each second device, and the instructions further cause the authentication function entity to perform: decrypting encrypted information of a target second device based on a third key of the target second device, to obtain plaintext information of the target second device; where the third key of the target second device is used for communication between the target second device and the authentication functional entity, and the target second device is one of the plurality of second devices.

The instructions further cause the authentication function entity to perform: calculating the third key of the target second device based on an identifier of the target second device, an identifier of the authentication functional entity, an identifier of the first device, the first random number, and a shared key of the target second device.

The authentication parameters include group input challenge information.

The instructions further cause the authentication function entity to perform: calculating, by using a third calculation method, the first group authentication code based on the first random number, the group input challenge information, and a first parameter; where the first parameter includes at least one of: group output response information, or a shared key of the first device, and the shared key of the first device is a shared key between the first device and the authentication functional entity.

The instructions further cause the authentication function entity to perform: calculating, by using a fourth calculation method, a second group authentication code based on the first random number, the group input challenge information, and a second parameter; where the second parameter includes at least one of: group output response information, or a shared key of the first device.

The authentication parameters include a respective identifier of each second device, and the instructions further cause the authentication function entity to perform: determining output response information of each second device based on the respective identifier of each second device; and calculating the group output response information based on output response information of each second device.

The instructions further cause the authentication function entity to perform: calculating a first key based on the first random number, an identifier of the first device, an identifier of the authentication functional entity and a third parameter; where the first key is used for communication between the first device and the authentication functional entity, and the third parameter includes at least one of: the group input challenge information, or group output response information.

The instructions further cause the authentication function entity to perform: determining input challenge information and output response information of each second device based on the respective identifier of each second device; calculating, by using a fifth calculation method, a respective first authentication code of each second device based on the first random number, the input challenge information of the second device, and the output response information of the second device; and calculating the first group authentication code based on the respective first authentication code of each second device.

The instructions further cause the authentication function entity to perform: calculating, by using a sixth calculation method, a respective second authentication code of each second device based on the first random number, the input challenge information of the second device, and the output response information of the second device; and calculating a second group authentication code based on the respective second authentication code of each second device.

The instructions further cause the authentication function entity to perform: calculating a first key based on the first random number, an identifier of the first device, an identifier of the authentication functional entity, and the group input challenge information; where the first key is used for communication between the first device and the authentication functional entity.

The first group response message further carries the second group authentication code, and the instructions further cause the authentication function entity to perform: receiving a second group request message from the first device; where the second group request message is used to indicate an authentication result on the plurality of second devices.

The instructions further cause the authentication function entity to perform: receiving a second group request message from the first device; where the second group request message carries a second group verification code used for authenticating the plurality of second devices; and authenticating the plurality of second devices based on the second group verification code and the second group authentication code.

The instructions further cause the authentication function entity to perform: transmitting a second group response message to the first device; where the second group response message carries a respective second key of each second device used for its communication with the authentication functional entity.

The instructions further cause the authentication function entity to perform: calculating a second key of a target second device based on an identifier of the target second device, an identifier of the authentication functional entity, an identifier of the first device, the first random number, and a sixth parameter of the target second device; where the sixth parameter of the target second device includes at least one of: input challenge information of the target second device, or output response information of the target second device; and the target second device is one of the plurality of second devices.

The first device includes a terminal or an access network device; each of the plurality of second devices is a zero-power device; the authentication function entity includes at least one of: an application function (AF), an access and mobility management function (AMF), a session management function (SMF), an authentication service function (AUSF), a unified data management function (UDM), a unified data repository (UDR), a home subscription system (HSS), an authentication credential repository and processing function (ARPF), a bootstrapping service function (BSF), a security anchor function (SEAF), or a core network-specific network element.

The embodiments of the present application provide a second device, which includes: a processor, a memory that communicates with the processor, where the memory is configured to store instructions which, when executed by the processor, cause the second device to perform: transmitting an authentication request to a first device; where the target second device is one of a plurality of second devices.

The instructions further cause the second device to perform: receiving a first random number from the first device.

The authentication request from the target second device further carries a second random number corresponding to the target second device.

The instructions further cause the second device to perform: calculating, by using a first calculation method, a first verification code corresponding to the target second device based on the first random number, the second random number corresponding to the target second device, and a shared key of the target second device; where the shared key of the target second device is shared between the target second device and an authentication function entity; and authenticating the authentication function entity based on a first authentication code corresponding to the target second device and the first verification code corresponding to the target second device; and receiving the first authentication code used for authenticating the authentication function entity from the first device.

The instructions further cause the second device to perform: calculating, by using a second calculation method, a second verification code corresponding to the target second device that is used for authenticating the target second device based on the first random number, the second random number corresponding to the target second device, and a shared key of the target second device; and transmitting the second verification code corresponding to the target second device to the first device.

The instructions further cause the second device to perform: encrypting plaintext information by using a third key, to obtain encrypted information; where the third key is used for communication between the target second device and the authentication function entity; and transmitting the encrypted information to the first device.

The instructions further cause the second device to perform: calculating the third key based on an identifier of the target second device, an identifier of the authentication function entity, an identifier of the first device, the first random number, and the shared key of the target second device.

The authentication request from the target second device further carries input challenge information of the target second device.

The instructions further cause the second device to perform: calculating a second key of the target second device based on an identifier of the target second device, an identifier of the authentication function entity, an identifier of the first device, the first random number, and a sixth parameter of the target second device; where the sixth parameter of the target second device includes at least one of: the input challenge information of the target second device, or output response information of the target second device; where the output response information of the target second device has a corresponding relationship with the input challenge information.

The instructions further cause the second device to perform: calculating, by using a fifth calculation method, a first verification code corresponding to the target second device based on the first random number, the input challenge information of the target second device, and output response information of the target second device; and transmitting the first verification code corresponding to the target second device to the first device.

The instructions further cause the second device to perform: calculating, by using a sixth calculation method, a second verification code corresponding to the target second device that is used for authenticating the target second device based on the first random number, the input challenge information of the target second device, and output response information of the target second device; and transmitting the second verification code corresponding to the target second device to the first device.

The authentication request from the target second device carries an identifier of the target second device.

The instructions further cause the second device to perform: receiving a trigger message from the first device; where the trigger message is used for triggering the target second device to transmit the authentication request.

The first device includes: a terminal, or an access network device; and the target second device is a zero-power device.

The embodiments of the present application further provide a first device, which includes: a processor, a memory that communicates with the processor, where the memory is configured to store instructions which, when executed by the processor, cause the first device to perform: receiving authentication requests from a plurality of second devices; transmitting a first group request message to an authentication function entity; where the first group request message carries authentication parameters related to the plurality of second devices, the authentication parameters are obtained based on the authentication requests from the plurality of second devices, and the authentication parameters are used, alongside a first random number, for the authentication function entity to calculate a second group authentication code; and receiving a first group response message from the authentication function entity, where the first group response message carries the first random number.

The instructions further cause the first device to perform: forwarding the first random number to the plurality of second devices.

The authentication request from the plurality of second devices each carry a second random number corresponding to a respective second device, and the authentication parameters include the second random numbers corresponding to the respective second device; the instructions further cause the first device to perform: receiving, from each second device, a respective second verification code of each second device used for authenticating the second device; where the respective second verification code of each second device is calculated based on the first random number and the second random number corresponding to the second device.

The instruction further causes the first device to perform: transmitting a second group request message to the authentication function entity; where the second group request message carries a respective second verification code of each second device.

The first group response message further carries the second group authentication code, and the second group authentication code includes a respective second authentication code of each second device; the instructions further cause the first device to perform: authenticating the plurality of second devices based on the respective second verification code and second authentication code of each second device; and transmitting a second group request message to the authentication function entity; where the second group request message is used to indicate an authentication result on the plurality of second devices.

The authentication parameters further include group input challenge information, and the instructions further cause the first device to perform: calculating the group input challenge information based on the input challenge information of each second device.

The instructions further cause the first device to perform: calculating, by using a fourth calculation method, a second group verification code based on the first random number, the group input challenge information, and a second parameter; where the second parameter includes at least one of: group output response information, or a shared key of the first device; and transmitting a second group request message to the authentication function entity; where the second group request message carries a second group verification code used for authenticating the plurality of second devices.

The instructions further cause the first device to perform: receiving, from each second device, a respective second verification code of each second device; and the instructions further cause the first device to perform: calculating a second group verification code used for authenticating the plurality of second devices based on the respective second verification code of each second device.

The first group response message further carries a second group authentication code, and the instructions further cause the first device to perform: authenticating the plurality of second devices based on the second group authentication code and the second group verification code; and transmitting a second group request message to the authentication function entity; where the second group request message is used to indicate an authentication result on the plurality of second devices.

The instructions further cause the first device to perform: transmitting a second group request message to the authentication function entity; where the second group request message carries the second group verification code used for authenticating the plurality of second devices.

The embodiments of the present application provide an authentication function entity, which includes: a processor, and a memory that communicates with the processor. The memory is configured to store instructions which, when executed by the processor, cause the authentication function entity to perform: receiving a first group request message from a first device; where the first group request message carries authentication parameters related to a plurality of second device; and transmitting the first group response message to the first device; where the first group response message carries a first random number; and calculating a second group authentication code based on the authentication parameters and the first random number.

The authentication parameters include a second random numbers corresponding to a respective one of the plurality of second devices; the instructions further cause the authentication function entity to perform: calculating, by using a second calculation method, a respective second authentication code of each second device based on the first random number, the second random number corresponding to the second device, and a shared key of the second device; where the shared key of each second device is shared between the second device and the authentication functional entity; and determining second authentication codes of the plurality of second devices as the second group authentication code.

The instructions further cause the authentication function entity to perform: receiving a second group request message from the first device; where the second group request message carries a respective second verification code of each second device; and authenticating the plurality of second devices based on the respective second verification code and second authentication code of each second device.

The authentication parameters include group input challenge information.

The instructions further cause the authentication function entity to perform: calculating, by using a second calculation method, the second group authentication code based on the first random number, the group input challenge information, and a second parameter; where the second parameter includes at least one of: group output response information, or a shared key of the first device, and the shared key of the first device is a shared key between the first device and the authentication functional entity.

The authentication parameters include a respective identifier of each second device, and the instructions further cause the authentication function entity to perform: determining output response information of each second device based on the respective identifier of each second device; and calculating the group output response information based on the output response information of each second device.

The authentication parameters include a respective identifier of each second device, and the instructions further cause the authentication function entity to perform: determining input challenge information and output response information of each second device based on the respective identifier of each second device; calculating, by using a second calculation method, a respective second authentication code of each second device based on the first random number, the input challenge information of the second device, and the output response information of the second device; and calculating the second group authentication code based on the respective second authentication code of each second device.

The first group response message further carries the second group authentication code, and the instructions further cause the authentication function entity to perform: receiving a second group request message from the first device; where the second group request message is used to indicate an authentication result on the plurality of second devices.

The instructions further cause the authentication function entity to perform: receiving a second group request message from the first device; where the second group request message carries a second group verification code used for authenticating the plurality of second devices; and authenticating the plurality of second devices based on the second group verification code and the second group authentication code.

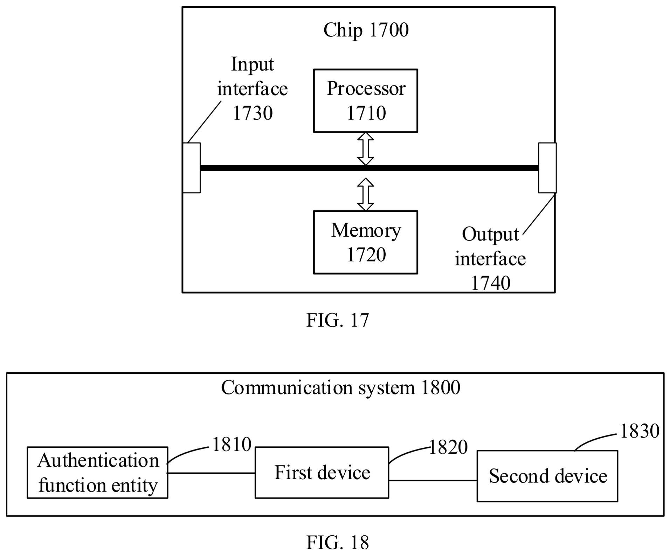

FIG. 17 is a schematic structural diagram of a chip 1700 according to the embodiments of the present application. The chip 1700 includes a processor 1710, which may call a computer program from a memory and run the computer program, to implement the methods in the embodiments of the present application. In a possible implementation, the chip 1700 may further include a memory 1720. Here, the processor 1710 may call a computer program from the memory 1720, and run the computer program, to implement the methods performed by the access network device or the core network side device in the embodiments of the present application. The memory 1720 may be a separate device independent of the processor 1710, or may be integrated into the processor 1710. In a possible implementation, the chip 1700 may further include an input interface 1730. The processor 1710 may control the input interface 1730 to communicate with other devices or chips, and specifically, may obtain information or data transmitted by other devices or chips. In a possible implementation, the chip 1700 may further include an output interface 1740. The processor 1710 may control the output interface 1740 to communicate with other devices or chips, and specifically, may output information or data to other devices or chips. In a possible implementation, the chip may be applied to each device in the embodiments of the present application, and the chip may implement the corresponding processes implemented by each device in each method in the embodiments of the present application, which will not be repeated here for the sake of brevity. It should be understood that the chip mentioned in the embodiments of the present application may also be referred to as a system-level chip, a system chip, a chip system or a system-on-chip chip, or the like.

The processor mentioned above may be a general purpose processor, a digital signal processor, a field programmable gate array, an application specific integrated circuit or another programmable logic device, a transistor logic device, a discrete hardware component, or the like. The general purpose processor mentioned above may be a microprocessor, any conventional processor, or the like. The memory mentioned above may be a volatile memory or a non-volatile memory, or may include both the volatile memory and non-volatile memory. Here, the non-volatile memory may be a read-only memory, a programmable read-only memory, an erasable programmable read-only memory, an electrically erasable programmable read-only memory or a flash memory. The volatile memory may be a random access memory. It should be understood that the above memory is exemplary but not a limited illustration. For example, the memory in the embodiments of the present application may also be a static random access memory, a dynamic random access memory, or the like. That is, the memory in the embodiments of the present application is intended to include, but is not limited to, these and any other suitable types of memories.

FIG. 18 is a schematic block diagram of a communication system 1800 according to the embodiments of the present application. The communication system 1800 includes a first device 1820, a second device 1830, and an authentication function entity 1810. In the above embodiments, all or part of the above embodiments may be implemented by software, hardware, firmware or any combination thereof. When implemented using software, all or part of the above embodiments may be implemented in a form of a computer program product. The computer program product includes one or more computer instructions. When the computer program instructions are loaded and executed on a computer, the process or the function described in the embodiments of the present application is generated in all or part. The computer may be a general purpose computer, a special purpose computer, a computer network, or another programmable apparatus. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center through wired method (e.g., coaxial cable, optical fiber, or digital subscriber line) or wireless method (e.g., infrared, radio, or microwave). The computer-readable storage medium may be any available medium that is capable of being read by the computer or a data storage device containing one or more available media integrated together, such as a server or a data center. The available medium may be a magnetic medium (e.g., a hard disk), or a semiconductor medium (e.g., a solid state disk).

It should be understood that in various embodiments of the present application, the magnitude of the serial numbers of the above processes does not indicate an execution order. The execution order of each process should be determined by its function and internal logic, and should not constitute any limitation on the implementation process of the embodiments of the present application. Those skilled in the art will clearly understand that, for the convenience and brevity of description, the specific working processes of the systems, apparatuses and units described above may refer to the corresponding processes in the above method embodiments, which will not be repeated here. The foregoing descriptions are merely specific implementations of the present application, but the protection scope of the present application is not limited thereto. Any skilled person in the art could readily conceive of changes or replacements within the technical scope of the present application, which shall be all included in the protection scope of the present application. Therefore, the protection scope of the present application shall be subject to the protection scope of claims.

## Claims

1. An authentication method performed by a first device, comprising:
receiving, by the first device, authentication requests from a plurality of second devices;
transmitting, by the first device, a first group request message to an authentication function entity; wherein the first group request message carries authentication parameters related to the plurality of second devices, and the authentication parameters are obtained based on the authentication requests from the plurality of second devices; and
receiving, by the first device, a first group response message from the authentication function entity; wherein the first group response message carries a first group authentication code used for authenticating the authentication function entity, and the first group authentication code is calculated based on the authentication parameters.

2. The method according to claim 1, wherein the first group response message further carries a first random number, and the method further comprises:
forwarding, by the first device, the first random number to the plurality of second devices.

3. The method according to claim 2, wherein the authentication requests from the plurality of second devices each carry a second random number corresponding to a respective second device; and the authentication parameters comprise the second random number corresponding to the respective second device.

4. The method according to claim 3, wherein the first group authentication code comprises a respective first authentication code of each second device that is used for authenticating the authentication function entity.

5. The method according to claim 4, further comprising:
forwarding, by the first device, a respective first authentication code to each second device.

6. The method according to claim 5, further comprising:
receiving, by the first device from each second device, a respective second verification code used for authenticating each second device.

7. The method according to claim 6, further comprising:
transmitting, by the first device, a second group request message to the authentication function entity; wherein the second group request message carries a respective second verification code of each second device.

8. The method according to claim 6, wherein the first group response message further carries a respective second authentication code of each second device, and the method further comprises:
authenticating, by the first device, the plurality of second devices based on the respective second verification code and second authentication code of each second device; and
transmitting, by the first device, a second group request message to the authentication function entity; wherein the second group request message is used to indicate an authentication result on the plurality of second devices.

9. The method according to claim 7 or 8, wherein the second group request message further carries encrypted information of each second device, and the method further comprises:
receiving, by the first device, the encrypted information from each second device.

10. The method according to claim 2, wherein the authentication parameters comprise group input challenge information, and the method further comprises:
calculating, by the first device, the group input challenge information based on input challenge information of each second device.

11. The method according to claim 10, further comprising:
calculating, by the first device by using a third calculation method, a first group verification code based on the first random number, the group input challenge information, and a first parameter; wherein the first parameter comprises at least one of: group output response information, or a shared key of the first device; and the shared key of the first device is a shared key between the first device and the authentication function entity; and
authenticating, by the first device, the authentication function entity based on the first group authentication code and the first group verification code.

12. The method according to claim 11, further comprising:
calculating, by the first device by using a fourth calculation method, a second group verification code based on the first random number, the group input challenge information, and a second parameter; wherein the second parameter comprises at least one of: the group output response information, or the shared key of the first device; and
transmitting, by the first device, a second group request message to the authentication function entity; wherein the second group request message carries the second group verification code used for authenticating the plurality of second devices.

13. The method according to any one of claims 10 to 12, further comprising:
calculating, by the first device, a first key based on the first random number, an identifier of the first device, an identifier of the authentication function entity, and a third parameter; wherein the first key is used for communication between the first device and the authentication function entity, and the third parameter comprises at least one of: the group input challenge information, or group output response information.

14. The method according to claim 13, further comprising:
calculating, by the first device, the group output response information based on output response information of each second device; wherein the output response information of each second device is preconfigured, and for each second device, its output response information corresponds to its input challenge information.

15. The method according to claim 10, wherein the input challenge information of each second device is preconfigured, and for each second device, its input challenge information corresponds to its identifier.

16. The method according to claim 10, further comprising:
receiving, by the first device from each second device, a respective first verification code;
calculating, by the first device, a first group verification code based on the respective first verification code of each second device; and
authenticating, by the first device, the authentication function entity based on the first group authentication code and the first group verification code.

17. The method according to claim 16, further comprising:
receiving, by the first device from each second device, a respective second verification code of each second device; and
calculating, by the first device, a second group verification code used for authenticating the plurality of second devices based on the respective second verification code of each second device.

18. The method according to claim 17, wherein the first group response message further carries a second group authentication code, and the method further comprises:
authenticating, by the first device, the plurality of second devices based on the second group authentication code and the second group verification code; and
transmitting, by the first device, a second group request message to the authentication function entity; wherein the second group request message is used to indicate an authentication result on the plurality of second devices.

19. The method according to claim 17, further comprising:
transmitting, by the first device, a second group request message to the authentication function entity; wherein the second group request message carries the second group verification code used for authenticating the plurality of second devices.

20. The method according to any one of claims 16 to 19, further comprising:
calculating, by the first device, a first key based on the first random number, an identifier of the first device, an identifier of the authentication function entity, and the group input challenge information; wherein the first key is used for communication between the first device and the authentication function entity.

21. The method according to any one of claims 16 to 20, wherein the authentication request from each second device carries its own input challenge information.

22. The method according to any one of claims 12, 17, and 19, further comprising:
receiving, by the first device, a second group response message from the authentication function entity; wherein the second group response message carries a respective second key of each second device used for its communication with the authentication function entity.

23. The method according to any one of claims 1 to 22, wherein the authentication requests from the plurality of second devices further carry a respective identifier of each second device, and the authentication parameters comprise the respective identifier of each second device.

24. The method according to any one of claims 1 to 23, further comprising:
transmitting, by the first device, a trigger message to the plurality of second devices; wherein the trigger message is used for triggering each second device to transmit an authentication request.

25. The method according to any one of claims 1 to 24, wherein the first device comprises a terminal or an access network device; each of the plurality of second devices is a zero-power device; the authentication function entity is deployed in at least one of: an application function (AF), an access and mobility management function (AMF), a session management function (SMF), an authentication service function (AUSF), a unified data management function (UDM), a unified data repository (UDR), a home subscription system (HSS), an authentication credential repository and processing function (ARPF), a bootstrapping service function (BSF), a security anchor function (SEAF), or a core network-specific network element.

26. An authentication method performed by an authentication function entity, comprising:
receiving, by the authentication function entity, a first group request message from a first device; wherein the first group request message carries authentication parameters related to a plurality of second devices; and
transmitting, by the authentication function entity, a first group response message to the first device; wherein the first group response message carries a first group authentication code used for authenticating the authentication function entity, and the first group authentication code is calculated based on the authentication parameters.

27. The method according to claim 26, wherein the first group response message further carries a first random number.

28. The method according to claim 27, wherein the authentication parameters comprise a second random number corresponding to a respective second device, and the first group authentication code comprises a respective first authentication code of each second device used for authenticating the authentication function entity.

29. The method according to claim 28, further comprising:
calculating, by the authentication function entity by using a first calculation method, a respective first authentication code of each second device based on the first random number, a second random number corresponding to the second device, and a shared key of the second device; wherein a respective shared key of each second device is shared between the second device and the authentication function entity; and
obtaining, by the authentication function entity, the first group authentication code based on the respective first authentication code of each second device.

30. The method according to claim 29, further comprising:
calculating, by the authentication function entity by using a second calculation method, a respective second authentication code of each second device based on the first random number, a second random number corresponding to the second device, and a shared key of the second device.

31. The method according to claim 30, wherein the first group response message further carries a respective second authentication code of each second device, and the method further comprises:
receiving, by the authentication function entity, a second group request message from the first device; wherein the second group request message is used to indicate an authentication result on the plurality of second devices.

32. The method according to claim 30, further comprising:
receiving, by the authentication function entity, a second group request message from the first device; wherein the second group request message carries a respective second verification code of each second device used for authenticating the second device; and
authenticating, by the authentication function entity, the plurality of second devices based on the respective second verification code and second authentication code of each second device.

33. The method according to any one of claims 30 to 32, wherein the second group request message further carries encrypted information of each second device, and the method further comprise:
decrypting, by the authentication function entity, encrypted information of a target second device based on a third key of the target second device, to obtain plaintext information of the target second device; wherein the third key of the target second device is used for communication between the target second device and the authentication function entity, and the target second device is one of the plurality of second devices.

34. The method according to claim 33, further comprising:
calculating, by the authentication function entity, the third key of the target second device based on an identifier of the target second device, an identifier of the authentication function entity, an identifier of the first device, the first random number, and a shared key of the target second device.

35. The method according to claim 27, wherein the authentication parameters comprise group input challenge information.

36. The method according to claim 35, further comprising:
calculating, by the authentication function entity by using a third calculation method, the first group authentication code based on the first random number, the group input challenge information, and a first parameter; wherein the first parameter comprises at least one of: group output response information, or a shared key of the first device; and the shared key of the first device is a shared key between the first device and the authentication function entity.

37. The method according to claim 35 or 36, further comprising:
calculating, by the authentication function entity by using a fourth calculation method, a second group authentication code based on the first random number, the group input challenge information, and a second parameter; wherein the second parameter comprises at least one of: group output response information, or a shared key of the first device.

38. The method according to claim 37, wherein the authentication parameters comprise a respective identifier of each second device, and the method further comprises:
determining, by the authentication function entity, output response information of each second device based on the respective identifier of each second device; and
calculating, by the authentication function entity, the group output response information based on the output response information of each second device.

39. The method according to any one of claims 35 to 38, further comprising:
calculating, by the authentication function entity, a first key based on the first random number, an identifier of the first device, an identifier of the authentication function entity, and a third parameter; wherein the first key is used for communication between the first device and the authentication function entity, and the third parameter comprises at least one of: the group input challenge information, or group output response information.

40. The method according to claim 35, further comprising:
determining, by the authentication function entity, input challenge information and output response information of each second device based on a respective identifier of each second device;
calculating, by the authentication function entity by using a fifth calculation method, a respective first authentication code of each second device based on the first random number, the input challenge information of the second device, and the output response information of the second device; and
calculating, by the authentication function entity, the first group authentication code based on the respective first authentication code of each second device.

41. The method according to claim 40, further comprising:
calculating, by the authentication function entity by using a sixth calculation method, a respective second authentication code of each second device based on the first random number, the input challenge information of the second device, and the output response information of the second device; and
calculating, by the authentication function entity, a second group authentication code based on the respective second authentication code of each second device.

42. The method according to claim 40 or 41, further comprising:
calculating, by the authentication function entity, a first key based on the first random number, an identifier of the first device, an identifier of the authentication function entity, and the group input challenge information; wherein the first key is used for communication between the first device and the authentication function entity.

43. The method according to claim 41, wherein the first group response message further carries the second group authentication code, and the method further comprises:
receiving, by the authentication function entity, a second group request message from the first device; wherein the second group request message is used to indicate an authentication result on the plurality of second devices.

44. The method according to claim 37 or 41, further comprising:
receiving, by the authentication function entity, a second group request message from the first device; wherein the second group request message carries a second group verification code used for authenticating the plurality of second devices; and
authenticating, by the authentication function entity, the plurality of second devices based on the second group verification code and the second group authentication code.

45. The method according to claim 43 or 44, further comprising:
transmitting, by the authentication function entity, a second group response message to the first device; wherein the second group response message carries a respective second key of each second device used for its communication with the authentication function entity.

46. The method according to claim 45, further comprising:
calculating, by the authentication function entity, a second key of a target second device based on an identifier of the target second device, an identifier of the authentication function entity, an identifier of the first device, the first random number, and a sixth parameter of the target second device; wherein the sixth parameter of the target second device comprises at least one of: input challenge information of the target second device, or output response information of the target second device; and the target second device is one of the plurality of second devices.

47. The method according to any one of claims 27 to 46, wherein the first device comprises a terminal or an access network device; each of the plurality of second devices is a zero-power device; the authentication function entity is deployed in at least one of: an application function (AF), an access and mobility management function (AMF), a session management function (SMF), an authentication service function (AUSF), a unified data management function (UDM), a unified data repository (UDR), a home subscription system (HSS), an authentication credential repository and processing function (ARPF), a bootstrapping service function (BSF), a security anchor function (SEAF), or a core network-specific network element.

48. An authentication method performed by a target second device, comprising:
transmitting, by a target second device, an authentication request to a first device; wherein the target second device is one of a plurality of second devices.

49. The method according to claim 48, further comprising:
receiving, by the target second device, a first random number from the first device.

50. The method according to claim 49, wherein the authentication request from the target second device further carries a second random number corresponding to the target second device.

51. The method according to claim 50, further comprising:
receiving, by the target second device from the first device, a first authentication code used for authenticating an authentication function entity;
calculating, by the target second device by using a first calculation method, a first verification code corresponding to the target second device based on the first random number, the second random number corresponding to the target second device, and a shared key of the target second device; wherein the shared key of the target second device is shared between the target second device and the authentication function entity; and
authenticating, by the target second device, the authentication function entity based on the first authentication code corresponding to the target second device and the first verification code corresponding to the target second device.

52. The method according to claim 50 or 51, further comprising:
calculating, by the target second device by using a second calculation method, a second verification code corresponding to the target second device that is used for authenticating the target second device based on the first random number, the second random number corresponding to the target second device, and a shared key of the target second device; and
transmitting, by the target second device, the second verification code corresponding to the target second device to the first device.

53. The method according to claim 52, further comprising:
encrypting, by the target second device, plaintext information by using a third key, to obtain encrypted information; wherein the third key is used for communication between the target second device and the authentication function entity; and
transmitting, by the target second device, the encrypted information to the first device.

54. The method according to claim 53, further comprising:
calculating, by the target second device, the third key based on an identifier of the target second device, an identifier of the authentication function entity, an identifier of the first device, the first random number, and the shared key of the target second device.

55. The method according to claim 49, wherein the authentication request from the target second device further carries input challenge information of the target second device.

56. The method according to claim 55, further comprising:
calculating, by the target second device, a second key of the target second device based on an identifier of the target second device, an identifier of the authentication function entity, an identifier of the first device, the first random number, and a sixth parameter of the target second device; wherein the sixth parameter of the target second device comprises at least one of: the input challenge information of the target second device, or output response information of the target second device; wherein the output response information of the target second device has a corresponding relationship with the input challenge information.

57. The method according to claim 55 or 56, further comprising:
calculating, by the target second device by using a fifth calculation method, a first verification code corresponding to the target second device based on the first random number, the input challenge information of the target second device, and output response information of the target second device; and
transmitting, by the target second device, the first verification code corresponding to the target second device to the first device.

58. The method according to any one of claims 55 to 57, further comprising:
calculating, by the target second device by using a sixth calculation method, a second verification code corresponding to the target second device that is used for authenticating the target second device based on the first random number, the input challenge information of the target second device, and output response information of the target second device; and
transmitting, by the target second device, the second verification code corresponding to the target second device to the first device.

59. The method according to any one of claims 48 to 58, wherein the authentication request from the target second device carries an identifier of the target second device.

60. The method according to any one of claims 48 to 59, further comprising:
receiving, by the target second device, a trigger message from the first device; wherein the trigger message is used for triggering the target second device to transmit the authentication request.

61. The method according to any one of claims 48 to 60, wherein the first device comprises a terminal or an access network device, and the target second device is a zero-power device.

62. An authentication method performed by a first device, comprising:
receiving, by the first device, authentication requests from a plurality of second devices;
transmitting, by the first device, a first group request message to an authentication function entity; wherein the first group request message carries authentication parameters related to the plurality of second devices, the authentication parameters are obtained based on the authentication requests from the plurality of second devices, and the authentication parameters are used, alongside a first random number, for the authentication function entity to calculate a second group authentication code; and
receiving, by the first device, a first group response message from the authentication function entity; wherein the first group response message carries the first random number.

63. The method according to claim 62, further comprising:
forwarding, by the first device, the first random number to the plurality of second devices.

64. The method according to claim 63, wherein the authentication requests from the plurality of second devices each carry a second random number corresponding to a respective second device, and the authentication parameters comprise the second random number corresponding to the respective second device; and the method further comprises:
receiving, by the first device from each second device, a respective second verification code of each second device that is used for authenticating the second device; wherein the respective second verification code of each second device is calculated based on the first random number and a second random number corresponding to the second device.

65. The method according to claim 64, further comprising:
transmitting, by the first device, a second group request message to the authentication function entity; wherein the second group request message carries a respective second verification code of each second device.

66. The method according to claim 64, wherein the first group response message further carries the second group authentication code, and the second group authentication code comprises a respective second authentication code of each second device; and the method further comprises:
authenticating, by the first device, the plurality of second devices based on the respective second verification code and second authentication code of each second device; and
transmitting, by the first device, a second group request message to the authentication function entity; wherein the second group request message is used to indicate an authentication result on the plurality of second devices.

67. The method according to claim 63, wherein the authentication parameters further comprise group input challenge information, and the method further comprises:
calculating, by the first device, the group input challenge information based on input challenge information of each second device.

68. The method according to claim 67, further comprising:
calculating, by the first device by using a fourth calculation method, a second group verification code based on the first random number, the group input challenge information, and a second parameter; wherein the second parameter comprises at least one of: group output response information, or a shared key of the first device; and
transmitting, by the first device, a second group request message to the authentication function entity; wherein the second group request message carries the second group verification code used for authenticating the plurality of second devices.

69. The method according to claim 67, further comprising:
receiving, by the first device from each second device, a respective second verification code of each second device; and
calculating, by the first device, a second group verification code used for authenticating the plurality of second devices based on the respective second verification code of each second device.

70. The method according to claim 69, wherein the first group response message further carries a second group authentication code, and the method further comprises:
authenticating, by the first device, the plurality of second devices based on the second group authentication code and the second group verification code; and
transmitting, by the first device, a second group request message to the authentication function entity; wherein the second group request message is used to indicate an authentication result on the plurality of second devices.

71. The method according to claim 69, further comprising:
transmitting, by the first device, a second group request message to the authentication function entity; wherein the second group request message carries the second group verification code used for authenticating the plurality of second devices.

72. An authentication method performed by an authentication function entity, comprising:
receiving, by the authentication function entity, a first group request message from a first device; wherein the first group request message carries authentication parameters related to a plurality of second devices;
calculating, by the authentication function entity, a second group authentication code based on the authentication parameters and a first random number; and
transmitting, by the authentication function entity, a first group response message to the first device; wherein the first group response message carries the first random number.

73. The method according to claim 72, wherein the authentication parameters comprise a second random number corresponding to a respective one of the plurality of second devices; and calculating, by the authentication function entity, the second group authentication code based on the authentication parameters and the first random number comprises:
calculating, by the authentication function entity by using a second calculation method, a respective second authentication code of each second device based on the first random number, a second random number corresponding to the second device, and a shared key of the second device; wherein a respective shared key of each second device is shared between the second device and the authentication function entity; and
determining, by the authentication function entity, second authentication codes of the plurality of second devices as the second group authentication code.

74. The method according to claim 73, further comprising:
receiving, by the authentication function entity, a second group request message from the first device; wherein the second group request message carries a respective second verification code of each second device used for authenticating the second device; and
authenticating, by the authentication function entity, the plurality of second devices based on the respective second verification code and second authentication code of each second device.

75. The method according to claim 72, wherein the authentication parameters comprise group input challenge information.

76. The method according to claim 75, wherein calculating, by the authentication function entity, the second group authentication code based on the authentication parameters and the first random number comprises:
calculating, by the authentication function entity by using a second calculation method, the second group authentication code based on the first random number, the group input challenge information, and a second parameter; wherein the second parameter comprises at least one of: group output response information, or a shared key of the first device; and the shared key of the first device is a shared key between the first device and the authentication function entity.

77. The method according to claim 76, wherein the authentication parameters comprise a respective identifier of each second device, and the method further comprises:
determining, by the authentication function entity, output response information of each second device based on the respective identifier of each second device; and
calculating, by the authentication function entity, the group output response information based on the output response information of each second device.

78. The method according to claim 75, wherein the authentication parameters comprise a respective identifier of each second device, and calculating, by the authentication function entity, the second group authentication code based on the authentication parameters and the first random number comprises:
determining, by the authentication function entity, input challenge information and output response information of each second device based on the respective identifier of each second device;
calculating, by the authentication function entity by using a second calculation method, a respective second authentication code of each second device based on the first random number, the input challenge information of the second device, and the output response information of the second device; and
calculating, by the authentication function entity, the second group authentication code based on the respective second authentication code of each second device.

79. The method according to claim 73 or 78, wherein the first group response message further carries the second group authentication code, and the method further comprises:
receiving, by the authentication function entity, a second group request message from the first device; wherein the second group request message is used to indicate an authentication result on the plurality of second devices.

80. The method according to claim 76 or 78, further comprising:
receiving, by the authentication function entity, a second group request message from the first device; wherein the second group request message carries a second group verification code used for authenticating the plurality of second devices; and
authenticating, by the authentication function entity, the plurality of second devices based on the second group verification code and the second group authentication code.

81. A first device comprising:
a first communication unit configured to:
receive authentication requests from a plurality of second devices;
transmit a first group request message to an authentication function entity; wherein the first group request message carries authentication parameters related to the plurality of second devices, and the authentication parameters are obtained based on the authentication requests from the plurality of second devices; and
receive a first group response message from the authentication function entity; wherein the first group response message carries a first group authentication code used for authenticating the authentication function entity, and the first group authentication code is calculated based on the authentication parameters.

82. The first device according to claim 81, wherein the first group response message further carries a first random number, and the first communication unit is configured to forward the first random number to the plurality of second devices.

83. The first device according to claim 82, wherein the authentication requests from the plurality of second devices each carry a second random number corresponding to a respective second device; and the authentication parameters comprise the second random number corresponding to the respective second device.

84. The first device according to claim 83, wherein the first group authentication code comprises a respective first authentication code of each second device that is used for authenticating the authentication function entity.

85. The first device according to claim 84, wherein the first communication unit is configured to forward a respective first authentication code to each second device.

86. The first device according to claim 85, wherein the first communication unit is configured to receive, from each second device, a respective second verification code used for authenticating each second device.

87. The first device according to claim 86, wherein the first communication unit is configured to transmit a second group request message to the authentication function entity, and the second group request message carries a respective second verification code of each second device.

88. The first device according to claim 86, wherein the first group response message further carries a respective second authentication code of each second device; and the first device further comprises: a first processing unit, configured to authenticate the plurality of second devices based on the respective second verification code and second authentication code of each second device; and
the first communication unit is configured to transmit a second group request message to the authentication function entity, wherein the second group request message is used to indicate an authentication result on the plurality of second devices.

89. The first device according to claim 87 or 88, wherein the second group request message further carries encrypted information of each second device, and the first communication unit is configured to receive the encrypted information from each second device.

90. The first device according to claim 82, wherein the authentication parameters comprise group input challenge information, and the first device further comprises: a first processing unit, configured to calculate the group input challenge information based on input challenge information of each second device.

91. The first device according to claim 90, wherein the first processing unit is configured to:
calculate, by using a third calculation method, a first group verification code based on the first random number, the group input challenge information, and a first parameter; wherein the first parameter comprises at least one of: group output response information, or a shared key of the first device; and the shared key of the first device is a shared key between the first device and the authentication function entity; and
authenticate the authentication function entity based on the first group authentication code and the first group verification code.

92. The first device according to claim 91, wherein the first processing unit is configured to calculate, by using a fourth calculation method, a second group verification code based on the first random number, the group input challenge information, and a second parameter; wherein the second parameter comprises at least one of: the group output response information, or the shared key of the first device; and
the first communication unit is configured to transmit a second group request message to the authentication function entity, wherein the second group request message carries the second group verification code used for authenticating the plurality of second devices.

93. The first device according to any one of claims 90 to 92, wherein the first processing unit is configured to calculate a first key based on the first random number, an identifier of the first device, an identifier of the authentication function entity, and a third parameter; wherein the first key is used for communication between the first device and the authentication function entity, and the third parameter comprises at least one of: the group input challenge information, or group output response information.

94. The first device according to claim 93, wherein the first processing unit is configured to calculate the group output response information based on output response information of each second device; wherein the output response information of each second device is preconfigured, and for each second device, its output response information corresponds to its input challenge information.

95. The first device according to any one of claims 90 to 94, wherein the input challenge information of each second device is preconfigured, and for each second device, its input challenge information corresponds to its identifier.

96. The first device according to claim 90, wherein the first communication unit is configured to receive a respective first verification code from each second device; and
the first processing unit is configured to: calculate a first group verification code based on the respective first verification code of each second device; and authenticate the authentication function entity based on the first group authentication code and the first group verification code.

97. The first device according to claim 96, wherein the first communication unit is configured to receive a respective second verification code of each second device; and
the first processing unit is configured to calculate a second group verification code used for authenticating the plurality of second devices based on the respective second verification code of each second device.

98. The first device according to claim 97, wherein the first group response message further carries a second group authentication code, and the first processing unit is configured to authenticate the plurality of second devices based on the second group authentication code and the second group verification code; and
the first communication unit is configured to transmit a second group request message to the authentication function entity; wherein the second group request message is used to indicate an authentication result on the plurality of second devices.

99. The first device according to claim 97, wherein the first communication unit is configured to transmit a second group request message to the authentication function entity, wherein the second group request message carries the second group verification code used for authenticating the plurality of second devices.

100. The first device according to any one of claims 96 to 99, wherein the first processing unit is configured to calculate a first key based on the first random number, an identifier of the first device, an identifier of the authentication function entity, and the group input challenge information; wherein the first key is used for communication between the first device and the authentication function entity.

101. The first device according to any one of claims 96 to 100, wherein the authentication request from each second device carries its own input challenge information.

102. The first device according to any one of claims 92, 97, and 99, wherein the first communication unit is configured to receive a second group response message from the authentication function entity; wherein the second group response message carries a respective second key of each second device used for its communication with the authentication function entity.

103. The first device according to any one of claims 81 to 102, wherein the authentication requests from the plurality of second devices further carry a respective identifier of each second device, and the authentication parameters comprise the respective identifier of each second device.

104. The first device according to any one of claims 81 to 103, wherein the first communication unit is configured to transmit a trigger message to the plurality of second devices, wherein the trigger message is used for triggering each second device to transmit an authentication request.

105. The first device according to any one of claims 81 to 104, wherein the first device comprises a terminal or an access network device; each of the plurality of second devices is a zero-power device; the authentication function entity is deployed in at least one of: an application function (AF), an access and mobility management function (AMF), a session management function (SMF), an authentication service function (AUSF), a unified data management function (UDM), a unified data storage (UDR), a home subscription system (HSS), an authentication credential repository and processing function (ARPF), a bootstrapping service function (BSF), a security anchor function (SEAF), or a core network-specific network element.

106. An authentication function entity, comprising:
a second communication unit configured to:
receive a first group request message from a first device; wherein the first group request message carries authentication parameters related to a plurality of second devices; and
transmit a first group response message to the first device; wherein the first group response message carries a first group authentication code used for authenticating the authentication function entity, and the first group authentication code is calculated based on the authentication parameters.

107. The authentication function entity according to claim 106, wherein the first group response message further carries a first random number.

108. The authentication function entity according to claim 107, wherein the authentication parameters comprise a second random number corresponding to a respective second device; and the first group authentication code comprises a respective first authentication code of each second device used for authenticating the authentication function entity.

109. The authentication function entity according to claim 108, wherein the authentication function entity further comprises:
a second processing unit configured to:
calculate, by using a first calculation method, a respective first authentication code of each second device based on the first random number, a second random number corresponding to the second device, and a shared key of the second device; wherein a shared key of each second device is shared between the second device and the authentication function entity; and
obtain the first group authentication code based on the respective first authentication code of each second device.

110. The authentication functional entity according to claim 109, wherein the second processing unit is configured to calculate, by using a second calculation method, a respective second authentication code of each second device based on the first random number, a second random number corresponding to the second device, and a shared key of the second device.

111. The authentication functional entity according to claim 110, wherein the first group response message further carries a respective second authentication code of each second device; the second communication unit is configured to receive a second group request message from the first device, wherein the second group request message is used to indicate an authentication result on the plurality of second devices.

112. The authentication function entity according to claim 110, wherein the second communication unit is configured to receive a second group request message from the first device, and the second group request message carries a respective second verification code of each second device used for authenticating the second device; and
the second processing unit is configured to authenticate the plurality of second devices based on the respective second verification code and second authentication code of each second device.

113. The authentication functional entity according to any one of claims 110 to 112, wherein the second group request message further carries encrypted information of each second device, and the second processing unit is configured to decrypt encrypted information of a target second device based on a third key of the target second device, to obtain plaintext information of the target second device; wherein the third key of the target second device is used for communication between the target second device and the authentication functional entity, and the target second device is one of the plurality of second devices.

114. The authentication functional entity according to claim 113, wherein the second processing unit is configured to calculate the third key of the target second device based on an identifier of the target second device, an identifier of the authentication functional entity, an identifier of the first device, the first random number, and a shared key of the target second device.

115. The authentication function entity according to claim 107, wherein the authentication parameters comprise group input challenge information.

116. The authentication functional entity according to claim 115, wherein the authentication functional entity further comprises: a second processing unit, configured to calculate, by using a third calculation method, the first group authentication code based on the first random number, the group input challenge information, and a first parameter; wherein the first parameter comprises at least one of: group output response information, or a shared key of the first device, and the shared key of the first device is a shared key between the first device and the authentication functional entity.

117. The authentication functional entity according to claim 115 or 116, wherein the authentication functional entity further comprises: a second processing unit, configured to calculate, by using a fourth calculation method, a second group authentication code based on the first random number, the group input challenge information, and a second parameter; wherein the second parameter comprises at least one of: group output response information, or a shared key of the first device.

118. The authentication functional entity according to claim 117, wherein the authentication parameters comprise a respective identifier of each second device; and
the second processing unit is configured to:
determine output response information of each second device based on the respective identifier of each second device; and
calculate the group output response information based on the output response information of each second device.

119. The authentication functional entity according to any one of claims 115 to 118, wherein the authentication functional entity further comprises: a second processing unit, configured to calculate a first key based on the first random number, an identifier of the first device, an identifier of the authentication functional entity and a third parameter; wherein the first key is used for communication between the first device and the authentication functional entity, and the third parameter comprises at least one of: the group input challenge information, or group output response information.

120. The authentication functional entity according to claim 115, wherein the authentication functional entity further comprises:
a second processing unit configured to:
determine input challenge information and output response information of each second device based on a respective identifier of each second device;
calculate, by using a fifth calculation method, a respective first authentication code of each second device based on the first random number, the input challenge information of the second device, and the output response information of the second device; and
calculate the first group authentication code based on the respective first authentication code of each second device.

121. The authentication functional entity according to claim 120, wherein the second processing unit is configured to:
calculate, by using a sixth calculation method, a respective second authentication code of each second device based on the first random number, the input challenge information of the second device, and the output response information of the second device; and
calculate a second group authentication code based on the respective second authentication code of each second device.

122. The authentication functional entity according to claim 120 or 121, wherein the second processing unit is configured to calculate a first key based on the first random number, an identifier of the first device, an identifier of the authentication functional entity, and the group input challenge information; wherein the first key is used for communication between the first device and the authentication functional entity.

123. The authentication functional entity according to claim 121, wherein the first group response message further carries the second group authentication code; and the second communication unit is configured to receive a second group request message from the first device, wherein the second group request message is used to indicate an authentication result on the plurality of second devices.

124. The authentication function entity according to claim 117 or 121, wherein the second communication unit is configured to receive a second group request message from the first device, wherein the second group request message carries a second group verification code used for authenticating the plurality of second devices; and
the second processing unit is configured to authenticate the plurality of second devices based on the second group verification code and the second group authentication code.

125. The authentication functional entity according to claim 123 or 124, wherein the second communication unit is configured to transmit a second group response message to the first device, wherein the second group response message carries a respective second key of each second device used for its communication between the authentication functional entity.

126. The authentication functional entity according to claim 125, wherein the second processing unit is configured to calculate a second key of a target second device based on an identifier of the target second device, an identifier of the authentication functional entity, an identifier of the first device, the first random number, and a sixth parameter of the target second device; wherein the sixth parameter of the target second device comprises at least one of: input challenge information of the target second device, or output response information of the target second device; and the target second device is one of the plurality of second devices.

127. The authentication function entity according to any one of claims 107 to 126, wherein the first device comprises a terminal or an access network device; each of the plurality of second devices is a zero-power device; the authentication function entity comprises at least one of: an application function (AF), an access and mobility management function (AMF), a session management function (SMF), an authentication service function (AUSF), a unified data management function (UDM), a unified data repository (UDR), a home subscription system (HSS), an authentication credential repository and processing function (ARPF), a bootstrapping service function (BSF), a security anchor function (SEAF), or a core network-specific network element.

128. A target second device, comprising:
a third communication unit, configured to transmit an authentication request to a first device; wherein the target second device is one of a plurality of second devices.

129. The target second device according to claim 128, wherein the third communication unit is configured to receive a first random number from the first device.

130. The target second device according to claim 129, wherein the authentication request from the target second device further carries a second random number corresponding to the target second device.

131. The target second device according to claim 130, wherein the target second device further comprises:
a third processing unit configured to:
calculate, by using a first calculation method, a first verification code corresponding to the target second device based on the first random number, the second random number corresponding to the target second device, and a shared key of the target second device; wherein the shared key of the target second device is shared between the target second device and an authentication function entity; and
authenticate the authentication function entity based on a first authentication code corresponding to the target second device and the first verification code corresponding to the target second device; and
the third communication unit is configured to receive the first authentication code used for authenticating the authentication function entity from the first device.

132. The target second device according to claim 130 or 131, wherein the target second device further comprises: a third processing unit, configured to calculate, by using a second calculation method, a second verification code corresponding to the target second device that is used for authenticating the target second device based on the first random number, the second random number corresponding to the target second device, and a shared key of the target second device; and
the third communication unit is configured to transmit the second verification code corresponding to the target second device to the first device.

133. The target second device according to claim 132, wherein the third processing unit is configured to encrypt plaintext information by using a third key to obtain encrypted information; wherein the third key is used for communication between the target second device and the authentication function entity; and
the third communication unit is configured to transmit the encrypted information to the first device.

134. The target second device according to claim 133, wherein the third processing unit is configured to calculate the third key based on an identifier of the target second device, an identifier of the authentication function entity, an identifier of the first device, the first random number, and the shared key of the target second device.

135. The target second device according to claim 129, wherein the authentication request from the target second device further carries input challenge information of the target second device.

136. The target second device according to claim 135, wherein the second device further comprises: a third processing unit, configured to calculate a second key of the target second device based on an identifier of the target second device, an identifier of the authentication function entity, an identifier of the first device, the first random number, and a sixth parameter of the target second device; wherein the sixth parameter of the target second device comprises at least one of: the input challenge information of the target second device, or output response information of the target second device; wherein the output response information of the target second device has a corresponding relationship with the input challenge information.

137. The target second device according to claim 135 or 136, wherein the second device further comprises: a third processing unit, configured to calculate, by using a fifth calculation method, a first verification code corresponding to the target second device based on the first random number, the input challenge information of the target second device, and output response information of the target second device; and
the third communication unit is configured to transmit the first verification code corresponding to the target second device to the first device.

138. The target second device according to any one of claims 135 to 137, wherein the target second device further comprises: a third processing unit, configured to calculate, by using a sixth calculation method, a second verification code corresponding to the target second device that is used for authenticating the target second device based on the first random number, the input challenge information of the target second device, and output response information of the target second device; and
the third communication unit is configured to transmit the second verification code corresponding to the target second device to the first device.

139. The target second device according to any one of claims 128 to 138, wherein the authentication request from the target second device carries an identifier of the target second device.

140. The target second device according to any one of claims 128 to 139, wherein the third communication unit is configured to receive a trigger message from the first device, wherein the trigger message is used for triggering the target second device to transmit the authentication request.

141. The target second device according to any one of claims 128 to 140, wherein the first device comprises a terminal or an access network device; and the target second device is a zero-power device.

142. A first device comprising:
a first communication unit configured to:
receive authentication requests from a plurality of second devices;
transmit a first group request message to an authentication function entity; wherein the first group request message carries authentication parameters related to the plurality of second devices, the authentication parameters are obtained based on the authentication requests from the plurality of second devices, and the authentication parameters are used, alongside a first random number, for the authentication function entity to calculate a second group authentication code; and
receive a first group response message from the authentication function entity; wherein the first group response message carries the first random number.

143. The first device according to claim 142, wherein the first communication unit is configured to forward the first random number to the plurality of second devices.

144. The first device according to claim 143, wherein the authentication requests from the plurality of second devices each carry a second random number corresponding to a respective second device, and the authentication parameters comprise the second random number corresponding to the respective second device; the first communication unit is configured to receive, from each second device, a respective second verification code of each second device that is used for authenticating the second device; and the respective second verification code of each second device is calculated based on the first random number and a second random number corresponding to the second device.

145. The first device according to claim 144, wherein the first communication unit is configured to transmit a second group request message to the authentication function entity; wherein the second group request message carries a respective second verification code of each second device.

146. The first device of claim 144, wherein the first group response message further carries the second group authentication code, and the second group authentication code comprises a respective second authentication code of each second device; and the first device further comprises: a first processing unit, configured to authenticate the plurality of second devices based on the respective second verification code and second authentication code of each second device; and
the first communication unit is configured to transmit a second group request message to the authentication function entity, wherein the second group request message is used to indicate an authentication result on the plurality of second devices.

147. The first device according to claim 143, wherein the authentication parameters further comprise group input challenge information, and the first device further comprises: a first processing unit, configured to calculate the group input challenge information based on the input challenge information of each second device.

148. The first device according to claim 147, wherein the first processing unit is configured to calculate, by using a fourth calculation method, a second group verification code based on the first random number, the group input challenge information, and a second parameter; wherein the second parameter comprises at least one of: group output response information, or a shared key of the first device; and
the first communication unit is configured to transmit a second group request message to the authentication function entity, wherein the second group request message carries a second group verification code used for authenticating the plurality of second devices.

149. The first device according to claim 147, wherein the first communication unit is configured to receive a respective second verification code of each second device from each second device; and the first processing unit is configured to calculate a second group verification code used for authenticating the plurality of second devices based on the respective second verification code of each second device.

150. The first device according to claim 149, wherein the first group response message further carries a second group authentication code, and the first processing unit is configured to authenticate the plurality of second devices based on the second group authentication code and the second group verification code; and
the first communication unit is configured to transmit a second group request message to the authentication function entity, wherein the second group request message is used to indicate an authentication result on the plurality of second devices.

151. The first device according to claim 149, wherein the first communication unit is configured to transmit a second group request message to the authentication function entity, wherein the second group request message carries the second group verification code used for authenticating the plurality of second devices.

152. An authentication function entity, comprising:
a second communication unit, configured to: receive a first group request message from a first device, wherein the first group request message carries authentication parameters related to a plurality of second device; and transmit a first group response message to the first device, wherein the first group response message carries a first random number; and
a second processing unit, configured to calculate a second group authentication code based on the authentication parameters and the first random number.

153. The authentication functional entity according to claim 152, wherein the authentication parameters comprise a second random number corresponding to a respective one of the plurality of second devices; the second processing unit is configured to: calculate, by using a second calculation method, a respective second authentication code of each second device based on the first random number, a second random number corresponding to the second device, and a shared key of the second device; wherein a respective shared key of each second device is shared between the second device and the authentication functional entity; and determine second authentication codes of the plurality of second devices as the second group authentication code.

154. The authentication function entity according to claim 153, wherein the second communication unit is configured to receive a second group request message from the first device, wherein the second group request message carries a respective second verification code of each second device; and
the second processing unit is configured to authenticate the plurality of second devices based on the respective second verification code and second authentication code of each second device.

155. The authentication functional entity according to claim 152, wherein the authentication parameters comprise group input challenge information.

156. The authentication functional entity according to claim 155, wherein the second processing unit is configured to calculate, by using a second calculation method, the second group authentication code based on the first random number, the group input challenge information, and a second parameter; wherein the second parameter comprises at least one of: group output response information, or a shared key of the first device, and the shared key of the first device is a shared key between the first device and the authentication functional entity.

157. The authentication functional entity according to claim 156, wherein the authentication parameters comprise a respective identifier of each second device, and the second processing unit is configured to: determine output response information of each second device based on the respective identifier of each second device; and calculate the group output response information based on the output response information of each second device.

158. The authentication functional entity according to claim 155, wherein the authentication parameters comprise a respective identifier of each second device, and the second processing unit is configured to: determine input challenge information and output response information of each second device based on the respective identifier of each second device; calculate, by using a second calculation method, a respective second authentication code of each second device based on the first random number, the input challenge information of the second device, and the output response information of the second device; and calculate the second group authentication code based on the respective second authentication code of each second device.

159. The authentication functional entity according to claim 153 or 158, wherein the first group response message further carries the second group authentication code, and the second communication unit is configured to receive a second group request message from the first device; wherein the second group request message is used to indicate an authentication result on the plurality of second devices.

160. The authentication functional entity according to claim 156 or 158, wherein the second communication unit is configured to receive a second group request message from the first device, wherein the second group request message carries a second group verification code used for authenticating the plurality of second devices; and the second processing unit is configured to authenticate the plurality of second devices based on the second group verification code and the second group authentication code.

161. A first device, comprising: a transceiver, a processor and a memory, wherein the memory is configured to store a computer program, and the processor is configured to call the computer program stored in the memory and run the computer program, to cause the first device to perform the method according to any one of claims 1 to 25, or the method according to any one of claims 62 to 71.

162. An authentication function entity, comprising: a transceiver, a processor and a memory, wherein the memory is configured to store a computer program, and the processor is configured to call a computer program stored in the memory and run the computer program, to cause the authentication function entity to perform the method according to any one of claims 26 to 47, or the method according to any one of claims 72 to 80.

163. A target second device, comprising: a transceiver, a processor and a memory, wherein the memory is configured to store a computer program, and the processor is configured to call a computer program stored in the memory and run the computer program, to cause the target second device to perform the method according to any one of claims 48 to 61.

164. A chip comprising: a processor, configured to call a computer program from a memory and run the computer program, to cause a device equipped with the chip to perform the method according to any one of claims 1 to 25, or the method according to any one of claims 26 to 47, or the method according to any one of claims 48 to 61, or the method according to any one of claims 62 to 71, or the method according to any one of claims 72 to 80.

165. A computer-readable storage medium, configured to store a computer program which, when executed by a device, causes the device to perform the method according to any one of claims 1 to 25, or the method according to any one of claims 26 to 47, or the method according to any one of claims 48 to 61, or the method according to any one of claims 62 to 71, or the method according to any one of claims 72 to 80.

166. A computer program product, comprising computer program instructions configured to cause a computer to perform the method according to any one of claims 1 to 25, or the method according to any one of claims 26 to 47, or the method according to any one of claims 48 to 61, or the method according to any one of claims 62 to 71, or the method according to any one of claims 72 to 80.

167. A computer program, wherein the computer program causes a computer to perform the method according to any one of claims 1 to 25, or the method according to any one of claims 26 to 47, or the method according to any one of claims 48 to 61, or the method according to any one of claims 62 to 71, or the method according to any one of claims 72 to 80.
